(19) **Europäisches Patentamt / European Patent Office / Office européen des brevets**

(11) **EP 1 349 866 B1**

(12) **EUROPEAN PATENT SPECIFICATION**

(45) Date of publication and mention of the grant of the patent:
**04.04.2007 Bulletin 2007/14**

(21) Application number: **01941486.1**

(22) Date of filing: **16.05.2001**

(51) Int Cl.:
**C07K 1/00** (2006.01)

(86) International application number:
**PCT/US2001/015846**

(87) International publication number:
**WO 2001/087924 (22.11.2001 Gazette 2001/47)**

(54) **INSULIN PURIFICATION USING SIMULATED MOVING BED TECHNOLOGY**

INSULINREINIGUNG UNTER VERWENDUNG DER SIMULIERTEN WANDERBETT-TECHNOLOGIE

PURIFICATION DE L'INSULINE SELON UNE TECHNOLOGIE A LIT MOBILE SIMULE

(84) Designated Contracting States:
**AT BE CH CY DE DK ES FI FR GB GR IE IT LI LU MC NL PT SE TR**

(30) Priority: **16.05.2000 US 204701 P**

(43) Date of publication of application:
**08.10.2003 Bulletin 2003/41**

(73) Proprietor: **Purdue Research Foundation**
**West Lafayette, IN 47906 (US)**

(72) Inventors:
• **WANG, Nien-Hwa, Linda**
  **West Lafayette, IN 47906 (US)**
• **XIE, Yi**
  **West Lafayette, IN 47906 (US)**
• **MUN, Sungyong**
  **West Lafayette, IN 47906 (US)**
• **KIM, Jin-Hyun**
  **KongJu Nat'1 University**
  **KonJu-city**
  **ChungNam (KR)**
• **HRITZKO, Benjamin J.**
  **Groton,**
  **Connecticut 06340 (US)**

(74) Representative: **Eisenführ, Speiser & Partner**
**Patentanwälte Rechtsanwälte,**
**Postfach 31 02 60**
**80102 München (DE)**

(56) References cited:
• XIE Y ET AL: "EXTENDED STANDING WAVE DESIGN METHOD FOR SIMULATED MOVING BED CHROMATOGRAPHY: LINEAR SYSTEMS" INDUSTRIAL & ENGINEERING CHEMISTRY RESEARCH, AMERICAN CHEMICAL SOCIETY. WASHINGTON, US, vol. 39, no. 6, 2000, pages 1993-2005, XP001149345 ISSN: 0888-5885
• JENSEN T B ET AL: "Novel simulated moving-bed method for reduced solvent consumption" JOURNAL OF CHROMATOGRAPHY, ELSEVIER SCIENCE PUBLISHERS B.V. AMSTERDAM, NL, vol. 873, no. 2, March 2000 (2000-03), pages 149-162, XP004202666 ISSN: 0021-9673
• MALLMANN T ET AL: "STANDING WAVE DESIGN OF NONLINEAR SMB SYSTEMS FOR FRUCTOSE PURIFICATION" AICHE JOURNAL, NEW YORK, NY, US, vol. 44, no. 12, December 1998 (1998-12), pages 2628-2646, XP008015254 ISSN: 0001-1541

**Description**

**REFERENCE TO PRIOR APPLICATIONS**

This application claims priority to United States Provisional Patent Application Number 60/204,701, filed May 16, 2000.

**FIELD OF THE INVENTION**

This invention relates to the purification of insulin from binary and multicomponent mixtures using simulated moving bed technology. The invention is applicable generally to systems exhibiting linear isotherms, and is especially applicable to such systems when separations are inhibited by mass transfer resistances.

**BACKGROUND OF THE INVENTION**

**Principles of Simulated Moving Bed Chromatography**

Liquid chromatography is widely used in industry for separating and purifying components in liquid and gaseous mixtures. However, most applications of liquid chromatography are batch chromatographic processes, which give low yields, consume high quantities of eluent, utilize adsorbent inefficiently, and are labor intensive. Moreover, the discontinuous nature of batch chromatography, and the dilution of collected components, limits its attractiveness for pilot-plant and process-scale separations.

To improve the efficiency of chromatographic processes, continuous moving beds ("CMBs") consisting of a column that supports counter-current contact of mobile and solid (adsorbent) phases have been proposed (Berg, 1946; Kehde et al., 1948; Ruthven and Ching, 1989). The solid phase, which moves in a downward direction driven by gravity, exits the column at the bottom and is recycled to the top. The mobile phase enters the column at the bottom, is pumped upward, and exits at the top from which point it is recycled to the bottom of the column. This system has two liquid inlets (a feed inlet and a desorbent inlet) and two liquid outlets (a raffinate outlet and an extract outlet).

The feed (containing 2 or more components to be separated) is injected continuously into the middle of the column. As long as the affinity of the components for the solid packing is different, one can choose mobile phase and adsorbent flow rates for the column that will cause one component to move in an upward direction and another component to move downward leading to a spatial separation. This system has two outlet lines: one located beneath the feed where the slower moving component is continuously removed (the *extract),* and one located above the feed where the faster moving component is removed (the *raffinate).* Desorbent is added to the system at the bottom to help push the slower component back up into the column (and to make up for desorbent withdrawn through the extract and raffinate streams).

Continuous moving bed systems offer a number of potential advantages over batch chromatography, including:

- The systems can produce products of purity similar to or higher than batch chromatography, at yields substantially greater than batch chromatography.
- The systems use less desorbent than batch chromatography.
- The systems use the solid phase much more efficiently than batch chromatography.
- The systems require much less column volume (often by an order of magnitude) than batch chromatogram systems, for the same throughput

These advantages have not been realized in true CMBs, however, because of difficulties inherent to operating and maintaining a CMB unit. The continuous physical movement of solids leads to particle attrition, and considerable difficulty can be experienced maintaining strict plug flow of both solid and mobile phases. These problems greatly reduce process efficiency and useful life of the adsorbent, and impose severe limitations on the mechanical properties of the adsorbent particles.

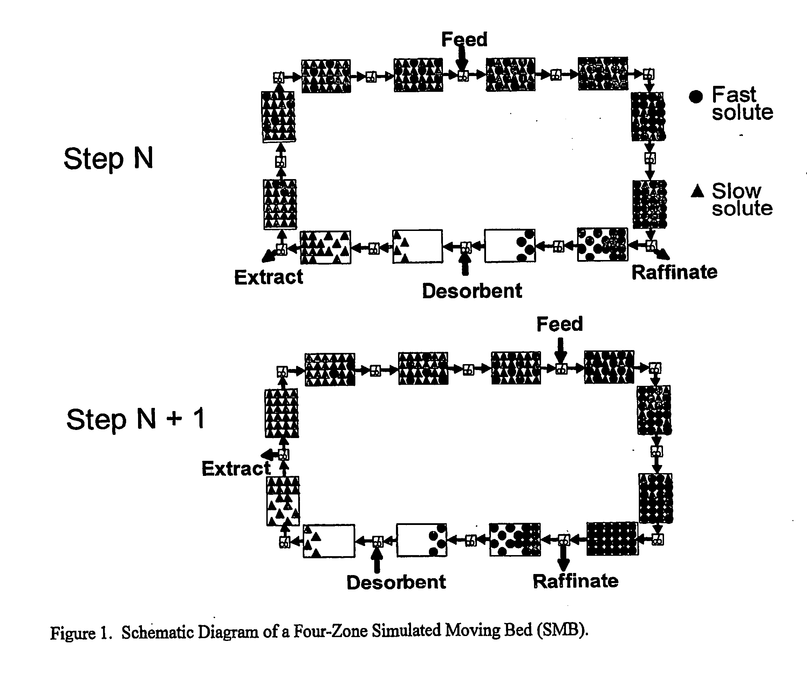

To overcome the problems associated with solid flow in true CMBs, simulated moving beds have been developed. Simulated moving beds are reviewed generally in Ruthven and Ching (1989). Simulated moving bed (SMB) processes realize the counter-current movement of solid and liquid phases and the concomitant advantages of continuous moving beds over batch chromatography without the physical movement of solids. A typical SMB process has four zones with two inlet ports (feed and desorbent) and two outlet ports (raffinate and extract), as shown in Figure 1. SMB processes utilize a series of adsorbent columns connected to form a circuit Each zone typically contains two or more evenly sized columns, and these columns are connected to form a continuous circuit. The solid movement is simulated by periodically moving the inlet and outlet ports one column forward in the direction of flow of the mobile phase, so that the product ports are always near the partially separated concentration waves of products in the system. Similar to the continuous moving bed system, the port switching time, zone length, and zone flow rates are all balanced to attain a desired level of purity of the raffinate or the extract.

The function of each zone in an SMB is as follows: (1) Zone I: This zone is located between the desorbent inlet and extract withdrawal and is used for desorbing the slow fraction. A portion of the stream leaving this zone is withdrawn as the extract while the remainder flows into zone II. (2) Zone II: This zone is used for desorbing the fast fraction. (3) Zone III: This zone is used for adsorbing the slow fraction, and separating the slow fraction from the fast fraction. The fast fraction is partially withdrawn at the raffinate port. (4) Zone IV: This zone is used for adsorbing the fast fraction as well as desorbent recovery. The stream leaving this zone should ideally contain only pure desorbent which is recirculated to the desorbent inlet for reuse.

**Reported Applications of Simulated Moving Bed Chromatography**

SMB separations were first applied in an industrial plant by Universal Oil Products (UOP) for the purification of hydrocarbons (Broughton and Gerhold, 1961; Broughton, 1968; Broughton et al., 1970). UOP's process eventually evolved into what it now calls its Sorbex process. The principal application for UOP's Sorbex process is in the purification of xylene isomers. Indeed, Parkinson et al. (1994) reports that by 1994, UOP had installed 85 SMB units for use of its Sorbex process, and that most of these had been installed at petroleum refineries for p-xylene purification.

UOP's Sorbex process for the purification of p-xylenes has several unique features. First, it separates p-xylene from a mixture of xylene isomers and other phenyl derivatives from the xylene manufacturing process. The process uses a zeolitic solid adsorbent that selectively adsorbs p-xylene. The process also relies upon a displacing component which competes for adsorbent with p-xylene and the other components in a concentration dependent fashion, to prevent cross-contamination of the raffinate and extract.

Parkinson et al., (1994) also reports widespread use of SMB processes for the separation of sugars. For example, Parkinson *et al.* reports that from 1980 to 1994, U.S. Filter had installed approximately 60 SMB units for the separation of sugars. In 1994, U.S. Filter had piloted SMB systems for the separation of lactic and citric acids, glycerine, glycols, amino acids, and herbicides. In 1994, UOP reportedly installed HPLC SMB in pharmaceutical plants.

In the same year, Soken (Japan) reportedly finished a one-year pilot test of a continuous HPLC system that can purify three-component mixtures and has six columns. Other applications for SMBs have been reported in the literature (Ching et al., 1993; Pais et al., 1997; Ruthven and Ching, 1989). More recently this technique has been developed for the separation of chiral compounds and the purification of biochemical and pharmaceutical-products (Nicoud et al., 1993; Pais et al., 1997; Pedeferri, et al., 1999; Lehoucq et al., 2000). The following discussion summarizes some of the literature references disclosing SMB separations.

Sugars: Several processes have been developed for separating and purifying sugars. For example, using a calcium form cation exchange resin, Balannec et al. (1993) and Barker et al. (1960) report using SMB processes to separate fructose from sucrose, and xylose from arabinose. Balannec et al. (1993) also discloses an SMB process in which dextran is fractionated using a size exclusion process on silica gel.

Desalting: Several SMB processes have also been reported for removing salts from mixtures. For example, Maki (1987) discloses an ion retardation process for separating glucose and sodium chloride; Nicoud (1998) discloses an ion exclusion process, using a sodium form cation-exchange resin, for the separation of glycerol and sodium chloride; and Hashimoto et al. (1988) discloses a size exclusion process for separating proteins from ammonium sulfate.

Protein purification: At least four SMB processes have been developed for the purification of proteins. For example, Huang et al. (1986) discloses the separation of trypsin from a porcine pancreas extract using affinity chromatography; Houwing (1996) reports the fractionation of human serum albumin using a two column system; Nicoud (1996) reports the separation of myoglobin from lysozyme using an adsorption process; and Schulte et al. (2000) reports reversed phase and silica gel adsorption processes for separating cyclosporine A, cyclic oligopeptides, and various impurities.

Ionic Molecules: At least two references disclose the use of SMB processes for separating ionic molecules. For example, Van Walsem et al. (1996) discloses the separation of betaine from molasses using two ion exchange columns; and Maki (1992) reports the separation of L-glutathione from glutamic acid using a cation-exchange resin.

Organic solvents: SMB processes have also been reported for the separation of organic solvents. For example, Szpepy et al. (1975) reports the SMB separation of various $C_{16}$-$C_{22}$ methyl esters of fatty acids using an undisclosed stationary phase; and Blehaut et al. (1996) discloses the separation of stereoisomers of phytol using silica gel.

Optical isomers: SMB process have found special interest of late in the separation of optical isomers. Fuchs et al. (1992), for example, discloses the separation of threonine isomers using a ligand exchange resin; Balannec et al. (1993) discloses the resolution of racemic 1a-2,7,7a-tetrahydro-3-methoxynaphthyl-(2,3-b) oxirane using microcrystalline cellulose triacetate; and Archibald et al. (1999) reports the separation of epoxide diastereomers using reversed phase, normal phase, or chiral stationary phase SMB chromatography.

Despite these reports, SMB technology still has not made it into the mainstream of industrial separations.

Indeed, in an article written as recently as 1995, Hill (1995) stated, "The technique of simulated moving bed chromatography has been around for a considerable time in industry, although for commercial reasons much of the work remains unpublished. Due to problems associated with engineering this technique, its use has been restricted to simple separations where the quality requirements of the product are fairly low."

**Overview of Design Strategies**

The successful design and operation of a SMB depends upon the correct selection of operating conditions (zone flow rates and switching time), which cause the slow and fast moving components to travel in opposite directions relative to the feed port. In a linear isotherm system, the primary operating conditions are the zone flow rates and port switching time in zones II and III, because these are the two zones where separation initially occurs, and where the zone flow rates and port switching times must be suitably balanced. The port switching time and the flow rates in zones I and IV are also important in order to prevent migration of fast and slow moving components between zones I and IV. However, one can generally compensate for such risk (at the expense of process economics) by increasing the input of desorbent to the system and the rate of raffinate withdrawn from the system.

Several procedures have been proposed in the literature to guide the initial selection of zone flow rates and port switching time. Some of these, based on the approximation of the unit as a series of equilibrium stages and then on the application of a McCabe-Thiele-like analysis, have been reviewed by Ruthven (1984) and more recently by Hashimoto et al. (1993). An alternative approach is based on the local equilibrium theory, which can be used for linear and nonlinear adsorption isotherms. (Helfferich and Klein, 1970; Rhee et al., 1971; Storti et al., 1989). The local equilibrium theory is generally applicable for ideal systems, i.e., those systems in which mass transfer effects are negligible. See also, Ruthven and Ching (1989); Adachi (1994); Storti et al. (1993); Pais et al. (1997); and Strube et al. (1997).

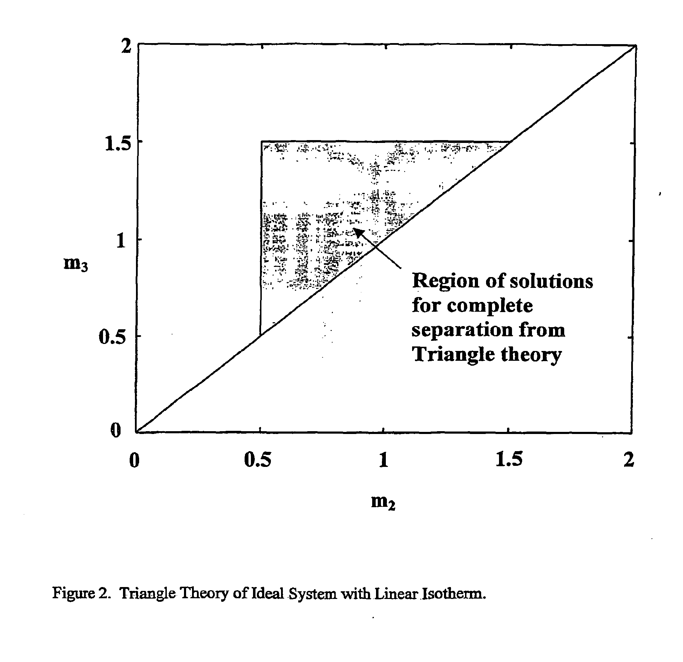

Figure 2 illustrates the triangle theory (Storti et al., 1989) based on the local equilibrium theory, and how it is employed to arrive at zone flow rates and port switching time in zones II and III. By performing an equilibrium analysis (which assumes no mass transfer effects) one is able to plot a two dimensional triangular region on a graph with dimensionless velocities in zones II and III along the x and y axes respectively. The dimensionless velocities represent net zone flow velocities divided by port movement velocity. The triangular region defines the complete set of operating conditions that will guarantee complete separation (100% purity and yield) of the fast and slow moving components in zones II and III.

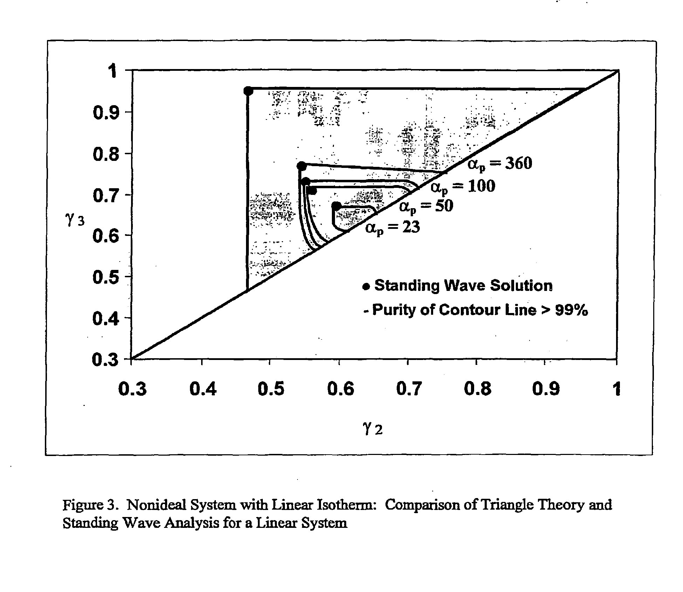

The triangle method is useful' but it is limited to ideal conditions (i.e. without mass transfer resistances). Therefore, the design does not give any information concerning zone length, mass transfer resistances, or desired product purity and yield. To determine the effects of mass transfer, on zone length and product purity and yield, one must perform a series of computer simulations in which mass transfer resistances and product purity and yield are defined. The results of these simulations can be plotted to define a smaller triangular region, which defines the entire region of relative velocities of mobile phase and port movement in zones II and III which guarantee separation at the defined purity and yield. This is illustrated in Figure 3, wherein each of the smaller triangular regions corresponds to a different set of mass transfer resistances.

Once again, the minimum desorbent consumption for nonideal systems can only be approximated from the triangle theory through a lengthy series of trial and error computer simulations of operating conditions within the triangular region, to determine the desorbent consumption associated with each combination of flow rates in zones II and III, and hopefully to converge eventually on an approximate minimum desorbent consumption. Azevedo and Rodriguez (1999) proved using computer simulations that the standing wave analysis solution (Ma and Wang, 1997) corresponds to the vertex point of the triangular region. The vertex point gives the highest throughput and the lowest desorbent consumption (see Figure 3).

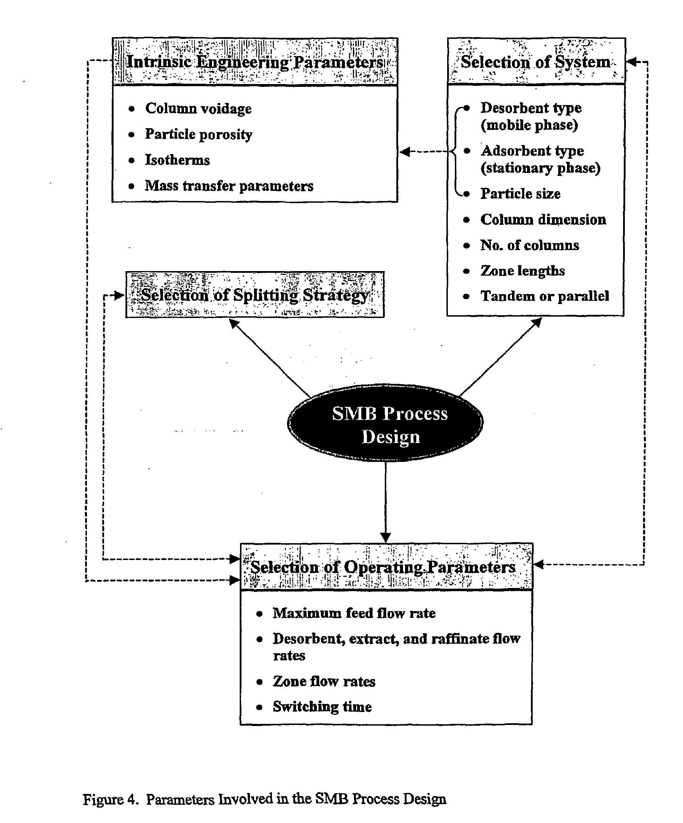

The aforementioned method is used to estimate the operating conditions for a given SMB system. To have an overview of SMB process design, Figure 4 is drawn to show the parameters that can be varied to explore system efficiencies and the parameters that should be estimated in the design.

In addition to the simulations needed to accommodate mass transfer effects, and the simulations needed to arrive at a minimum desorbent consumption, computer simulations must also be performed each time one of the foregoing parameters (Figure 4) is varied to optimize the efficiency of the system. A designer attempting to scan SMB designs to determine which is most economical, exploring just four values for each of the foregoing parameters, would need to perform $4^{10}$ (1,048,576) computer simulations (each of which can run for several minutes to hours). As a consequence, designers always make a series of initial assumptions about the SMB that significantly limit the universe of SMB designs that can be explored.

One of the most important variables is the combination of mobile phase and stationary phase. The mobile phase can significantly affect process performance and cost because (1) the mobile phase governs the solubility of solutes in the system, and the maximum throughput on a solid concentration basis, (2) the mobile phase may affect selectivity and effective adsorbent capacity, (3) some mobile phase must continuously be replenished, and (4) some of the mobile phase must be separated from the final product, and separation costs can vary from solvent to solvent. The solid phase, and the size of particles in the solid phase, can similarly have substantial effects upon process performance and cost because (1) the solid phase dictates the absorbent capacity of the system, the selectivity, and the attendant maximum throughput, and (2) the size and type of solid phase dictates the allowable pressure drop and maximum mobile phase velocity.

Another parameter which can significantly influence the efficiency of a particular system, but which is rarely explored through computer simulations, is the total column length (= number of total columns $\times$ column length) and zone lengths (= number of columns in each zone $\times$ column length) of the SMB. The designer typically assumes: (1) a fixed number of columns, and (2) an allocation of columns among the zones, when initiating the trial and error computer simulation process to determine zone flow rates. However, the allocation of columns can significantly affect the efficiency of the system, and can even determine whether a desired separation is possible.

Yet another parameter that can significantly affect the efficiency of a particular system, which is unique to multicomponent separations in which a component having an intermediate affinity is desired, is splitting strategy. Such separations typically require tandem or parallel SMBs in which the intermediate affinity fraction is successively separated from the fast and slow moving fractions. When splitting multicomponent mixtures several sequences of splitting can be observed. In a two ring split, for example, one must decide whether to split the intermediate fraction from the fast or slow moving fraction in the first ring. Another option (not mentioned in the prior art) is whether to allow the component that is not being split in the first ring to distribute in the first ring, and thereby contaminate both extract and raffinate streams. Once again, prior art methods would require inordinate numbers of computer simulations or experiments to be performed to evaluate the efficiency of each of these options.

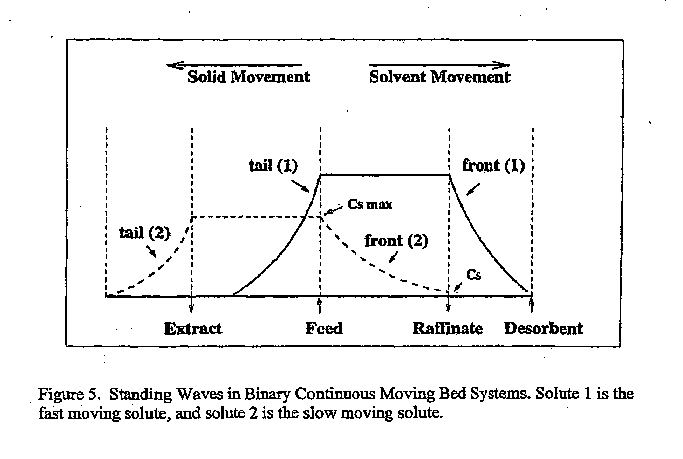

In a recent study by Ma and Wang (1997), a standing wave analysis method for binary separation is developed for continuous moving bed (CMB) and SMB systems with linear isotherms. The analysis is based on the idea that a key concentration wave in each zone can migrate at the same speed as the port movement velocity (or be kept standing with respect to the ports) in order to ensure product purities (Figure 5). By properly selecting the four zone flow rates and solid movement velocity in a SMB, the adsorption wave of the fast fraction can be kept standing in zone IV and its desorption wave can be kept standing in zone II, while the adsorption wave of the slow fraction is kept standing in zone III and its desorption wave is kept standing in zone I (Figure 5). Under the standing wave conditions, Ma and Wang (1997) proposed a set of algebraic equations for binary systems that exhibit linear isotherms and significant mass transfer resistances, to link product purity and yield to zone lengths, zone flow rates, port switching time, and retention and mass-transfer parameters.

The standing wave analysis proposed by Ma and Wang (1997) represented a significant advance in the design of binary SMBs, because it eliminated the need to perform numerous computer simulations or experimental trials when designing SMBs. Computer simulations could still be performed, but typically only to validate the results of the standing wave analysis. However, the standing wave analysis described by Ma and Wang (1997) was limited to binary SMBs, and thus did not show how to design and operate an SMB for multicomponent separations. Ma and Wang (1997) also did not show how to overcome a number of other issues associated with the design of SMBs, especially SMBs for multicomponent separations, including column allocation issues, splitting strategies, and how to account for fronting and extra-column dead volume effects.

**Insulin**

Insulin, a polypeptide hormone, is essential for the supply of energy to the cells of all vertebrates. Lack of insulin causes the disease diabetes, the third largest cause of death by disease in industrialized countries after cardiovascular diseases and cancer (Barfoed, 1987). The first successful diabetic treatment with insulin was conducted by Frederick Banting and Charles Best in 1922. From 1922 to 1972, the only sources of insulin for diabetic treatment were the pancreas glands of animals, such as cows and pigs. In the 1970s, however, it became clear that the demand for insulin would soon exceed the supply available from animal sources, and recombinant DNA techniques were developed. Most insulin products currently are produced using organisms tranformed with recombinant DNA. One such product is referred to as biosynthetic human insulin ("BHI").

Purification of BHI from its fermentation broth involves several chromatography processes (Kroeff et al., 1989; Ladisch and Kohlmann, 1992), including size-exclusion chromatography (SEC), in which $ZnCl_2$ and high molecular weight proteins (HMWP) including pro-insulin (HPI) are removed. The SEC is a batch process, which consists of pre-equilibration, loading, and elution steps. A method for improving the yield of insulin from the process, and increasing the throughput for the system would be highly desirable.

The document JENSEN T B ET AL: "Novel simulated moving-bed method for reduced solvent consumption" JOURNAL OF CHROMATOGRAPHY, ELSEVIER SCIENCE PUBLISHERS B.V. AMSTERDAM, NL, vol. 873, no. 2, March 2000 (2000-03), pages 149-162, teaches the purification of insulin with the triangle-method.

**Objects of the Invention**

It is an object of the present invention to improve the yields of chromatographic processes of purifying insulin from HMWP and zinc chloride

It is another object of the invention to provide methods of purifying insulin using SMB chromatography, from binary and multicomponent mixtures.

It is another object of the invention to decrease solvent consumption and increase adsorbent utilization in SMB chromatographic purifications of insulin.

Yet another object is to provide SMBs for insulin purification wherein significant mass transfer resistances are observed.

Still another object is to provide SMBs for insulin purification while operating under linear isotherms, optionally using size exclusion chromatography.

Still another object is to provide column configurations for the SMB purification of insulin that maximize economic efficiency.

Another object of the present invention is to provide SMBs for separating multicomponent mixtures of insulin in two or more rings using splitting rules that optimize economic efficiency.

It is another object of the present invention to provide methods of designing systems for purifying insulin using SMB chromatography, using the standing wave design to minimize desorbent consumption, and to allow screening of alternative SNB systems for optimum economic efficiency.

**SUMMARY OF INVENTION**

The inventors have surprisingly discovered (1) a novel process for purifying insulin using SMB chromatography, and (2) the design parameters for purifying insulin from binary and multicomponent mixtures using SMB chromatography. The design parameters represent a novel extension of the standing wave design proposed by Ma and Wang (1997), and allow insulin to be purified using SMB chromatography over a broad range of operating conditions, column configurations, and combinations of desorbent and adsorbent, when linear adsorption isotherms are observed. Significantly, the design parameters allow such systems to be designed despite the presence of significant mass transfer resistances. Moreover, the parameters always lead to a SMB system that minimizes desorbent use for a given rate of feed.

Thus, in one embodiment the invention provides a method for chromatographically separating insulin from one or more components comprising:

    a) providing a simulated moving bed that comprises a first ring, a stationary phase, and a first desorbent stream;
    b) providing a feed stream that comprises insulin and a first component or fraction;
    c) introducing the first desorbent stream and the feed stream to the first ring under standing wave conditions sufficient to separate the insulin from the first component or fraction; and
    d) withdrawing the insulin from the first ring substantially separated from the first component or fraction.

In cases wherein the feed stream further comprises a second component or fraction, and the affinity of the insulin for the stationary phase is intermediate the affinities of the first and second components and/or fractions for the stationary phase, the method further comprises:

    a) introducing the insulin from the first ring and a second desorbent stream to a second ring, under conditions to separate the insulin from the second component or fraction; and
    b) withdrawing the insulin from the second ring substantially separated from the second component or fraction.

In another aspect the invention provides methods for designing, constructing, and operating SMBs for chromatographically purifying insulin, especially for systems with linear adsorption isotherms. Thus in another aspect the invention provides a method of designing an SMB for the purification of insulin from a binary or multicomponent mixture comprising:

    a) providing equations that relate the design, operating, and intrinsic engineering parameters of a SMB that displays linear isotherms, wherein the equations assume standing wave conditions for each of the zones;
    b) prescribing a first set of design and operating parameters sufficient to determine the intrinsic engineering parameters and to solve the equations for separating the multicomponent mixture in a first SMB; and
    c) solving the equations.

In a preferred embodiment, the SMB comprises a first ring A that comprises four zones, and the equations assume the following standing wave conditions in each zone:

i) in zone I: the desorption wave of component $N$;
ii) in zone II: the desorption wave of component $j$;
iii) in zone III: the adsorption wave of component $j+1$; and
iv) in zone IV: the adsorption wave of component 1; wherein the components are numbered 1 ... $j$, $j+1$, ... $N$ in order of increasing affinity for the stationary phase, and a split is desired between components $j$ and $j+1$.

Another important feature of the present invention is the ability to optimize SMB system performance when purifying insulin, using simplified equations that allow multiple design and operating parameters (such as various column configurations) to be rapidly screened. The invention thus eliminates the need to conduct detailed trial and error computer simulations for each SMB parameter. Thus, in yet another embodiment the invention provides a method of optimizing a SMB system for purifying insulin, wherein the system displays linear isotherms, comprising:

a) providing equations that relate the design, operating, and intrinsic engineering parameters understanding wave conditions of a SMB that displays linear isotherms;
b) prescribing a first set of design and operating parameters sufficient to determine the intrinsic engineering parameters and to resolve the equations for separating a binary or multicomponent mixture in a first SMB;
c) prescribing a second set of design and operating parameters sufficient to determine the intrinsic engineering parameters and to resolve the equations for separating the binary or multicomponent mixture in the second SMB; and
d) evaluating and comparing the economic efficiency of the first and second SMBs.

The standing wave design of the present invention can be readily applied to convert an industrial or laboratory batch chromatography process to a simulated moving bed process in order to increase the yield, purity, and throughput of the system. Stationary phase utilization (i.e. throughput) and desorbent consumption can be substantially improved over such processes by appropriate designs of zone lengths, flow rates, and port switching time. A SMB system designed for the size exclusion purification of insulin, using a Sephadex gel and consisting of two SMBs in series, achieved 99.9% purity, 99.0% yield, and 1.19 L/hr100L BV throughput.

## BRIEF DESCRIPTION OF THE DRAWINGS

Figure 1 is a schematic drawing of a four ring simulated moving bed, showing the introduction points of the feed and desorbent lines, the withdrawal points for extract and raffinate, and the direction of mobile phase and port movement.
Figure 2 is a hypothetical graph illustrating the triangular region of SMB operating conditions that assures complete separation of two components in an ideal system, where the normalized mobile phase velocity in zone II is plotted against the x-axis, and the normalized mobile phase velocity in zone III is plotted against the y-axis.
Figure 3 is a graph showing the triangular region of SMB operating conditions in zones II and III for an ideal system. Several smaller triangular regions are interposed of operating conditions derived from computer simulations of the SMB assuming various mass transfer resistances, wherein the end-purity of the components is held constant at 99%. The graph is taken from Azevedo and Rodriguez (1999). The vertex point of each triangle represents the conditions under which desorbent consumption is minimized, as determined by the standing wave analysis of Ma and Wang (1997).
Figure 4 is a list of parameters involved in the design of an SMB process. The relations among these parameters are also shown in the figure.
Figure 5 is a concentration profile of the standing concentration waves in a continuous moving bed for separating two components in a non-ideal system. Solute 1 is the fast moving solute; solute 2 is the slow moving solute.

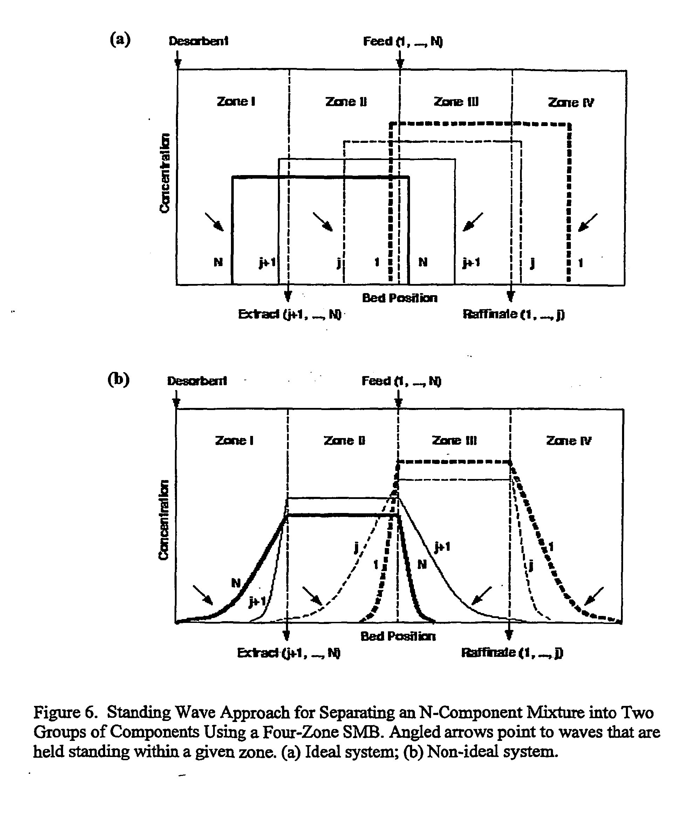

Figures 6a and 6b are concentration profiles of the standing concentration waves in an SMB for separating N components without mass transfer resistances (a), and with mass transfer resistances (b), wherein solute 1 is the fastest moving solute, solute N is the slowest moving solute, and a split is desired between components $j$ and $j+1$.

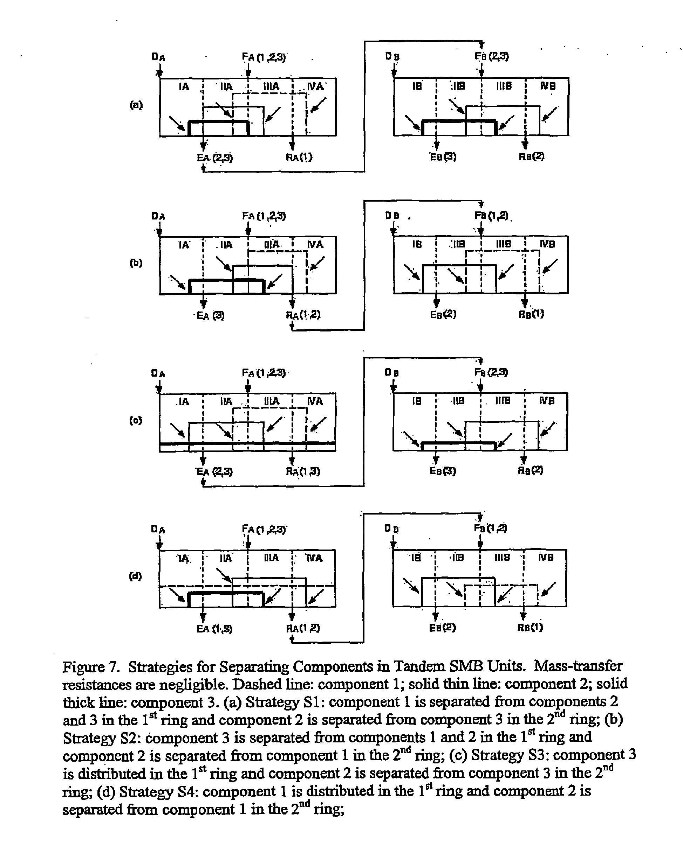

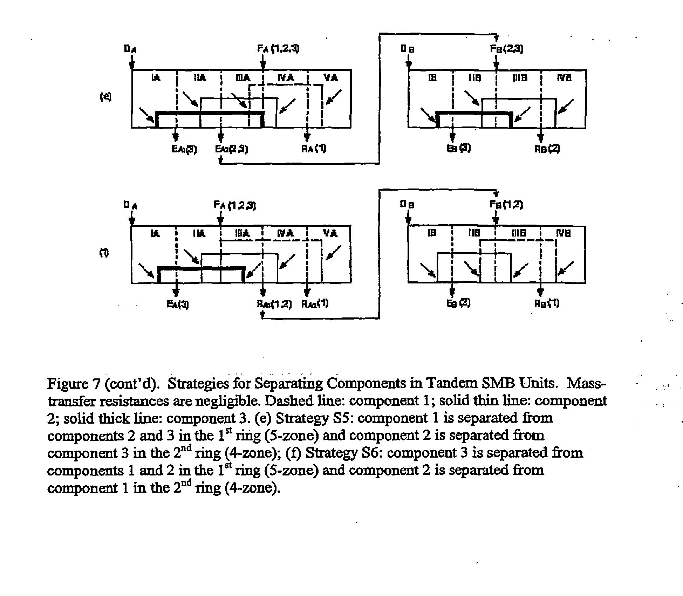

Figure 7 is a concentration profile showing four strategies for separating components numbered 1, 2, and 3 in the ring of an SMB, in a mixture where $a_1 < a_2 < a_3$ (i.e. the affinity of $a_1$ for the stationary phase is less than the affinity of $a_2$ for the stationary phase, and so forth), and mass-transfer resistances are neglected.

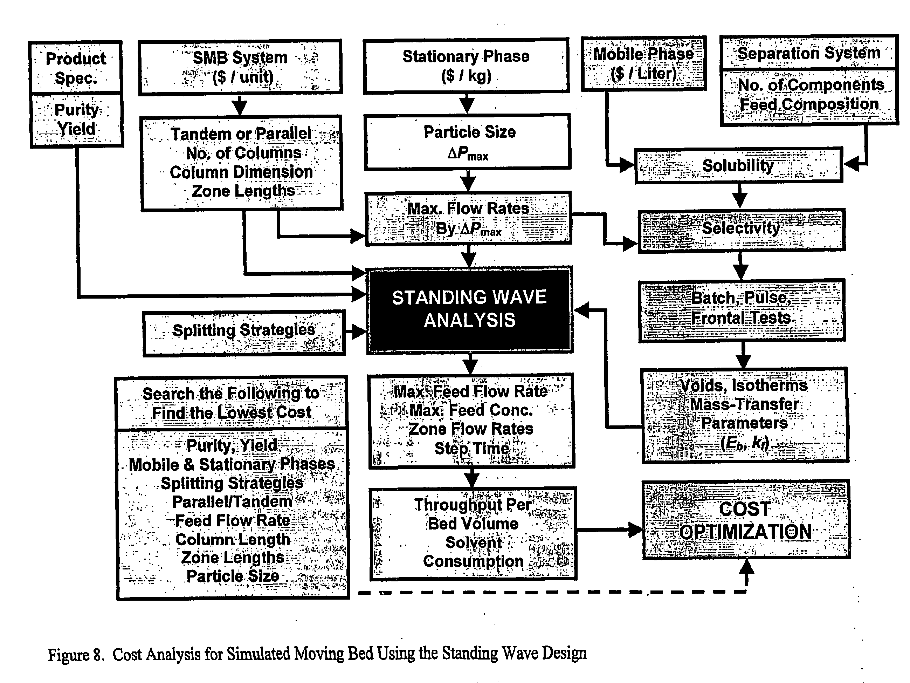

Figure 8 is a flow chart of the various parameters which go into the design of an SMB using the standing wave analysis, and how they are used to arrive at the economic efficiency of a particular SMB.

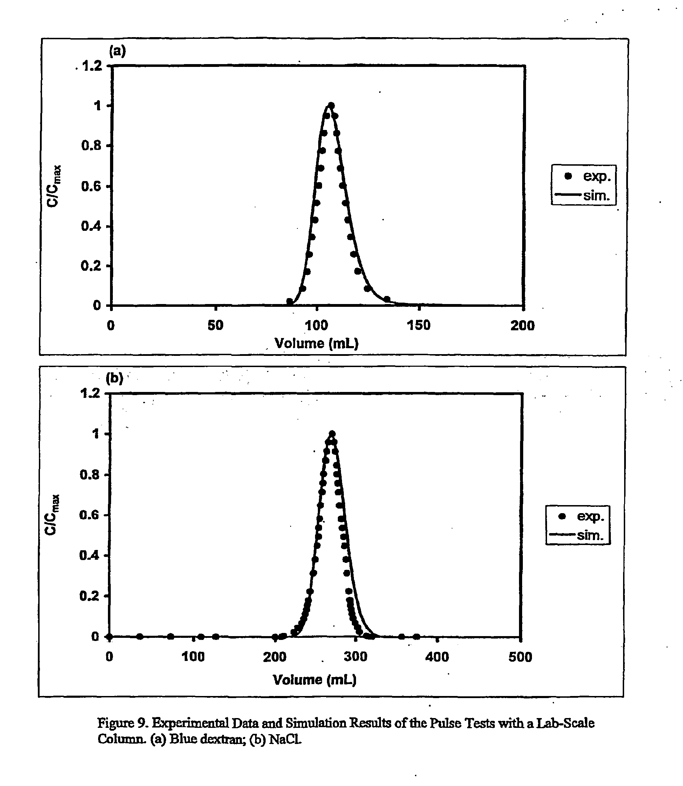

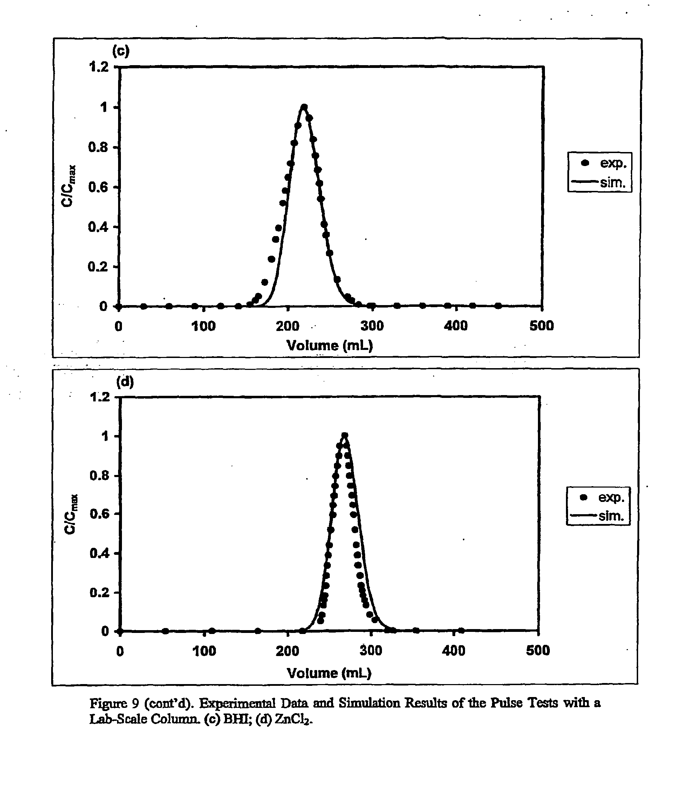

Figures 9(a)-(d) are elution chromatograms charting experimental data and computer simulation results of pulse tests with a lab scale column at various concentrations for (a) blue dextran, (b) NaCl, (c) BHI, and (d) $ZnCl_2$.

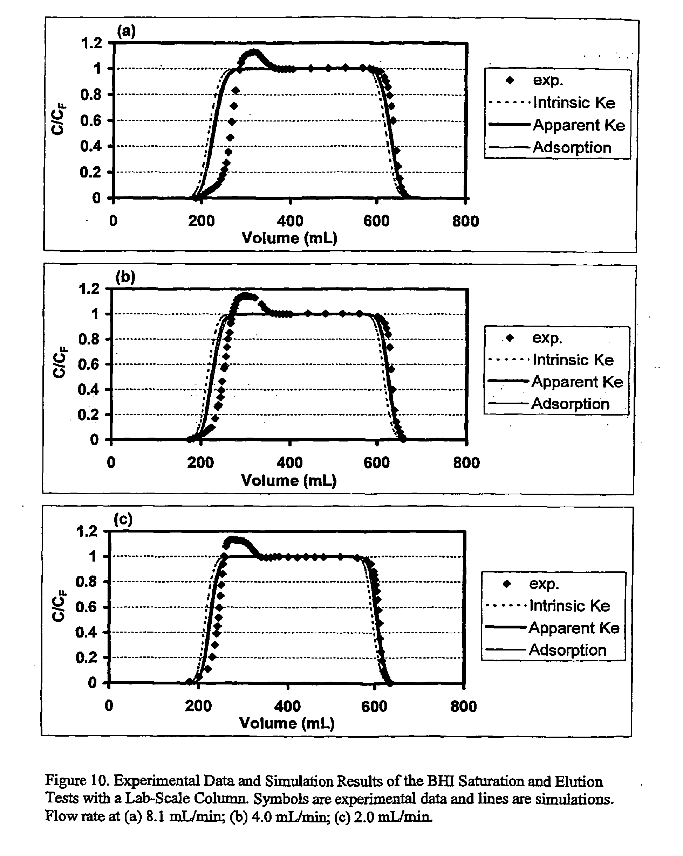

Figures 10(a)-(c) are elution chromatograms charting experimental data and computer simulations of long pulse tests employing a saturated BHI saturation solution eluted with 1 N acetic acid with a pilot-scale column, run at (a) 8.1mL/min, (b) 4.0mL/min, and (c) 2.0mL/min.

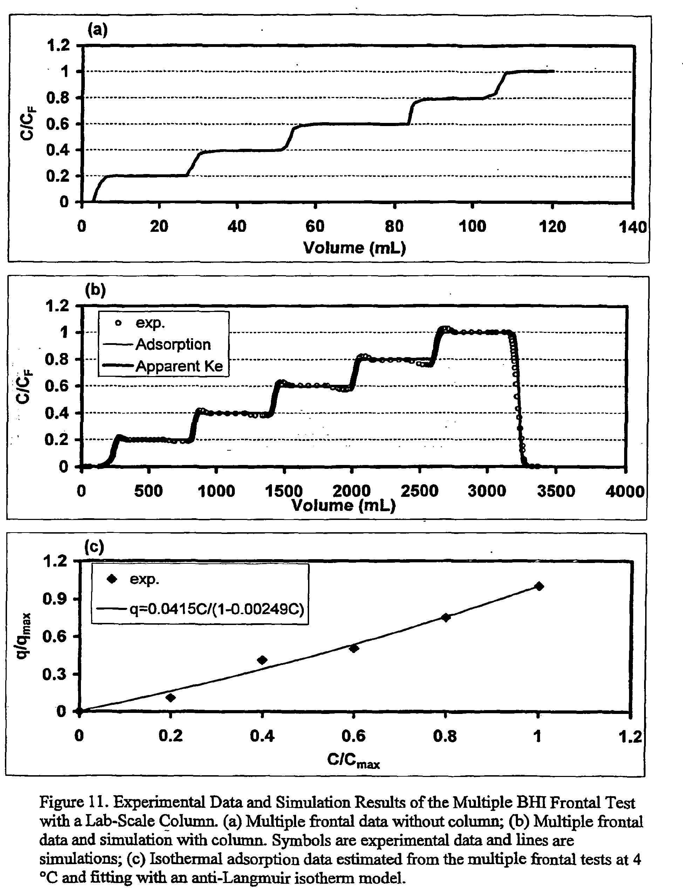

Figures 11(a)-(c) are chromatograms charting experimental data and simulation results of a multiple BHI frontal test with a lab-scale column, including multiple frontal data without a column (a), multiple frontal data with a column (b), and isotherm absorption data imposed against an anti Langmuir isotherm model (c).

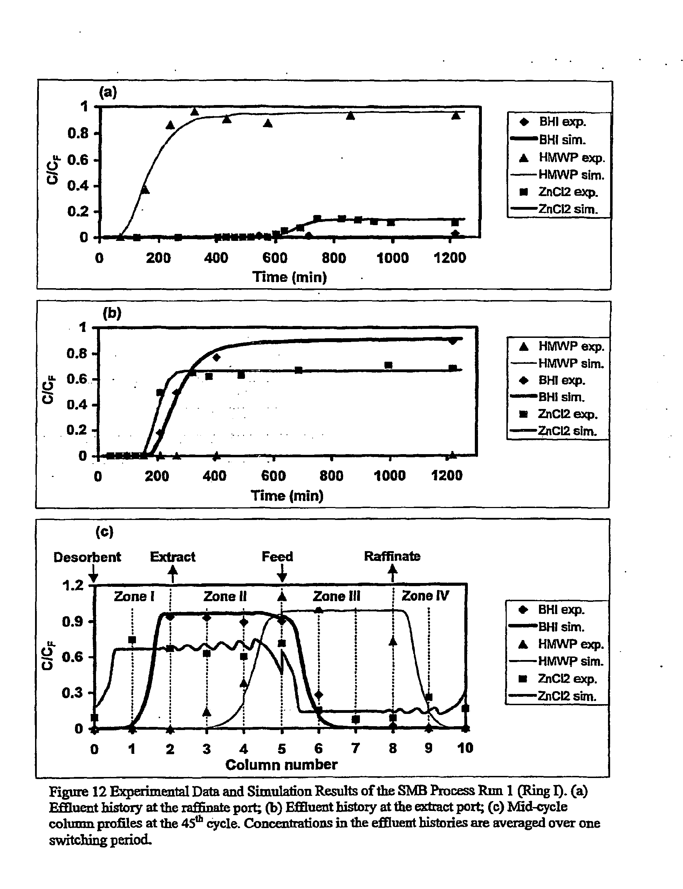

Figures 12(a) and (b) present experimental data and simulation results of a) the effluent history at the raffinate port of BHI, HMWP and $ZnCl_2$, and (b) the effluent history at the extract port of BHI, HMWP and $ZnCl_2$, in an SMB process for separating BHI from HMWP and $ZnCl_2$. Figure 12(c) shows mid-cycle column concentration profiles at the 45th cycle.

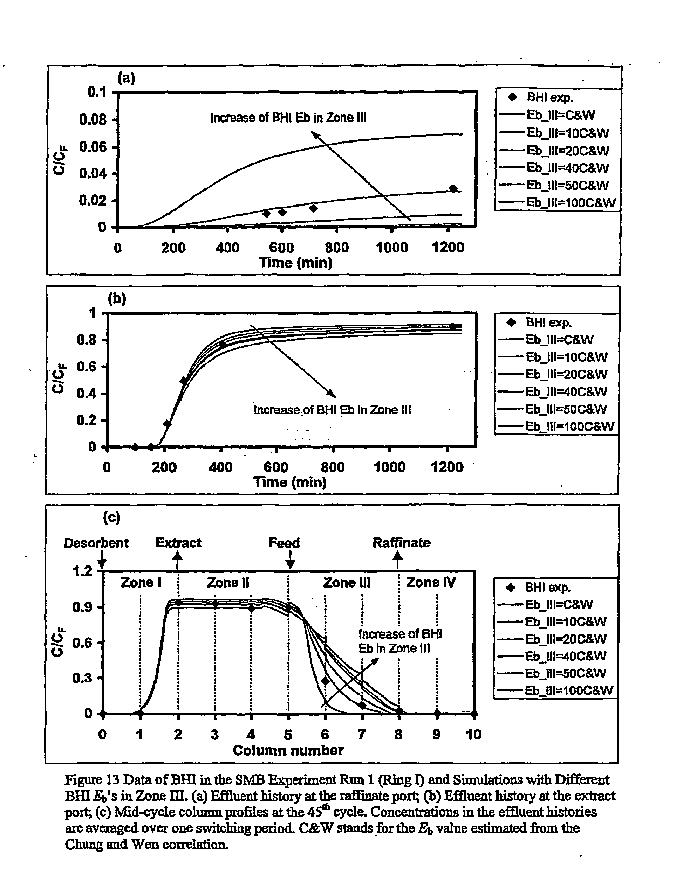

Figures 13(a) and (b) present experimental data and simulation results of a) the effluent history at the raffinate port of BHI, and (b) the effluent history at the extract port of BHI, in an SMB process for separating BHI from HMWP and $ZnCl_2$. Figure 13(c) shows mid-cycle column concentration profiles at the 45th cycle. Data are presented for five simulations in which $E_b$ for zone III varies from the value estimated from the Chung and Wen correlation to 200 times the value estimated from the Chung and Wen correlation.

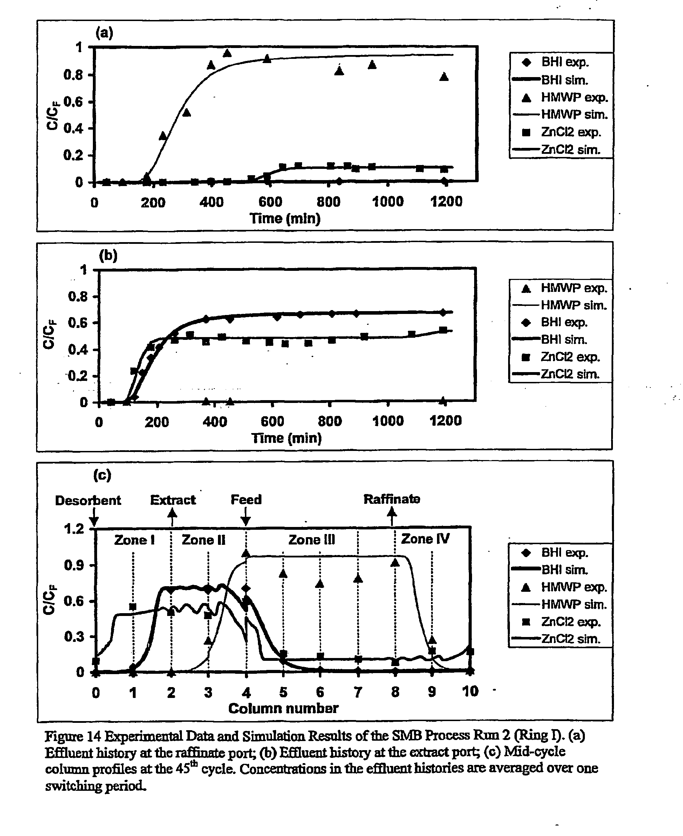

Figures 14(a) and (b) present experimental data and simulation results of a) the effluent history at the raffinate port of BHI, HMWP and $ZnCl_2$, and (b) the effluent history at the extract port of BHI, HMWP and $ZnCl_2$, in a second SMB process for separating BHI from HMWP and $ZnCl_2$. Figure 14(c) shows mid-cycle column concentration profiles at the 45th cycle.

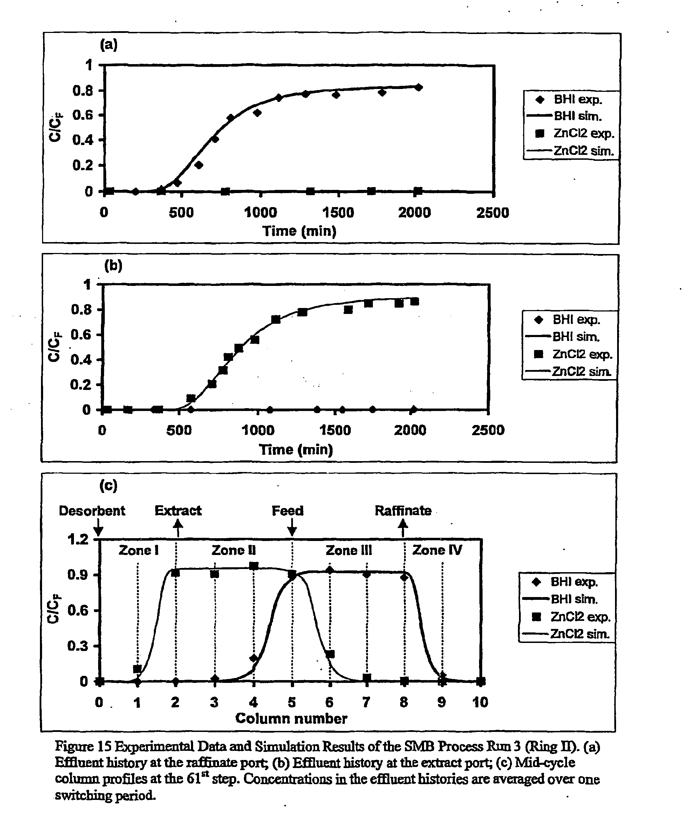

Figures 15(a) and (b) present experimental data and simulation results of a) the effluent history at the raffinate port of BHI, HMWP and $ZnCl_2$, and (b) the effluent history at the extract port of BHI, HMWP and $ZnCl_2$, in a third SMB process for separating BHI from HMWP and $ZnCl_2$. Figure 15(c) shows mid-cycle column concentration profiles at the 61st cycle.

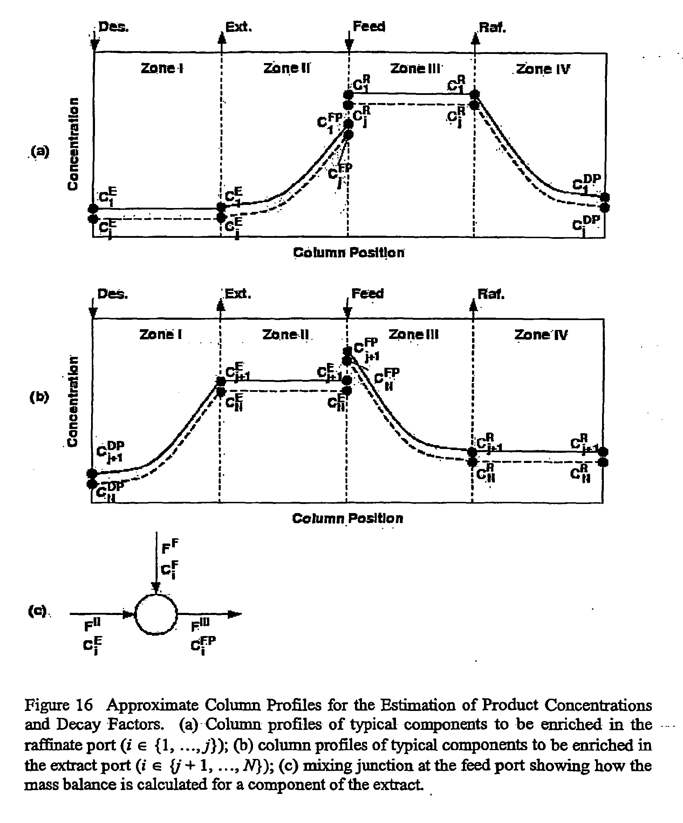

Figures 16(a) and (b) contain column concentration profiles for the estimation of product concentrations and decay factors for components to be enriched at the raffinate port (a) and for components to be enriches at the extract port (b). Figure 16(c) represents the mixing junction at the feed port showing how the mass balance is calculated for a component of the extract in the estimation of product concentrations and decay factors.

## DETAILED DISCUSSION

### Definitions

"Insulin" - The term insulin refers to a protein having the following amino acid sequence and structure (naturally occurring insulin), and biologically active analogues and derivatives thereof:

The term thus includes insulin which is derived from human, porcine, and bovine species, as well as insulin that is chemically synthesized or expressed using recombinant protein expression systems that use, for example, E-coli or yeast as the host. A preferred insulin is human insulin expressed using a protein expression system. Recombinant insulin will sometimes be referred to herein as biosynthetic human insulin or BHI.

An analogue of insulin means an insulin that contains one or more amino acid substitutions, deletions, additions, or rearrangements compared with human insulin at sites such that the insulin analogue still participates in the metabolism of carbohydrates when administered *in vivo,* and can be used in the treatment of diabetes mellitus. Examples of insulin analogues include LysB28, ProB29-human insulin, AspB28-human insulin, and GlyA21, ArgB31, ArgB32-human insulin.

Insulin derivatives include naturally occurring insulin and insulin analogues that are chemically or enzymatically derivatized at one or more constituent amino acids, including side chain modifications, backbone modifications, and N- and C- terminal modifications, by for example acetylation, acylation, hydroxylation, methylation, amidation, phosphorylation or glycosylation, and that retain the *in vivo* biological activity of insulin. An example of an insulin derivative is myristoyl-Nε-LysB29-human insulin.

Chromatography -- As used herein, the term chromatography refers to any analytical technique used for the chemical separation of mixtures and components, that relies upon selective attraction among the components of a mixture for a stationary phase. Examples include adsorption chromatography, partition chromatography, ion exchange chromatography, size exclusion chromatography, and affinity chromatography.

"Adsorbent" -- The term adsorbent is used herein generically to refer to the stationary phase used in chromatography for which the mobile phase components exhibit a selective affinity. Because such affinity can take a variety of forms other than adsorption (including size exclusion or complexation), the term refers to stationary phases that adsorb the components of a mixture and to stationary phases that do not technically adsorb components from the mobile phase, but which nevertheless behave as an adsorbent by slowing the migration velocity of one component relative to another in a chromatographic system.

"Purified" -- A component or fraction is said to be purified when its relative concentration (weight of component or fraction divided by the weight of all components or fractions in the mixture) is increased by at least 20%. In one series of embodiments, the relative concentration is increased by at least 40%, 50%, 60%, 75%, 100%, 150%, or 200%. A component or fraction can also be said to be purified when the relative concentration of components from which it is purified (weight of component or fraction from which it is purified divided by the weight of all components or fractions in the mixture) is decreased by at least 20%, 40%, 50%, 60%, 75%, 85%, 95%, 98%, or 100%. In still another series of embodiments, the component or fraction is purified to a relative concentration of at least 50%, 65%, 75%, 85%, 90%, 95%, 97%, 98%, or 99%. When a component or fraction in one embodiment is "separated" from other components or fractions, it will be understood that in other embodiments the component or fraction is "purified" at the levels provided herein.

Simulated Moving Bed -- A simulated moving bed refers to a modified continuous moving bed configuration in which the movement of the adsorbent phase is simulated by the periodic movement of feed, desorbent, extract, and raffinate lines in the direction of mobile phase flow. The typical simulated moving bed contains four separate zones and at least 4 identically sized columns allocated among the zones. However, the SMB need not consist of four zones precisely. For example, the number of zones can be reduced to three if the desorbent is not regenerated, and is instead withdrawn completely in the raffinate and extract streams. Similarly, five zones can be employed to allow three streams to be withdrawn from the ring, especially where four or more components are separated in the system. As a further example, the SMB can comprise one or more regeneration zones.

Ring -- The term "ring" is used to describe how the zones are configured in relation to one another in an SMB because the output of each zone comprises the input for the successive zone, in a circular fashion. The term "ring" should thus not be understood to be limited to a circular configuration of the zones and columns within the zones.

Linear Isotherms - A system that exhibits linear isotherms refers to a system in which the partition coefficient of component *i* (*i.e.* the ratio of the concentration of component *i* in the mobile phase divided by the concentration of component *i* in the stationary phase) is constant. Thus, in a linear system with mass transfer effects, the migration velocity of component i is governed by the following equation:

$$u_{w,i} = \frac{u_0}{1 + P\delta_i} \qquad (1)$$

where $P \equiv (1 - \varepsilon_b)/\varepsilon_b$ is the mobile-phase/particle-phase volume ratio, $\varepsilon_b$ is the interparticle void fraction, $u_0$ is the interstitial linear velocity, and $\delta_i$ is the retention factor of solute *i*:

$$\delta_i (\equiv K_{ei}\varepsilon_p + (1 - K_{ei}\varepsilon_p)a_i) \qquad (2)$$

$Ke_i$ is the size-exclusion factor, $\varepsilon_p$ is the particle void fraction, and $a_i$ is the low-concentration partition coefficient on a solid-volume basis. A system exhibiting linear isotherms can be well represented by the foregoing relationship. A size-exclusion system, in which the value of $a_i$ is zero, is the simplest linear isotherm system. Weak adsorption (with values for $a_i$ approaching zero) can be represented using an apparent $Ke$ that has a higher value than the intrinsic Ke. Many types of chromatographic systems can be operated within a region of linear isotherms. However, some systems observe nonlinear isotherms over a larger range of operating conditions, or a larger number of feed/adsorbent combinations. Systems typically depart from linear isotherms as component concentration is increased (or absorbent capacity is decreased), and competition among the components for available adsorbent capacity becomes a factor.

Multicomponent mixture -- The term multicomponent mixture refers to a fluid mixture that comprises three or more components or fractions which can be separated using a prescribed chromatographic process, because each component or fraction displays a different affinity for the adsorbent employed.

Intermediate component or fraction -- The intermediate component or fraction of a multicomponent mixture refers to the component (or fraction of components) which, in a particular chromatographic system, displays an affinity for the stationary phase that is intermediate of the affinities of at least two other components or fractions for the stationary phase. The "components" or "fractions" of a mixture do not include solvents and other materials that do not exhibit a significant affinity for the adsorbent, and are separated from the desired components after SMB processing through conventional chemical operations such as distillation.

Mass transfer effects -- Mass transfer effects refer generally to those physical phenomena which cause components of a mixture to display distinct dispersion behavior from the mixture in a given system, and to depart from the ideal system. Mass transfer effects thus include those effects modeled using axial dispersion coefficients, intraparticle diffusion coefficients, and film mass transfer coefficients. Mass transfer effects thus also include fronting and dispersion due to extra-column dead volume. A separation is hindered by non-negligible mass transfer effects if the mass transfer correction term, discussed in more detail below, is more than 2% of the mobile phase velocity in any of the zones as prescribed by equations 3-6 (the mobile phase velocities for an ideal system), to achieve a prescribed purity and yield. The designs of the present invention can also extend to systems in which the mass transfer correction velocity increases or decreases the mobile phase velocity for the ideal system by more than 1, 3, 5, 7.5, 10, 15, 20, 30, 50, 75, 100%, 200%, 400%, 600%, 1000%, or more.

Fronting and/or extra-column effects -- Fronting refers to a physical phenomenon that concentration waves spread in the direction of fluid flow as a result of anti-Langmuir type of isotherm (Karger et al., 1973) or deviation from plug flow. The deviation is usually caused by non-uniform packing, viscosity effects (Flodin, 1961; Collins, 1961), etc. Extra-column effects refer to the effects that are resulted from extra-column dead space including connecting tubing, sampling lines, void space of column heads. The extra-column effects result in a delay in solutes travelling through a chromatographic system and also result in concentration wave spreading in addition to the spreading caused by the aforementioned intra-column mass transfer effects.

Substantial separation -- A first component or fraction is said to be substantially separated from a second component or fraction when the weight ratio of the second component or fraction to the first component or fraction is reduced by at least 50%. The ratio is preferably reduced by at least 65%, 75%, 85%, 90%, 95%, 98%, or 99%.

"First" **--** In a number of contexts, a numeric identifier such as first or second is used to describe a particular element of a system or method. It should be understood that the numeric identifier is used simply for drafting convenience, and should not be interpreted to imply the existence of a second from the presence of a first. Thus, reference to a first ring allows for the presence of a second ring, but does not imply such presence. Similarly, where first and second things are prescribed, such as first and second stationary phases of two tandem rings, it is to be understood that these two things may be the same (such as the same type of absorbent), but that the things are distinct in a spatial or other separative sense.

"Resolving an equation" -- In a number of instances herein, a set of operating conditions and/or design parameters are specified, and it is indicated that equations that relate these operating condition or design parameters are resolved to arrive at the SMBs of the present invention. When such a relationship is defined, it will be understood that the relationship is not literally restricted by the exact operating conditions and/or design parameters defined by the set, but that the equations can also be resolved using variables from which the operating conditions and/or design parameters can be derived. For example, in a number of embodiments, equations are provided that relate product purity and yield to various other terms. It will be understood that such equations might also relate purity of the separated components in the extract and raffinate, because product purity and yield can be readily derived from such purities. Thus, when a particular equation is given for designing the SMBs of the present invention, and it is indicated that a derivative of the equation can also be employed, it will be understood that such derivatives include substitution of variables for which a known relationship exists, by integrating such relationships into the equations.

"Optimize economic efficiency" -- On several occasions it is noted herein that the economic efficiency of SMBs can be improved or optimized using the methods of the present invention. It will be understood that the ultimate economic efficiency of a system relies upon a set of interrelationships that are too numerous to be expressed herein adequately, but which generally can be assessed based upon commonly known methods in chemical engineering design. Economic efficiency can often be judged by rules of thumb for a particular system. For example, in many systems the economic efficiency can be judged strictly by throughput, because the capital and maintenance costs associated with throughput predominate. In other systems, the economic efficiency can be judged by the amount of desorbent used, due to the cost of separating the desorbent from the desired component(s), or the raw material cost of the desorbent. Thus, in preferred embodiments of this invention the economic efficiency is based upon the rate of throughput or the desorbent use. Such rates and ratios, as with any other rates and ratios expressed herein, are volumetric unless expressly stated otherwise herein, or unless the context clearly requires otherwise.

When the throughput or desorbent use for a particular system is "optimized," it will be understood that the throughput approaches or equals the maximum level obtainable under standing wave conditions, or that the desorbent use approaches or equals the minimum desorbent use obtainable under standing wave conditions, for the particular system being investigated. Thus, throughput is maximized if it exceeds 85%, 90%, 95%, 97%, 98%, or 99% of the standing wave maximum. Desorbent use is minimized if it is less than 125%, 115%, 110%, 105%, 103%, 102%, or 101% of the standing wave minimum.

Desorbent -- The term desorbent means the mobile phase which is added to a SMB ring between the raffinate and extract ports. The term "desorbent" is used because, when combined with the total mobile phase, the desorbent contributes to the desorption waves of the various components in their respective zones, whether by increasing the mobile phase velocity in a size exclusion system, or by physically displacing or removing the solution from the solid phase. Thus, the term "desorbent" is not meant to imply that the desorbent composition has any particular desorbent capacity, or that it desorbs through any particular physical mechanism.

"Desorbent use" - - The term desorbent use refers to the volumetric flow rate of desorbent into a SMB, and can thus be measured directly at the desorbent inlet line. Desorbent use is minimized if, for a given separation in a defined system, desorbent use is less than 125%, 115%, 110%, or 105% of the theoretical desorbent use defined by the standing wave equations. The desorbent use is preferably less than 102% or 101% of the theoretical use.

## Insulin Purification

As mentioned above, the inventors have discovered novel methods for chromatographically purifying insulin from binary and multicomponent mixtures using simulated moving bed technology. In the case of multicomponent mixtures, the methods can be used to achieve pseudo-binary separations as well as separations of intermediate affinity components and/or fractions from multicomponent mixtures. In the case of a pseudo-binary separation, the insulin will be the fastest or the slowest component of a multicomponent mixture, and will be separated from a fraction that comprises at least two components in one separation step, using only one SMB ring. If insulin is an intermediate affinity component, then the insulin will need to be separated from the faster and slower components and/or fractions in two successive separations, using two SMB rings.

Thus, in one embodiment, the invention provides a method for chromatographically separating insulin from one or more components and/or fractions comprising:

a) providing a simulated moving bed that comprises a first ring, a stationary phase, and a first desorbent stream;
b) providing a feed stream that comprises insulin and a first component or fraction;
c) introducing the first desorbent stream and the feed stream to the first ring under conditions sufficient to separate the insulin from the first component or fraction; and
d) withdrawing the insulin from the first ring as an extract or raffinate substantially separated from the first component or fraction.

If the insulin is an intermediate affinity component, then the method will further comprise:

a) introducing the insulin from the first ring and a second desorbent stream to a second ring, under conditions to separate the insulin from a second component or fraction; and
b) withdrawing from the second ring an extract or raffinate that comprises the insulin substantially separated from the first and second components and/or fractions.

In preferred embodiments, the desorbent use is minimized for the separations in the first and/or second rings.

The method can be used to purify any type of insulin as that term is broadly described herein. In a preferred embodiment, however, the insulin is biosynthetic human insulin derived from a recombinant protein expression system. Components from which the insulin can be purified preferably include high molecular weight proteins from the recombinant expression process (such as proteases and fusion protein residues that failed to properly cleave) and proinsulin. The term high molecular weight protein (HMWP) is used to refer to any protein that has a higher molecular weight than insulin. Notably, the HMWP in the particular insulin purification disclosed herein can be treated as only one component because the HMWP components behave substantially as one unit under chromatographic conditions. Another component for separation from insulin is one having a lower molecular weight than insulin, such as a cleavage peptide or a metal salt, such as a salt of calcium, zinc, nickel, cobalt, and the like, which need to be removed.

The method can be used to purify insulin from any mixture which can suitably be resolved using chromatography, using any chromatographic method including adsorption chromatography, partition chromatography, ion exchange chromatography, size exclusion chromatography, and affinity chromatography. In a preferred embodiment, however, the purification is achieved under linear adsorption isotherms. In an even more preferred embodiment, the purification is achieved using a size exclusion process.

In size exclusion chromatography, the process lacks any substantial attractive interaction between the stationary phase and component. The liquid or gaseous phase passes through a porous gel which separates the molecules according to size. The pores are normally small and exclude the larger component molecules, but allow smaller molecules to enter the gel, causing them to flow through a larger volume. This causes the larger molecules to pass through the column at a faster rate than the smaller ones. For the separation of biomolecules in aqueous systems, SEC is typically referred to as gel filtration chromatography (GFC), while the separation of organic polymers in non-aqueous systems is called gel permeation chromatography (GPC).

Examples of suitable size exclusion materials include, among others, starch (including maize starch), crosslinked galactomannan, crosslinked dextran, agar or agarose, polyacrylamides, copolymers of acrylamide and methylene bis-acrylamide, copolymers of methylene bis-acrylamide with vinylethyl carbitol and with vinyl pyrrolidone, and the like. For more demanding environments, one could consider a rigid polymer-based gel made from a silica-based or polymer-based material. The preferred gels are crosslinked dextrans, such as the Sephadex series from Pharmacia Fine Chemicals, Inc., Piscataway, N.J.

Water-swellable gels preferably have in the dry or nonswollen state a water regain of at least about 4 percent by weight, based on the weight of dry gel, and particle diameters smaller than about 100 microns. Preferably, the water regain of the gel will be in the range of from about 4 to about 98 percent, and most preferably from about 5 to about 20 percent. The average diameter ratio of the hydrated gel particle to the dry gel particle is preferably from about 1.2 to about 1.9, more preferably from about 1.45 to about 1.65, and most preferably 1.56. Preferably, the diameters of the dry gel particles will be smaller than about 80 microns; a particularly useful range of particle diameters is from about 20 to about 80 microns.

Various desorbents can similarly be used in the process of the present invention, as long as they do not degrade the insulin to any significant degree. A preferred desorbent, however, will display excellent solubility for the insulin, especially when used in a size exclusion process wherein linear isotherms are observed across a wide range of component concentrations. In one embodiment the insulin is soluble in the desorbent up to about 60, 80, or even 100 g/l. The desorbent typically will be an aqueous solution having a pH in the range of the insulin fed to the SMB (generally from about 2.0 to about 3.5). The desorbent can thus be any aqueous solution of organic or inorganic acid toward which the insulin is stable, such as hydrochloric acid, phosphoric acid, formic acid, acetic acid, propionic acid, n-butyric acid, isobutyric acid, pentanoic acid, and the like. In a preferred embodiment the desorbent comprises acetic acid. Column configuration is a function of column number, column length, and how the columns are allocated among the zones. Column allocation (zone lengths) is critical to the satisfaction of demanding design criteria (such as purity and/or yield requirements), because under some circumstances one cannot even achieve a desired purity and yield unless zones are sufficiently long and/or columns are properly allocated. The column configuration of SMBs of the present invention is selected to achieve a defined yield and purity. Moreover, the configuration is preferably optimized for economic efficiency, either by maximizing throughput in the SMB, or minimizing desorbent use, for a sufficiently prescribed set of design and or operating parameters, as discussed more fully herein (including defined yields of the purified components and/or fractions, purity and yield of a desired component or fraction, defined maximum zone flow rates, and/or a defined feed flow rate).

Thus, in one aspect the number of columns used in an SMB is optimized for a particular column allocation. Of course it will be understood in this embodiment that the number of columns for defined zone lengths can always be increased to improve the efficiency of the system. Therefore, in this context, an optimum design will provide greater than about 85%, 90%, 95%, 97%, 98%, or 99% of the theoretical throughput, or less than 125%, 110%, 105%, 103%, 102%, or 101% of the minimum desorbent consumption, each as defined by the standing wave design, at an infinite column number.

In another aspect the number of columns in each zone are optimally allocated for a prescribed total number of columns. Thus, in a preferred embodiment the separation of the present invention occurs in an SMB wherein:

    a) the first ring comprises 4 zones and 5 or more columns, or 5 zones and 6 or more columns;

    b) the allocation of columns among zones substantially optimizes the throughput of the first ring, or the desorbent use in the first ring, for a defined number of columns.

In other embodiments the ring comprises 6, 8, 10, 12, 14, 16, 18, or 20, or more, columns.

The methods of the present invention also encompass various splitting strategies which can be employed in the purification of insulin when it is the intermediate affinity component of a multicomponent mixture. When two 4-zone SMB units are operated in series, there are several splitting strategies that can be taken to obtain purified products. In Figure 7, four such strategies (S1-S4) are shown for separating components numbered 1, 2, and 3, in a mixture where the order of retention is as follows: $a_1 < a_2 < a_3$.

In this preliminary analysis mass-transfer resistances are neglected (a case referred to as the "ideal" case) and the wave fronts are assumed to be sharp. For convenience, the standing waves shown in Figure 7 for different strategies are summarized in Table 1. The numbers listed in Table 1 represent the standing components in each zone. For example, 3 means component 3 is standing in the associated zone.

Table 1. Standing Waves for Various Splitting Strategies of Three Component System

| | Standing Waves | | | | | | | | |
|---|---|---|---|---|---|---|---|---|---|
| Strategy | Zone IA | Zone IIA | Zone IIIA | Zone IVA | Zone VA | Zone IB | Zone IIB | Zone IIIB | Zone IVB |
| S1 | 3* | 1* | 2† | 1† | | 3* | 2* | 3† | 2† |
| S2 | 3* | 2* | 3† | 1† | | 2* | 1* | 2† | 1† |
| S3 | 2* | 1* | 2† | 1† | | 3* | 2* | 3† | 2† |
| S4 | 3* | 2* | 3† | 2† | | 2* | 1* | 2† | 1† |
| S5 | 3* | 2* | 1* | 2† | 1† | 3* | 2* | 3† | 2† |
| S6 | 3* | 2* | 3† | 2† | 1† | 2* | 1* | 2† | 1† |

* Desorption wave
† Adsorption wave

In Figure 7a, component 1 is split from 2 and 3 in the first SMB unit (ring A), and the extract product (which contains unresolved components 2 and 3) is fed to a second SMB unit (ring B), in which component 2 is split from component 3. Figure 7b is similar: component 3 is split from 1 and 2 in ring A, and 1 is split from 2 in ring B.

An N component system in which purified component j was desired would observe similar splitting strategies, as set forth in Table 2.

Table 2: Standing waves for various splitting strategies for N components.

| | Standing Waves | | | | | | | | |
|---|---|---|---|---|---|---|---|---|---|
| Strategy | Zone IA | Zone IIA | Zone IIIA | Zone IVA | Zone VA | Zone IB | Zone IIB | Zone IIIB | Zone IVB |
| S1 | $N$* | $j-1$* | $j$† | 1† | | $N$* | $j$* | $j+1$† | $j$† |
| S2 | $N$* | $j$* | $j+1$† | 1† | | $j$* | $j-1$* | $j$† | 1† |
| S3 | $J$* | $j-1$* | $j$† | 1† | | $N$* | $j$* | $j+1$† | $j$† |
| S4 | $N$* | $j$* | $j+1$† | $j$† | | $j$* | $j-1$* | $j$† | 1† |
| S5 | $N$* | $j$* | $j-1$* | $j$† | 1† | $N$* | $j$* | $j+1$† | $j$† |
| S6 | $N$* | $j$* | $j+1$† | $j$† | 1† | $j$* | $j-1$* | $j$† | 1† |

*Desorption wave
† Adsorption wave

In particular, for strategy S1, components 1 ... j-1 would be withdrawn in the extract of the first SMB unit, and the extract product (which contains unresolved component j ...N) would be fed to the second SMB unit in which component j would be separated from components j+1 ...N. Strategy S2 is similar: components 1 ...j would be split from components j+1 ...N in the first ring, and components 1 ... j-1 would be separated from component j in the second ring.

Figures 7a-b show how to obtain three pure products from a mixture of three components. In most cases, however, it is not necessary to obtain every component in high purity and high yield. When only the middle product is required in high purity and high yield, the inventors have unexpectedly determined that it may be preferable to allow one component to distribute throughout the entire SMB unit. For example, in Figure 7c, components 2 and 3 are separated from 1 in the first ring, so component 1 should be kept from the extract and collected in the raffinate; however, if components 1 and 3 are not required in high purity, then the standing wave condition in zone I can be relaxed to allow part of component 3 to "wrap around" (that is, to migrate from zone I into zone IV) and be taken with component 1 in the raffinate. Analogously, in Figure 7d, component 1 is allowed to "wrap around" so that it is withdrawn from both the raffinate and extract.

The conditions are relaxed in the sense that the component which is allowed to wrap around the SMB is not considered in the standing wave design. Thus, the standing wave equations governing a binary split of components, as set forth in Ma and Wang (1997), would govern the design of the system illustrated in Figures 7c and 7d. For the first split shown in Figure 7c, those equations are as follows:

$$u_0^I = (1 + P\delta_2)v \qquad (3)$$

$$u_0^{II} = (1 + P\delta_1)v \qquad (4)$$

$$u_0^{III} = (1 + P\delta_2)v \qquad (5)$$

$$u_0^{IV} = (1 + P\delta_1)v \qquad (6)$$

The tandem SMB for multicomponent fractionation is not limited to two 4-zone rings. When five zones are employed in the first ring of the tandem SMB system, there is increased flexibility in the design. Figures 7e-f show schematic representations of two such processes for the separation of three components. In Figure 7e component 1 is completely split from components 2 and 3 in the first SMB unit (ring A). Some of component 3 is withdrawn purified in an extract stream, and the remainder contaminates an intermediate extract stream that also contains component 2. The intermediate extract stream component (which contains unresolved components 2 and 3) is fed to a second SMB unit (ring B), in which component 2 is completely split from component 3. Figure 7f is similar: component 3 is completely split from 1 and 2 in ring A, some of component 1 is withdrawn purified in a raffinate stream, and the remainder contaminates an intermediate raffinate stream that also contains component 2. The intermediate raffinate stream is fed to the second SMB unit for separating components 1 and 2.

The standing wave equations governing the separations disclosed in figures 7e and 7f, for a 3 component system, modified by mass transfer correction terms (Δ) as discussed more fully below, are listed in Table 3.

**Table 3a. Standing Waves and Equations for a Nine-Zone SMB with Strategy S5 (Figure 7e).**

|  | Zone | Wave Type | Solute | Standing Wave Equation |
|---|---|---|---|---|
| SMB 1 | I | Desorption | 3 | $u_0^I = (1 + P\delta_3)v + \Delta_3^I$ |
|  | II | Desorption | 2 | $u_0^{II} = (1 + P\delta_2)v + \Delta_2^{II}$ |
|  | III | Desorption | 1 | $u_0^{III} = (1 + P\delta_1)v + \Delta_1^{III}$ |
|  | IV | Adsorption | 2 | $u_0^{IV} = (1 + P\delta_2)v - \Delta_2^{IV}$ |
|  | V | Adsorption | 1 | $u_0^V = (1 + P\delta_1)v - \Delta_1^V$ |
| SMB 2 | I | Desorption | 3 | $u_0^I = (1 + P\delta_3)v + \Delta_3^I$ |
|  | II | Desorption | 2 | $u_0^{II} = (1 + P\delta_2)v + \Delta_2^{II}$ |
|  | III | Adsorption | 3 | $u_0^{III} = (1 + P\delta_3)v - \Delta_3^{III}$ |

14

(continued)

| | Zone | Wave Type | Solute | Standing Wave Equation |
|---|---|---|---|---|
| | IV | Adsorption | 2 | $u_0^{IV} = (1+P\delta_2)v - \Delta_2^{IV}$ |

Note: $\Delta_i^m$ are positive numbers, the first subscript indicates the zone number and the second subscript indicates the solute.

**Table 3b. Standing Waves and Equations for a Nine-Zone SMB with Strategy S6 (Figure 7f).**

| | Zone | Wave Type | Solute | Standing Wave Equation |
|---|---|---|---|---|
| SMB 1 | I | Desorption | 3 | $u_0^I = (1+P\delta_3)v + \Delta_3^I$ |
| | II | Desorption | 2 | $u_0^{II} = (1+P\delta_2)v + \Delta_2^{II}$ |
| | III | Adsorption | 3 | $u_0^{III} = (1+P\delta_3)v - \Delta_3^{III}$ |
| | IV | Adsorption | 2 | $u_0^{IV} = (1+P\delta_2)v - \Delta_2^{IV}$ |
| | V | Adsorption | 1 | $u_0^V = (1+P\delta_1)v - \Delta_1^V$ |
| SMB 2 | I | Desorption | 2 | $u_0^I = (1+P\delta_2)v + \Delta_2^I$ |
| | II | Desorption | 1 | $u_0^{II} = (1+P\delta_1)v + \Delta_1^{II}$ |
| | III | Adsorption | 2 | $u_0^{III} = (1+P\delta_2)v - \Delta_2^{III}$ |
| | IV | Adsorption | 1 | $u_0^{IV} = (1+P\delta_1)v - \Delta_1^{IV}$ |

The foregoing splitting strategies are employed generally to improve the efficiency of the separation, by increasing the throughput of the system, by decreasing the desorbent consumption, or a combination of both. Because desorbent use can be minimized by allowing one component to distribute in the first ring, in one embodiment the first or second component or fraction is allowed to distribute through the first ring, and only insulin is purified, in order to reduce the desorbent use.

When more than one purified component or fraction (i.e. at least 50%, 65%, 75%, 85%, or 95% volumetrically separated from one or more other components or fractions) is desired from a multicomponent separation in which the insulin has the intermediate affinity component, then the easiest split should be performed first to minimize desorbent consumption. Thus, in still another embodiment,

a) the insulin is withdrawn from the first ring substantially separated from the first fraction or component, and
b) the difference between the affinities of the insulin and the first component or fraction for the stationary phase in the first ring is less than the difference between the affinities of the insulin and the second component or fraction for the stationary phase in the second ring.

## Design Method

The invention also provides a design method which can be used in the design of any SMB process for purifying insulin under linear adsorption isotherms. This method is preferably performed in a computer environment. For example, the system is preferably designed by inputting one or more design or operating parameters into a machine in which equations that govern the SMB are encoded, resolving the equations using the machine, and obtaining from the machine an output that defines one or more other design or operating parameters. Moreover, the design method is typically followed by the step of performing an SMB separation (either experimentally or using a computer simulation) under the conditions determined by the design. However, in some situations it may be beneficial to adjust the flow rates determined by the design, in which case one would relax the standing wave conditions determined by the design in one or more of the zones, before performing the SMB separation. The following is an explanation of the method and its theoretical underpinnings.

In a four-zone SMB, the function of each zone is as follows: (1) Zone I: This zone is located between the desorbent inlet and extract withdrawal and used for desorbing the slow fraction. A portion of the stream leaving this zone is withdrawn as the extract while the remainder flows into zone II. (2) Zone II: This zone is used for desorption of the fast fraction and separation from the slow fraction. (3) Zone III: This zone is used for the separation of the slow fraction from the fast fraction. The fast fraction is partially withdrawn at the raffinate port. (4) Zone IV: This zone is used for adsorption of the fast fraction as well as desorbent recovery. The stream leaving this zone should ideally contain only pure desorbent which is recirculated to the desorbent inlet for reuse.

In order to have stable continuous operation in a four zone SMB, the flow rates in the four zones must satisfy the following conditions:

$$F^{I} > F^{II} \tag{7}$$

$$F^{II} < F^{III} \tag{8}$$

$$F^{III} > F^{IV} \tag{9}$$

$$F^{IV} < F^{I} \tag{10}$$

In addition, in order for two components to separate, the migration velocities of the two components must be taken into account to determine the zone flow rates. The following conditions for the velocities in each zone are known from the literature (Ruthven and Ching, 1989; Wankat, 1994).

$$u_{s2}^{III} - v < 0 \tag{11}$$

$$u_{s1}^{IV} - v < 0 \tag{12}$$

$$u_{s2}^{I} - v > 0 \tag{13}$$

$$u_{s1}^{II} - v > 0 \tag{14}$$

where $v$ is the average port movement along the direction of the desorbent flow, and $u_{s2}^{I}$ and $u_{s2}^{III}$ are the linear migration velocities of component 2 in zones I and III, respectively. The same convention is used for component 1 in zones II and IV. Equations 11 and 12 indicate that the migration velocity of the slow fraction (component 2) should be less than v in zone III and that of the fast fraction (component 1) should be less than *v* in zone IV. Equations 13 and 14 indicate that the velocity of component 2 should be greater than *v* in zone I and that of component 1 should be greater than *v* in zone II. Equations 11-14 define all the feasible zone flow rates and the port movement velocities needed to guarantee separation. These equations must be satisfied in order to have separation for systems with or without mass-transfer resistances.

Within the stability region defined in equations 11-14, there are infinite combinations of zone flow rates and port movement velocity (switching time) that guarantee separation in a given system. Among these, the optimal zone flow rates and port movement velocity that give the highest throughput and the lowest desorbent consumption for a multicomponent mixture can be found by selecting the proper concentration waves to remain standing in each zone (i.e. the standing wave analysis). Figure 6a illustrates, for a system without mass transfer effects, which waves must remain standing in each zone to assure complete separation of two fractions in a multicomponent system.

In particular, Figure 6a shows that:

(1) in zone I, the desorption wave of the slowest moving component (component N) must remain standing;
(2) in zone II, the desorption wave of component j must remain standing;
(3) in zone III, the adsorption wave of component j + 1 must remain standing; and
(4) in zone IV, the adsorption wave of the fastest moving component (component 1) must remain standing.

It has been proven experimentally, and set forth in the examples herein, that the foregoing conditions assure that a desired separation is achieved in an SMB. The standing wave conditions associated with the separation depicted in Figure 6a can be expressed algebraically by the following equations:

$$u_0^{\mathrm{I}} = (1 + P\delta_N)v \qquad\qquad (15)$$

$$u_0^{\mathrm{II}} = (1 + P\delta_J)v \qquad\qquad (16)$$

$$u_0^{\mathrm{III}} = (1 + P\delta_{j+1})v \qquad\qquad (17)$$

$$u_0^{\mathrm{IV}} = (1 + P\delta_1)v \qquad\qquad (18)$$

wherein the port movement velocity is given by

$$v = \frac{F^{feed}}{SP\varepsilon_b(\delta_{j+1} - \delta_j)} \qquad\qquad (19)$$

N represents the number of components in the system, numbered from low to high affinity as $1,...,j,j+1, ..., N$
and in which a split is desired between component *j* and *j*+1. $u_0$ is the interstitial velocity of the mobile phase, and the $u_0$ determined by equations 15-19 represents what is termed herein the "ideal mobile phase velocity." The remaining terms are defined as follows: S is the column cross sectional area; $\delta_1 (\equiv K_{ei}\varepsilon_p + (1- K_{ei}\varepsilon_p)a_i)$ is the retention factor for linear systems ($a_i$ is the partition constant between the adsorbed phase and the liquid phase for component i at an infinitesimal concentration, and $\varepsilon_p$ is the porosity of the particle); $K_{ei}$ is the size exclusion factor for component i for the packing material used in the SMB. $P(\equiv \dfrac{1-\varepsilon_b}{\varepsilon_b})$ is the bed phase ratio; $\varepsilon_b$ is the interstitial bed void fraction; and $F^{feed}$ is the feed flow rate. The variables $\alpha_i$, $\varepsilon_p$, $K_{ei}$, and $\varepsilon_b$ are intrinsic engineering parameters that an be estimated from elution chromatograms or, for some systems and packing materials, may be taken from the literature or manufacturer's specifications.

Once the intrinsic engineering parameters are known, and an initial column cross section is selected, one can readily derive the four zone flow rates and the port movement velocity for a given $F^{feed}$, because there are five equations, equations 15-19, with five unknowns, $u_0^I$, $u_0^{II}$, $u_0^{III}$, $u_0^{IV}$, and $v$.

Conversely, the equations can be solved based upon a given rate of desorbent consumption, using equation 20:

$$\frac{F^{des}}{\varepsilon_b S} = u_0^I - u_0^{IV} \qquad\qquad (20)$$

wherein $F^{des}$ is the desorbent flow rate. Taking this approach, one can identify the highest feed rate for a given desorbent consumption rate, because $u_0^{III}$ is the highest and $u_0^{II}$ is the lowest among all of the feasible designs that guarantee separation.

Of course, if a pseudo-binary split is contemplated, in which the desired component is the fastest or slowest component of a multicomponent mixture, then equations 15-18 would need to be appropriately modified, as shown in Table 2. In particular, if the desired component was the fastest component, then the retention factor of component 1 would be used to determine the mobile phase in zone II. Alternatively, if the desired component was the slowest component, the retention factor of component N would be used to determine the mobile phase velocity in zone III.

Because desorbent consumption and feed rate are two of the principle factors that determine system cost and efficiency, the ability to quickly identify maximum feed rates for a given desorbent use, or minimum desorbent use for a given feed rate, using the foregoing equations, allows one to quickly and efficiently scan various desorbent/feed ratios and determine system parameters that optimize the economic efficiency of the system. This is especially true in the ideal systems governed by the above operating parameters, in which 100% product yield is assumed.

*Mass Transfer Resistances:* The foregoing discussion has thus far been limited to the design of ideal systems in which there are no significant mass transfer resistances. Because there is no dispersion of components within the zones, pure products at both output ports can be obtained for any zone length and without any limit on feed flow rate or throughput. Theoretically, the feed flow rate can be as high as the equipment or resin allows. This is illustrated by the perpendicular concentration waves in Figure 6a. Because the concentration waves are perpendicular, zone lengths can be compressed and components will not migrate unwittingly from one zone to the next.

By contrast, for non-ideal systems (i.e. systems with mass transfer resistances), there exists a maximum feed flow rate that is a function of zone lengths, product purities desired, isotherms, and mass-transfer parameters. Figure 6b illustrates this point. As shown in Figure 6b, mass transfer effects cause concentration waves to spread through their respective zones (i.e. the waves are no longer perpendicular). Moreover, if the concentration waves are not confined they will cause contamination at the extract and raffinate ports.

The waves can be confined to their respective zones, and pure products obtained at the extract and raffinate ports, by increasing the zone lengths, or altering the velocities of port movement and of the mobile phase. However, some degree of contamination is typically acceptable and even desirable from an economic standpoint. Thus, the SMB can also be designed to allow for a particular degree of contamination, and to allow a more economical operation of the SMB.

The SMBs of the present invention can be designed to accommodate systems in which separation is hindered by non-negligible mass transfer resistances, regardless of which mass transfer mechanism or mechanisms predominate, by an extension of the foregoing standing wave concepts to non-ideal systems. In particular, to design a system with significant mass-transfer resistances (non-ideal systems), equations 15-19 are modified by correction terms to account for the wave spreading of the components whose concentration waves are kept standing in each zone, attributable to the mass transfer effects. The complete solutions of the linear velocities for multicomponent separation in the four zones in a SMB, corrected for the effects of mass transfer, can be found from equations 19 and 21-24, based on the concept of standing waves (Figure 6b).

$$u_0{}^{I} - (1 + P\delta_N)v = \beta_N{}^{I}\left(\frac{E_{b,N}{}^{I}}{L^{I}} + \frac{Pv^2\,\delta_N{}^2}{K_{f,N}{}^{I}\,L^{I}}\right) \tag{21}$$

$$u_0{}^{II} - (1 + P\delta_j)v = \beta_j{}^{II}\left(\frac{E_{b,j}{}^{II}}{L^{II}} + \frac{Pv^2\,\delta_j{}^2}{K_{f,j}{}^{II}\,L^{II}}\right) \tag{22}$$

$$u_0{}^{III} - (1 + P\delta_{j+1})v = -\beta_{j+1}{}^{III}\left(\frac{E_{b,j+1}{}^{III}}{L^{III}} + \frac{Pv^2\,\delta_{j+1}{}^2}{K_{f,j+1}{}^{III}\,L^{III}}\right) \tag{23}$$

$$u_0{}^{IV} - (1 + P\delta_1)v = -\beta_1{}^{IV}\left(\frac{E_{b,1}{}^{IV}}{L^{IV}} + \frac{Pv^2\,\delta_1{}^2}{K_{f,1}{}^{IV}\,L^{IV}}\right) \tag{24}$$

The variables in the foregoing equations are defined as follows:

- N represents the number of components in the system, numbered from low to high affinity as 1,...,$j$,$j$+1, ..., $N$, and in which a split is desired between component $j$ and $j$+1
- $u_0$ is the interstitial velocity
- S is the column cross sectional area
- $\delta_i (\equiv K_{ie}\,\varepsilon_p + (1 - K_{ei}\varepsilon_p)a_i)$ ($a_i$ is the partition constant between the adsorbed phase and the liquid phase for component $i$ at an infinitesimal concentration, and $\varepsilon_p$ is the porosity of the particle)
- $K_{ei}$ is the size exclusion factor for component i
- $P(\equiv \dfrac{1 - \varepsilon_b}{\varepsilon_b})$ is the bed phase ratio
- $\varepsilon_b$ is the interstitial bed void fraction
- $F^{feed}$ is the feed flow rate
- $F^{des}$ is the desorbent flow rate
- L is the zone length
- $E_b$ is the axial dispersion coefficient
- $K_f$ is the lumped mass-transfer coefficient
- β is related to the ratio of the highest concentration to the lowest concentration of the standing wave in a specific zone

If product purities (i.e. the purity of the split components in the extract and raffinate), column cross sectional area (S), zone lengths, and feed flow rate are specified, the standing wave equations can be used to find the port movement velocity and the linear velocities of the mobile phase in the four zones of the SMB. These equations define the standing wave conditions when both $E_b$ and $K_f$ are significant. Also, they define the maximum linear velocities for zones III and IV and the minimum linear velocities for zones I and II for a system with linear isotherms. Any lower velocities in zones III and IV and higher velocities in zone I and II result in better than specified product purities and recoveries. However, such designs will have lower throughput or higher desorbent consumption than the standing wave design. The equations also define the minimum desorbent consumption for a given rate of feed, because $u_0{}^{IV}$ is the highest and $u_0{}^{I}$ is the lowest among all the feasible designs that guarantee separation at the prescribed yield and purity.

The right side of equations 21-24 is the mass transfer correction term for each zone, which establishes the extent to which the "ideal mobile phase velocity" must be altered in each zone to accomplish a desired level of separation.

The mass transfer correction factors account for wave spreading by the components retained (or released) in each zone. As mentioned previously, the mobile phase velocity which is allowable in each zone is a function of zone lengths, product purities desired, isotherms and mass-transfer parameters. Isotherms are accounted for through the retention factor for the mass-center velocity of each concentration wave that remains standing in the four zones. The remaining factors are associated exclusively with mass transfer, and are taken into account by the mass transfer correction term for each concentration wave that must remain standing in the four zones.

Thus, L is the zone length, $E_b$ is the axial dispersion coefficient, $K_f$ is the lumped mass-transfer coefficient, $\beta$ is related to the ratio of the highest concentration to the lowest concentration of the standing wave in a specific zone (Figure 6b), and the remaining terms are as defined above. Once again, the intrinsic engineering parameters $E_b$ and $K_f$ can be determined experimentally by small pulse or large pulse elution chromatograms, or in some systems by reference to the literature. Alternatively, the lumped mass-transfer coefficient, $K_{f,i}^m$, for component $i$ in zone m can be calculated from the following equation:

$$\frac{1}{K_{f,i}^m} = \frac{R_p^2}{15\,K_{e,i}\,\varepsilon_p\,D_{p,i}} + \frac{R_p}{3\,k_{f,i}^m} \qquad (25)$$

This parameter lumps the effects of film mass transfer and pore diffusion into a single term (Ruthven, 1984). The film mass transfer coefficient ($k_f$) can be estimated from literature correlations (e.g. Wilson and Geankoplis, 1966). The pore diffusivity ($D_p$) is estimated from pulse tests (Wooley et al., 1998; Wu et al., 1998).

The $\beta$ terms are the index of product purity and yield, and ultimately determine the overall purities and yields of products at the extract and raffinate ports. Because of their relationship to concentration gradients within a particular zone, the $\beta$ terms are sometimes referred to herein as "decay coefficients." The $\beta$ terms are derived solely as a function of component concentrations within particular zones. $\beta_2^{III}$, for example, is the natural logarithm of the ratio of the concentration at the inlet to zone III $(Cs_{max})$ to that at the raffinate port for component 2 (Figures 5 and 16). The higher the $\beta_2^{III}$ value, the higher the product purity of component 1 in the raffinate and the higher the yield of component 2 in the extract. To achieve high yield of component 1 in the raffinate and high purity of component 2 in the extract requires a high $\beta_1^{II}$ value. To ensure high purity and high yield of both components, both high $\beta_2^{III}$ and $\beta_1^{II}$ values are needed.

The parameter $\beta_i^m$ is thus defined algebraically as follows:

$$\beta_i^m \equiv \ln\left(\frac{C_{i,\max}^m}{C_{i,\min}^m}\right) \qquad (26)$$

where $C_{i,\max}^m$ represents the time-averaged maximum concentration of component $i$ in zone $m$.

$\beta$ values can be derived with knowledge of the purity and yield of one of the components to be separated in a two component system, or with knowledge of the yield of all components (or fractions) in an N component system. Alternatively, $\beta$ values can be derived with knowledge of the purity of the two components to be separated through mass balance analyses, because knowledge of the purity of the two components to be separated confers knowledge of purity and yield of both of the components to be separated, and vice versa.

A detailed method of determining the decay coefficients for each component is provided in the examples hereto. For many systems, however, an approximate $\beta$ value will suffice. The $\beta$ values can be approximated by assuming that the concentration of component 1 at the raffinate port is the same as that at the inlet to zone III $(c_1^{III})$ (i.e., zone I is assumed to be almost saturated). Also, the concentration ratio of the two components at the inlet of zone I $(c_1^{III}/c_2^{III})$ can

be assumed to be the same as the ratio in the feed. If the components have the same feed concentrations, $\beta_2^{III} = \beta_1^{II}$, the purity should be the same for both products.

In order to have a physically meaningful solution for v, the following equation (27) must be satisfied:

$$P^2(\delta_{j+1} - \delta_j)^2 - 4\left(\frac{P\beta_{j+1}^{III}\delta_{j+1}^2}{K_{f,j+1}^{III}L^{III}} + \frac{P\beta_j^{II}\delta_j^2}{K_{f,j}^{II}L^{II}}\right)\left(\frac{F^{feed}}{\varepsilon_b S} + \frac{\beta_{j+1}^{III}E_{b,j+1}^{III}}{L^{III}} + \frac{\beta_j^{II}E_{b,j}^{II}}{L^{II}}\right) \geq 0 \quad (27)$$

From equation 27, if the lengths of zones I through IV are known, the maximum β values can be obtained by letting $F^{feed}$ equal zero. If β values are fixed, the maximum $F^{feed}$ can be obtained by letting the left side of the equation equal zero. Once again, it should be noted that the $F^{feed}$ determined from these equations defines the lowest desorbent flow rate for the $F^{feed}$ because $u_0^{IV}$ is the highest and $u_0^{I}$ is the lowest among all the feasible designs that guarantee separation.

If product purities (i.e. the purity of the split components in the extract and raffinate), column cross sectional area (S), zone lengths, and feed flow rate are specified, equations 19 and 21-24 can be used to find the four linear velocities and the port movement velocity. These equations define the standing wave conditions when both $E_b$ and $K_f$ are significant. Also, they define the maximum linear velocities for zones III and IV and the minimum linear velocities for zones I and II for a system with linear isotherms. Any lower velocities in zone III and IV and higher velocities in zone I and II result in better than specified product purities and recoveries. However, such designs will have lower throughput or higher desorbent consumption than the standing wave design.

These equations can also be used to find either the maximum throughput or the minimum desorbent consumption. Throughput and desorbent consumption are defined in the following equations:

$$Throughput = \frac{F^{feed}}{BV} \qquad (28)$$

$$Desorbent\ consumption = \frac{F^{des}}{F^{feed}c_i^{feed}} = \frac{\gamma}{c_i^{feed}} \qquad (29)$$

where BV is the total bed volume, $c_i^{feed}$ is the concentration of component i (product) in the feed, and $\gamma$ is the ratio of desorbent flow rate to feed flow rate. The higher the feed flow rate, the higher the throughput. The higher the ratio of desorbent flow rate to feed flow rate, the higher the desorbent consumption.

Once again, if a pseudo-binary split is contemplated, in which the desired component is the fastest or slowest component of a multicomponent mixture, then equations 19 and 21-24 would need to be appropriately modified. In particular, if the desired component was the fastest component, then the retention factor and mass transfer correction term for component 1 would be used to determine the mobile phase velocity in zone II. Alternatively, if the desired component was the slowest component, the retention factor and mass transfer correction term for component N would be used to determine the mobile phase velocity in zone III.

The foregoing discoveries thus provide a number of general methods used in the design of simulated moving beds that support distinct, independent embodiments of the present invention. All of these methods can be used to arrive at a hypothetical SMB design, which can be used in the operation or computer simulation of an SMB.

Thus, in one embodiment the invention provides a method of designing an SMB for separating a desired fraction or component from a first fraction or component, in a multicomponent mixture of components numbered 1 ... j, j+1, ... N, from lowest to highest affinity, comprising:

a) providing equations that relate the design, operating, and intrinsic engineering parameters of a SMB that displays linear isotherms, wherein the equations assume standing wave conditions for all zones in the SMB;
b) prescribing a first set of design and operating parameters sufficient to determine the intrinsic engineering parameters and to solve the equations for resolving the multicomponent mixture in a first SMB; and

c) resolving the equations.

In a four zone multicomponent separation the equations preferably assume the following standing wave conditions: in zone I: the desorption wave of component $N$, in zone II: the desorption wave of component $j$; in zone III: the adsorption wave of component $j+1$; and in zone IV: the adsorption wave of component 1; wherein the components are numbered 1 ... $j, j+1, ... N$ in order of increasing affinity for the stationary phase, and a split is desired between components $j$ and $j+1$. In a five zone SMB the standing wave conditions for the first ring described in strategy S6 in Tables 1 and 2 is preferably observed (when a split is desired between components $j$ and $j+1$). In a two ring SMB, the standing wave conditions set forth for strategies S1-S6 in Tables 1 and 2 are preferably observed.

The concentration waves remain standing in the sense that the adsorption waves and desorption waves in the system, when plotted in a two dimensional graph that relates component concentrations to bed position (see, Figure 6b), are assumed to remain standing as if in a continuous moving bed. In reality, the waves will migrate at a continuous rate into the successive zone until brought back to their respective zones by a port movement. Generally speaking, however, it has been determined experimentally and by using computer simulations that increasing the frequency of movement, and increasing the number of columns in the separation zones (zones I and II), overcomes this problem.

From an algebraic standpoint, the waves remain standing in the sense that the equations define an ideal mobile phase velocity and port movement velocity for a given rate of feed, modified to account for wave spreading due to mass transfer effects. In zones I and II, the mobile phase velocity is increased to compensate for the wave spreading, and in zones III and IV, the mobile phase velocity is decreased to compensate for the wave spreading.

As mentioned above, one of the primary advantages of the present invention is the ability simply to resolve a set of algebraic equations to identify all of the operating parameters of an SMB, including the minimum desorbent use. Thus, in yet another embodiment the invention provides a method of designing an SMB for separating insulin from a first fraction or component, in a multicomponent mixture, comprising:

a) providing equations that relate the design, operating, and intrinsic engineering parameters understanding wave conditions of a SMB that displays linear isotherms,
b) prescribing a first set of design and operating parameters sufficient to determine the intrinsic engineering parameters and to solve the equations for resolving the multicomponent mixture in a first SMB; and
c) resolving the equations;

wherein the equations define the minimum rate of desorbent use for a given rate of feed.

In another embodiment, the invention provides methods of designing SMBs for purifying insulin using the splitting rules of the present invention. Thus, in yet another embodiment the invention provides a method of designing and operating a SMB understanding wave conditions for separating insulin from a fast component or fraction and a slow component or fraction, wherein the SMB comprises first and second rings, comprising:

a) providing splitting rules which provide:

i) when only the desired component or fraction is purified, allowing the fast or slow component or fraction to distribute in the first ring;
ii) when the fast and/or slow component and/or fraction are purified, perform the easiest split in the first ring;

b) selecting a splitting strategy based upon whether one or more of the fast or slow components and/or fractions is purified; and operating the SMB using the selected splitting strategy.

*Fronting and Extra-Column Effects:* The SMBs of the present invention can also be designed to accommodate fronting and extra-column effects, in addition to intra-column mass transfer effects. Thus, in another embodiment the separations achieved in the various methods of this invention are hindered by non-ideal flow effects such as non-negligible fronting and/or extra-column effects (see Definitions section for explanation). Separation is hindered by fronting and/or extra-column effects if such effects would cause significant contamination among zones, but for the design of the system to account for the effects. In numeric terms, extra-column effects are considered non-negligible if, when assessed according to the methods prescribed below, they cause $\delta_i$ for a standing wave in any zone to change by more than 1%, 2%, 5%, 10%, or 20% from the value it would have assumed but for the extra-column effects. Fronting and/or extra-column effects are also considered non-negligible if, when assessed according to the methods prescribed below, they cause the mass transfer correction term for the standing wave of component $i$ in any zone to change by more than 1%, 5%, 20%, 50%, 200%, or 1000% from the value it would have assumed but for the fronting and/or extra-column effects.

To design systems with significant fronting and extra column dead volume, equations 19 and 21-24 can be suitably modified to take into account the increase in wave retention time and additional wave spreading caused by these phenomena. The increase in retention time in linear systems can be taken into account by adding the time for a wave to go through the extra-column dead volume to the retention factor δ. For size exclusion systems a modified retention factor $\delta_i^{\bullet}$ can be used as follows:

$$\delta_i^{\bullet} = Ke_i \varepsilon_p + \left(1 - \varepsilon_p\right)a_i + \frac{V_{CSTR}^{\bullet}}{P} \tag{30}$$

$$V_{CSTR}^{\bullet} = \frac{V_{CSTR}}{L_c S \varepsilon_b} \tag{31}$$

where $u_0$ is the interstitial velocity, S is the column cross sectional area, $V_{CSTR}$ is the extra-column dead volume associated with each column (which can be modeled as a continuous stirred tank reactor), $P(\equiv \dfrac{1 - \varepsilon_b}{\varepsilon_b})$ is the bed phase ratio, $\varepsilon_b$ is the interstitial bed void fraction, $\varepsilon_p$ is the intraparticle void fraction, and $L_c$ is the column length.

The additional wave spreading due to dispersion in extra-column dead volume or fronting can be taken into account by multiplying by a factor f the intra-column dispersion coefficient $E_b$ in each zone, which is estimated from a literature correlation of Chung and Wen (1968) for flow in a uniformly packed column. This factor can be estimated from batch chromatography data or from SMB data. This factor can range from unity in a pilot scale SMB from U.S. Filter, to as high as 200 in some SMBs from AST (Advanced Separation Technologies).

Thus, fronting and extra-column effects in a four zone SMB can be taken into account by the following equations:

$$u_0^I - (1 + P\delta_N^{\bullet})v = \beta_N^I \left(\frac{f^I E_{b,N}^I}{L^I} + \frac{Pv^2 \left(\delta_N^{\bullet}\right)^2}{K_{f,N}^I L^I}\right) \tag{32}$$

$$u_0^{II} - (1 + P\delta_j^{\bullet})v = \beta_j^{II} \left(\frac{f^{II} E_{b,j}^{II}}{L^{II}} + \frac{Pv^2 \left(\delta_j^{\bullet}\right)^2}{K_{f,j}^{II} L^{II}}\right) \tag{33}$$

$$u_0^{III} - (1 + P\delta_{j+1}^{\bullet})v = -\beta_{j+1}^{III} \left(\frac{f^{III} E_{b,j+1}^{III}}{L^{III}} + \frac{Pv^2 \left(\delta_{j+1}^{\bullet}\right)^2}{K_{f,j+1}^{III} L^{III}}\right) \tag{34}$$

$$u_0^{IV} - (1 + P\delta_1^{\bullet})v = -\beta_1^{IV} \left(\frac{f^{IV} E_{b,1}^{IV}}{L^{IV}} + \frac{Pv^2 \left(\delta_1^{\bullet}\right)^2}{K_{f,1}^{IV} L^{IV}}\right) \tag{35}$$

In general, the factor f can take into account the dispersion due to fronting, tailing, or other non-ideal flow effects.

## Design Optimization

One of the most significant advantages of the design method of the present invention is the ability to screen with relative ease design and operating variables to arrive at a SMB that is most economically efficient. The method can be used to optimize SMB separations of binary and multicomponent mixtures. As discussed in the background section of this document, the prior art only provided equations from which one could derive the triangular region of separations for an ideal system (which in turn defined the relative velocities of port movement and mobile phase in zones II and III of the SMB). Any further design of the system to account for mass transfer effects, or to identify the minimum desorbent consumption, required one to perform lengthy and complex computer simulations or expensive experimental trials. If one then desired to screen other SMB designs by, for example, altering the column configurations, the desorbent/adsorbent combination, or the adsorbent particle sizes, to improve the efficiency of the system, one was then required to rerun the computer simulations all over, for each potential variation.

The design equations of the present invention simplify this process by several orders of magnitude, by reducing all of the variables associated with the design of an SMB to a simplified set of five equations 19 and 21-24. By resolving equations 19 and 21-24 one is able to arrive at the complete set of operating conditions for an SMB for separating multicomponent mixtures, in a non-ideal system under linear adsorption isotherms.

Thus, depending on what is known about or assumed for a particular system, one can reiteratively explore various separation strategies to find the most economic configuration, by varying any of the following parameters:

- Purity and/or Yield (if not specified)
- Mobile Phase / Stationary Phase Combination
- Splitting Strategies
- Zone Lengths
- Feed Flow Rate
- Column Length
- Particle Size

A schematic drawing that shows the interrelationship of these various parameters is contained in Figure 8. Generally speaking, one first assumes a number of design and operating parameters, performs some initial tests and calculations to determine retention and mass transfer parameters, and performs some initial calculations to determine maximum pressure drop allowable by the adsorbent (and hence maximum interstitial velocity). From these initial assumptions and determinations, one is able to perform the standing wave analysis to determine the maximum feed flow rate, maximum feed concentrations, the zone flow rates, and the port movement velocity of the SMB which will achieve a prescribed separation.

Once a base system has been evaluated, any of the design or operating parameters can be varied to determine whether other systems might be more economically efficient. The standing wave design eliminates the need to perform complex computer simulations each time any of the design or operating parameters is varied, and allows variations to be evaluated simply by iteratively resolving the standing wave equations for each choice of variables (after performing any calculations or experiments needed to derive a new set of engineering parameters). Once these iterations have been performed, one is able to compare the throughput of the system per bed volume and the rate of solvent consumption for each SMB system being evaluated. Because throughput and solvent consumption are the dominant considerations when evaluating the economic efficiency of a particular SMB system, on both an operating and capital cost basis, they can be used to screen the various systems for economic efficiency.

Thus, the invention provides several embodiments for optimizing SMBs using the design equations of the present invention, varying a number of the design parameters. In one particular embodiment the invention provides a method of optimizing a non-ideal SMB system for purifying insulin that displays linear isotherms comprising:

a) providing equations that relate the design, operating, and intrinsic engineering parameters understanding wave conditions of an SMB;

b) prescribing a first set of design and operating parameters sufficient to determine the intrinsic engineering parameters and to resolve the equations for a first SMB;

c) prescribing a second set of design and operating parameters sufficient to determine the intrinsic engineering parameters and to resolve the equations for a second SMB; and

d) evaluating and comparing the economic efficiency of the two or more SMBs.

The standing wave conditions are preferably observed in the equations used in the foregoing design. Moreover, the equations preferably define the minimum desorbent to feed ratio for a given feed flow rate.

As discussed above, the design parameters are preferably selected from: zone length, desorbent type, adsorbent type, adsorbent particle size, and splitting strategy, and the foregoing method can be used to screen variations in any of these design parameters. Of course, in many systems alternative splitting strategies need not be explored, because of the splitting rules already established by the present invention. Also, because the standing wave equations define the maximum feed flow rate for a given desorbent flow rate, or minimum desorbent flow rate for a given feed flow rate, the equations eliminate the need to vary the feed flow rate or the desorbent flow rate when performing the design.

With respect to zone length, it should be noted that zone length has three components: the length of columns used in the SMB, the number of columns employed, and the allocation of columns among the zones. Variability in any of these components can be explored using the design method of the present invention, as discussed more fully below.

The operating parameters integrated into the above equations are preferably selected from: zone flow rates, port movement velocity, feed flow rate, desorbent flow rate. Again, any of these parameters can be varied in the screening process of this invention to optimize the SMB.

The intrinsic engineering parameters for a nonideal system that displays linear adsorption isotherms are the mass transfer parameters and the retention parameters. As discussed above, these parameters can be well modeled and accounted for in the equations by the axial dispersion coefficient $E_b$ and the lumped mass transfer coefficient $K_f$. Similarly, the retention parameters can be well represented in the equations by the term $\delta$, because this term accounts for all retention phenomena (size exclusion and adsorption) in a linear relationship. However, it will be understood that various equations and variables are defined in the field of chemical engineering to model the effects of mass transfer, or the relative retention of components in a linear chromatographic process, and the invention is intended to encompass all such equations and variables.

A straightforward approach to optimizing the economic efficiency of a system is set forth in the examples hereto. One of the principal features of this approach is to first determine maximum mobile phase velocity allowed by the adsorbent or the SMB equipment, because the SMB must be operated at the maximum allowable mobile phase velocity in order to maximize throughput for the system (i.e. within about 85, 90, 95, 97, 98%, or 99% of the maximum allowable mobile phase velocity). Most adsorbents and SMB equipment (valves, columns, connectors, and pumps) have a maximum pressure limit or a maximum flow rate limit. One can calculate from the standing wave equations (equations 19, 21-24, and 27) the max feed flow rate and the mobile phase velocities that can meet the purity requirement. The velocity in each zone should not exceed the corresponding maximum velocity calculated from the pressure or flow rate limit. If this condition is not satisfied, the feed flow rate in the standing wave equations (equations 19 and 21-24) is reduced until this condition is satisfied. In a like manner, one can start with a mobile phase velocity of a lesser percentage of the maximum flow rate limit, such as 50%, to arrive at the operating parameters.

Other variables can often be fixed at the outset to further minimize the number of variables that must be explored when optimizing the SMB system. For example, feed flow rate may be fixed because of the output requirements or raw material production constraints of the manufacturer. Similarly, in many instances the cost of the raw material will be so high, and the purity requirements so demanding (such as in pharmaceutical applications), that product purity and yield will essentially be dictated at the outset.

### EXAMPLES

### Example 1 - Pilot Scale Purification of Insulin from Zinc Chloride/High Molecular Weight Protein Mixture

*Materials:* Insulin feed used in the single column and the SMB experiments was provided in a broth containing HMWP/HPI, insulin, $ZnCl_2$, and water. Glacial acetic acid was purchased from Mallinckrodt Baker Inc. (Paris, KY) and pure ethanol from Pharmaco Products Inc. (Brookfield, CT). Distilled deionized water (DDW) was obtained through a Milli-Q system by Millipore (Bedford, MA). HPLC-grade acetonitrile was purchased from Fisher Scientific (Fairlawn, NJ). Sulfate buffer was prepared from sodium sulfate and 85% phosphoric acid, which were purchased from Mallinckrodt Baker Inc. Sodium chloride and zinc chloride were also purchased from Mallinckrodt Baker Inc. Blue dextran used in bed porosity determination was purchased from Sigma Chemical Co. (St. Louis, MO). The gel particles have an average radius of 54 $\mu m$. All the columns and fittings were purchased from Ace Glass Inc. (Louisville, KY). The columns are 5.10 cm in diameter and 13.7 cm in packing length.

A Vydac C-18 HPLC column (25cm $\times$ 4.6 mm) for protein and peptide analysis was purchased from Vydac Co. (Hesperia, CA) and used to determine the concentration of BHI (Biosynthetic Human Insulin). A Waters insulin HMWP HPLC column (30cm $\times$ 7.8 mm) was purchased from Millipore Corp. (Milford, MA) and used to determine the concentration of HMWP.

*Equipment :* The HPLC system consists of two pumps (Waters 510), a tunable single-wavelength detector (Waters 486) and an injector (Waters U6K). A Pharmacia (Piscataway, NJ) fast protein liquid chromatography (FPLC) system was used in the single column experiments. This system consists of two pumps (Pharmacia P-500), a liquid chromatography controller (Pharmacia LCC-500), and an injection valve (Pharmacia MV-7). A lab-scale SMB unit was manufactured by Advanced Separation Technology (Lakeland, FL). It consists of a controller for the adjustment of the switching time and a frame that supports a rotation gear, a drive assembly, and a column rack. Two single-piston pumps (Model RHV) purchased from Fluid Metering Inc. (Syosset, NY) were used to control the flow rates for Zone II and Zone IV. The flow rates of the feed and desorbent were controlled by two FPLC pumps. The flow rates were reproducible and controlled to within$\pm$1%.

*Column preparation:* About 150 g of Sephadex G50 resin was slowly fed into a vessel containing 1.8 L of DDW. The vessel was rotated at 70 RPM for half an hour and then at 110 RPM for nine and a half hours to ensure complete mixing of the resin with DDW. DDW was decanted and 1N acetic acid was slowly added to the resin and agitated for 50 minutes. Then, the supernatant was decanted and the wet resin was transferred to a glass column, where it was washed with 1 N acetic acid. After repeating the washing step four times, the resin was slurried in 1 N acetic acid before column packing.

All columns were supplied by Ace Glass Company and designed to give 13.7cm packing height. Each column was connected with a column extender for packing convenience. The extended column was filled with 0.5 BV of 1N acetic acid. Resin slurry was poured into the column until it reached approximately 2/3 of the extended column. Excess liquid on the top of the resin packing was removed. At this point, the resin packing should be 0.8 cm higher than the target packing height and the weight of the packed column was measured in order to keep uniformity in the weight of each column. Note that the weight measured at this point is higher than the weight of final packed column, since the resin packing is higher than the target height. A solution of 20% ethanol was fed into the column until it filled 3/4 of the extended column. The dispersion was well mixed by shaking the column. The resin was then allowed to settle. When one inch of liquid head formed above the resin, the liquid was removed from the bottom of the column using a vacuum pump. Once most of the liquid was removed, the column was disconnected from the extender and attached to a pump (FPLC pump, Pharmacia) to continue the packing process. A solution of 1N acetic acid was allowed to upflow through the column at a flow rate of 1mL/min for 50min. The flow rate was gradually increased every 15 minutes to the maximum flow rate (9 mL/min). After 30 minutes at the maximum flow rate, the direction of flow was changed to downflow. The flow rate was again increased in the same way as for upflow. At the maximum flow rate, downflow lasted for 50 minutes.

The HETP (Height Equivalent to Theoretical Plate) test was performed in order to check the column efficiency for each column. A 2-mL pulse of sodium chloride (5g/L in 1N acetic acid) was injected into the column, followed by elution with IN acetic acid at the maximum flow rate. Since the conductivity detector has a relatively high flow resistance, the column effluent was split into two streams in a ratio of 8 to 1. The split is needed to keep the pressure drop in the column below 6.89 bar (100 psi). The smaller stream was passed through the conductivity detector. Finally, the Number of Theoretical Plates (N) was determined from the conductivity peak with a target of greater than 150 plates.

*Single-Column Experiments:* All experiments, including the SMB experiments were carried out at atmospheric pressure (1bar) and cold room temperature (4°C). The feed solution was equilibrated at 4 °C and used within 12 hours after the feed preparation. Before the experiments, the columns were equilibrated with 1 N acetic acid. Extra-column dead volume was determined by measuring dead volumes of the column cap and tubing separately. For the determination of dead volume of the column cap, the amount of water that filled in the cap was measured. Dead volume of the tubing was measured by a pulse test without the column after each single column experiment.

To perform pulse tests, a 2-mL loop was connected to the injection valve (Pharmacia MV-7). In the load position, the loop was filled with a feed solution. The eluent flow rate was controlled by a controller (Pharmacia LCC-500). Then the injection valve was switched to the inject position by the controller in order to start the injection. Data recording was started simultaneously. Three pulse tests were carried out: NaCl, $ZnCl_2$ and BHI. The concentrations of BHI were detected by the UV detector at 294 nm. All pulse tests were performed at a flow rate of 6 mL/min.

For frontal tests, 1 N acetic acid was used for column equilibration, followed by feeding the BHI solution into the column. After a concentration plateau appeared at the column outlet, 1 N acetic acid was used to wash the column. Because of the high BHI concentration, the effluent was monitored at the wavelength of 306 nm. Three frontal tests were carried out, each at different flow rates, 2.0 mL/min, 4.0 mL/min, and 8.1 mL/min.

For multiple frontal tests, both FPLC pumps were used. One pump delivered 1N acetic acid and the other BHI solution. The two streams were mixed before entering the column. The total flow rate for the mixed stream was kept constant at 6 mL/min. Various BHI compositions (20%, 40%, 60%, 80% and 100%) were obtained by changing the ratio of the two streams. The ratio was changed only after a concentration plateau appeared at the column outlet. The column effluent was monitored at 310 nm using a UV detector.

*SMB experiments:* The 10 columns in the SMB were packed with Sephadex G50 resin using the aforementioned method. The column configuration was either 2-3-3-2 (there were 2, 3, 3, and 2 columns in Zones I, II, III, and IV, respectively) or 2-2-4-2. The extra-column dead volume was determined by measuring the amount of water that filled in the tubing and rotary valve. Before each SMB experiment, the flow rates of the four pumps were set manually and were checked later periodically during the experiment to ensure accuracy. The switching time was set using the SMB controller. The experiment was started by turning on the pumps simultaneously. Feed and desorbent were continuously pumped into the columns. The feed for Ring I was prepared by dissolving crude insulin powder (containing $ZnCl_2$) in an HMWP broth. The feed for Ring II was a binary mixture of BHI and $ZnCl_2$, which was made by dissolving the crude insulin powder in 1 N acetic acid. The desorbent was 1 N acetic acid. Samples were collected from the extract port and the raffinate port over an entire switching period (between two switches). Therefore, the concentration of each sample represents the average concentration over a switching period. The Ring I experiments were stopped in the middle of the 45th step and the Ring II experiment was stopped in the middle of the 61st step. Zone profiles were then obtained by collecting samples at the sampling ports, which were located at each column outlet.

*Column characterization:* The results of column characterization are listed in Table 4. The Number of Theoretical Plates (N) of all columns estimated from the NaCl pulse tests were found to be greater than 150 plates.

Table 4. Summary of the Results of Column Characterization

| Column name | Weight* (g) | Retention time of NaCl (min) | N (plates) |
|---|---|---|---|
| Column A | 308.3 | 28.85 | 371 |
| Column B | 313.2 | 28.91 | 691 |
| Column C | 314.1 | 28.93 | 606 |
| Column D | 310.2 | 28.90 | 518 |
| Column E | 308.0 | 28.88 | 563 |
| Column F | 308.6 | 28.82 | 416 |
| Column G | 309.7 | 28.89 | 670 |
| Column H | 309.2 | 28.88 | 670 |
| Column I | 307.5 | 28.83 | 478 |
| Column J | 310.4 | 28.89 | 500 |
| Average | 309.9 | 28.88 | |
| Max. Deviation | 1.3% | 0.21% | |
| *The weight refers to the packing weight for an intermediate packing volume of 304 mL, which is larger than the final bed volume (280 mL). | | | |

*Pulse tests*: The chromatograms of the pulse tests are shown in Figure 9. The elution volume of each pulse is estimated from the mass center of the chromatogram and is used to determine the column properties and size exclusion factors. Note that the extra-column dead volume is subtracted to obtain the net elution volume through the column.

The elution volume of a blue dextran pulse is the inter-particle volume or void volume ($V_0$), because the blue dextran molecule is much larger than the average resin pore size and is totally excluded from the particle. The bed voidage, $\varepsilon_b$, is calculated from the void volume as follows:

$$\varepsilon_b = \frac{V_0}{BV} \tag{36}$$

where *BV* is the bed volume (mL).

The NaCl molecule is smaller than the molecule of HPI, BBI, or $ZnCl_2$, and is chosen as the tracer to estimate intra-particle volume. The total void volume ($V_t$) including inter-particle and intra-particle volume is obtained from the NaCl pulse. Combined with the void volume, the total void volume can be used to calculate the particle porosity, $\varepsilon_p$.

$$\varepsilon_p = \frac{V_t - V_0}{BV - V_0} \tag{37}$$

With the bed voidage ($\varepsilon_b$) and the particle porosity ($\varepsilon_p$), the size exclusion factors of BHI and $ZnCl_2$ can be estimated as follows:

$$Ke = \frac{\dfrac{V_e}{BV} - \varepsilon_b}{(1 - \varepsilon_b)\varepsilon_p} \qquad (38)$$

where $Ke$ is the size exclusion factor and $V_e$ is the elution volume of BHI or $ZnCl_2$. The values of $\varepsilon_b$, $\varepsilon_p$, the extra-column dead volume, and Ke are listed in Table 5.

Table 5. Summary of the Results of the Pulse Tests in the Lab and Plant Scale Columns

|  | $\varepsilon_b$ | $\varepsilon_p$ | *Ke* of BHI* | *Ke* of $ZnCl_2$ | Extra-column dead volume | Single bed volume |
|---|---|---|---|---|---|---|
| Lab-scale | 0.35 | 0.89 | 0.68 | 0.99 | 11.1 mL | 280 mL |
| Plant-scale | 0.35 | 0.89 | 0.74 | 0.99 |  |  |
| *The *Ke* estimated from the lab-scale column with a small pulse, in which the peak concentration is very low, is close to intrinsic *Ke*. The *Ke* for the plant-scale column is an apparent Ke, which is concentration-dependent. | | | | | | |

The estimated column properties and size exclusion factors for the lab-scale columns (Table 5) were applied to a detailed rate model, VERSE, to simulate the data of the lab-scale experiments. The mass-transfer and numerical parameters used in the simulations are listed in Table 6. The simulated chromatograms are in good agreement with the experimental data as shown in Figure 9.

*Saturation and elution tests:* During the pulse test of BHI, the injected BHI solution is diluted by more than 25-fold because the feed volume is only 2 mL (0.7% bed volume). The dilution in SMB, however, is usually much less than the associated batch chromatography process. In addition, the operation of SMB is similar to a long pulse, i.e. a large amount of loading followed by elution. For these reasons, long pulse tests including saturation with BHI solution and elution with 1 N acetic acid were conducted.

Table 6. Mass Transfer and Numerical Parameters Used in the Simulations of This Study

|  | Mass transfer parameters | | | |
|---|---|---|---|---|
|  | Blue dextran* | NaCl* | BHI** | $ZnCl_2$** |
| $D_\infty$(cm$^2$/min) | $2.21 \times 10^{-5}$ | $4.88 \times 10^{-4}$ | $5.49 \times 10^{-5}$ | $3.96 \times 10^{-4}$ |
| $D_p$(cm$^2$/min) | - | $3.53 \times 10^{-4}$ | $2.29 \times 10^{-5}$ | $1.65 \times 10^{-4}$ |
| $K_f$ (cm/min) | The Wilson and Geankoplis correlation (1966) | | | |
| $E_b$ (cm$^2$/min) | The Chung and Wen correlation (1968) | | | |
| Numerical parameters | | | | |
| Axial elements per column | Collocation points | | Absolute tolerance | Relative tolerance |
|  | Axial | Particle |  |  |
| 50 | 4 | 2 | 0.0001 | 0.001 |
| * $D_\infty$'s of blue dextran and NaCl are obtained from Hritzko et al. (1999) and adjusted with temperature and viscosity using the Wilke and Chang (1955) correlation. $D_p$ of NaCl is estimated from the Mackie and Meares correlation (1955). | | | | |
| ** $D_\infty$'s and of BHI and $ZnCl_2$ are obtained from the Wilke and Chang (1955) correlation. $D_p$'s ofBHI and $ZnCl_2$ are obtained by fitting the data with VERSE simulations. | | | | |

Figure 10 shows the chromatograms of the saturation and elution tests at three different flow rates and the results of the simulations (dashed lines) with the intrinsic *Ke* estimated from the small pulse test (Table 5). The simulated chromatograms are ahead of the data for both loading and elution processes at all three flow rates.

*Multiple frontal test:* A multiple frontal test was first conducted without the column. This test is to determine the extra-column dead volume and to obtain the calibration curve of UV absorbance as a function of concentration. The chromatogram shown in Figure 11a is used to estimate the dead volume present in the mixer and the connecting tubing. The dead time of each frontal obtained without the column is subtracted from the breakthrough time of the corresponding frontal obtained with the column. The chromatogram of the multiple frontal test with the column is shown in Figure 11b.

Following the procedure described by Ma et al. (1996), one can calculate the amount of adsorbed BHI on the resin associated with each plateau concentration. The isotherm adsorption data are shown in Figure 11c. An anti-Langmuir isotherm model was applied to fit the data.

The anti-Langmuir isotherm parameters were used in a simulation to predict the multiple frontal test data. Good agreement between the model prediction and data is shown in Figure 11 b. Since the curvature of the isotherm is quite small, the isotherm can be well represented by a linear adsorption isotherm or an apparent *Ke*, which has a higher value than the intrinsic *Ke*. For this reason, the multiple frontal test data can be simulated with an apparent *Ke*. The simulated chromatograms with adsorption (anti-Langmuir) and with the apparent *Ke* are almost identical (Figure 11b). The value of the apparent *Ke* applied in the simulations is 0.74 (>0.68, the value of the intrinsic *Ke* of BHI).

With the isotherm parameters and the apparent *Ke* of BHI, one can rerun the simulations for the saturation and elution processes (the long pulse). The simulated chromatograms with adsorption and with the apparent *Ke* are closer to the experimental data than the simulations with the intrinsic *Ke* (Figure 10). The experimental frontal waves still lag behind the model prediction because of the excessive adsorption during the initial loading period. The disagreement, however, does not have a negative impact on the design of SMB, because the predicted adsorption wave is ahead of the experimental data.

*SMB experiments:* The extra-column dead volume in the SMB unit was estimated to be 10.4 mL per column or 3.7% of the bed volume. This dead volume was taken into consideration in designing the zone flow rates and switching time of the SMB process. The design results are summarized in Table 7.

The maximum interstitial velocity for the Sephadex G50 resin cannot exceed 1.28 cm/min. For the lab-scale columns (5.1 cm in diameter), the maximum zone flow rate is estimated to be 9 mL/min. This flow rate limit was applied in the design of both Ring I and Ring II with the lab-scale columns. Since the same size columns were used in both Ring I and Ring II experiments, the extract flow rate of Ring I is not matched by the feed flow rate of Ring II as shown in Table 7. This mismatch, which is considered in calculating the overall throughput, however, does not affect the validation of the tandem SMB design and the model.

The SMB experiment Run 1 (Ring I) lasted for 21 hours or 45 cycles. The simulation and experimental data of the effluent histories at the raffinate and extract ports and the mid-cycle column profiles at the final cycle are shown in Figure 12. Close agreement between the model prediction and the experimental data indicates that the column properties and size exclusion factors used in the SMB designs are accurate and the design method is robust, even though the simulations do not accurately predict the data of the batch frontal processes.

Table 7. Operating Conditions Designed to Test the Tandem SMB Process*

| | | Ring I | | Ring II |
|---|---|---|---|---|
| | | Run 1 | Run 2 | Run 3 |
| Zone configuration | | 2-3-3-2 | 2-2-4-2 | 2-3-3-2 |
| Zone flow rates (mL/min) | Zone I | 8.31 | 8.48 | 8.01 |
| | Zone II | 5.01 | 5.13 | 6.85 |
| | Zone III | 8.06 | 7.38 | 7.95 |
| | Zone IV | 4.92 | 5.03 | 6.66 |
| Inlet and outlet flow rates (mL/min) | Feed | 3.05 | 2.25 | 1.10 |
| | Desorbent | 3.39 | 3.46 | 1.35 |
| | Raffinate | 3.13 | 2.36 | 1.29 |
| | Extract | 3.30 | 3.35 | 1.17 |
| Switching time (min) | | 28.0 | 27.4 | 33.7 |
| * The Ke of BHI used in the design is apparent *Ke* (= 0.74) and the extra-column dead volume per column is 10.4 mL per column or 3.7% of the bed volume. | | | | |

Among the SMB Run 1 experimental results, the column profile of BHI (Figure 12c) is the most interesting. In Ring I, slight fronting of BHI is observed in Figure 12c. As a result, a small amount of BHI is lost in the raffinate as shown in Figure 12a. The loss of BHI, however, is only 3% (Table 8), which is much less than that of the reference batch SEC process (11%). The improvement of the yield by SMB Ring I over the reference batch SEC process is attributed to the separation characteristics of SMB, i.e. only partial separation is needed in SMB. The overlapping band remains in the SMB columns. By contrast, the overlapping band is recycled in the batch process.

Table 8. Summary of the Experimental Results ofSMB

| | | Run 1 (Ring I) | Run 2 (Ring I) | Run 3 (Ring II) |
|---|---|---|---|---|
| Impurity in product | HMWP/HPI (ppm) | 0 | 0 | 0 |
| | $ZnCl_2$ (g/g BHI) | - | - | $4 \times 10^{-6}$ |
| Purity (%)* | | 100 | 100 | 100 |
| Yield (%)** | | 97.0 | 99.3 | > 96.7 (99.7)[†] |
| Throughput (L/hr/100L BV) | | 6.54 | 4.82 | 2.36 |
| Solvent consumption (L/Kg BHI) | | 32.2 | 18.5 | 18.3 |
| Overall yield (%) | | > 96.0 (99.0)[†] | | |
| Overall throughput (L/hr/100L BV) | | 1.19 | | |
| Overall solvent consumption (L/Kg BHI) | | 42.0 | | |
| * The purity in Ring I is defined as $(C_{BHI} + C_{ZnCl_2})/(C_{BHI} + C_{ZnCl_2} + C_{HMWP}) \times 100\%$.<br>** The yield was estimated with the concentration averaged over one switching period of the final cycle.<br>[†] The Ring II experiment (Run 3) did not reach the cyclic steady state. The values in the parentheses were estimated from the simulations at cyclic steady state. | | | | |

The fronting of BHI in Zone III of Ring I can be simulated by using a larger axial dispersion coefficient ($E_b$). The results of the simulations with different $E_b$'s for BHI in Zone III are plotted in Figure 13. As the $E_b$ increases, the loss of BHI in the raffinate increases (Figure 13a) and the adsorption wave of BHI in Zone III spreads out (Figure 13c). Figure 13 shows that the breakthrough curve of BHI in the raffinate can be well predicted when $E_b$ value is 40 times as large as that estimated from the Chung and Wen correlation (1968). To reduce the loss of BHI in Ring I, the fronting should be considered and the fitted $E_b$ value should be used in the standing wave design.

Table 9 shows the results of Ring I design, in which the fronting of BHI is considered by using the fitted $E_b$ (40 times as large as that estimated from the Chung and Wen correlation). Different zone configuration was investigated in the standing wave design. To reduce the difference between the true moving bed and the simulated moving bed, at least 2 columns are needed for each zone. For some zone configurations, there are no feasible operating conditions that can meet the yield requirement (99.99% for BHI). Among the three zone configurations that can meet the high yield requirement, 2-2-4-2 gives the lowest solvent consumption (desorbent to feed ratio) as shown in Table 9. To verify the design results, VERSE simulations were conducted. The simulation results are listed in Table 10.

The zone configuration of 2-2-4-2 and the associated operating parameters listed in Table 9 was then applied in the SMB experiment Run 2. The experimental data and simulation results are shown in Figure 14. Compared with Figure 12a, Figure 14a shows that the loss of BHI in the raffinate is significantly reduced. As a result, the yield of BHI increases from 97.0% in Run 1 to 99.3% in Run 2 (Table 8). The fronting of BHI in Zone III is well predicted and the adsorption wave of BHI is confined within Zone III as shown in Figure 14c. This result indicates that a well-designed SMB is able to overcome the BHI fronting. Furthermore, the close agreement between the data and model prediction proves that the model-based design approach including standing wave design and the VERSE simulation is efficient.

Table 9. Standing Wave Design Results for Ring I with BHI $E_b$ in Zone III = 40 C&W*

| Zone configuration | Zone flow rate (mL/min) | | | | Switching time (min) | Desorbent /Feed |
|---|---|---|---|---|---|---|
| | I | II | III | IV | | |
| 4-2-2-2 | Not feasible for the desired purity and yield | | | | | |
| 2-4-2-2 | Not feasible for the desired purity and yield | | | | | |
| 2-2-4-2 | 8.48 | 5.13 | 7.38 | 5.03 | 27.4 | 1.54 |
| 2-2-2-4 | Not feasible for the desired purity and yield | | | | | |
| 3-3-2-2 | Not feasible for the desired purity and yield | | | | | |

(continued)

| Zone configuration | Zone flow rate (mL/min) | | | | Switching time (min) | Desorbent /Feed |
|---|---|---|---|---|---|---|
| | I | II | III | IV | | |
| 3-2-3-2 | 8.48 | 5.17 | 7.17 | 5.05 | 27.2 | 1.72 |
| 3-2-2-3 | Not feasible for the desired purity and yield | | | | | |
| 2-3-3-2 | Not feasible for the desired purity and yield | | | | | |
| 2-3-2-3 | Not feasible for the desired purity and yield | | | | | |
| 2-2-3-3 | 8.47 | 5.13 | 7.12 | 5.04 | 27.4 | 1.73 |
| *C&W stands tor the value estimated from the Chung and Wen correlation. Zone flow rates are less than 8.5 mL/min, which is 5% lower than the theoretical maximum value. | | | | | | |

Table 10. Summary of Simulation Results of Ring I with BHI $E_b$ in Zone III = 40 C&W

| Zone configuration | Concentration in extract* | | | Yield (%) | Mass balance (%)** |
|---|---|---|---|---|---|
| | $C_{BHI}/C_{F,BHI}$ | $C_{HMWP}/C_{F,HMW P}$ | $C_{HMWP}/C_{BHI}$ (mg/kg) | | |
| 2-2-3-3 | 0.592 | $1.91 \times 10^{-4}$ | 1.09 | 99.7 | 99.7 |
| 2-2-4-2 | 0.668 | $3.29 \times 10^{-4}$ | 1.66 | 99.4 | 99.4 |
| 3-2-3-2 | 0.597 | $12.7 \times 10^{-4}$ | 7.18 | 99.1 | 99.1 |
| *The subscript "F" represents feed. **Simulation finished at the end of $50^{th}$ cycle. | | | | | |

The Ring II SMB experiment (Run 3) was carried out after the Ring I SMB experiments. The operating conditions of Ring II are listed in Table 7. The experimental results of Ring II are summarized in Table 8 and effluent histories and column profiles are plotted in Figure 15. The model predication is verified again with the experimental data (Figure 15). Note that the Ring II experiment (Run 3) did not reach cyclic steady state and the BHI concentration at the final step (the $61^{st}$ step) was used to calculate the yield. Since the model is verified with the transient data, the model predicted concentration at cyclic steady state (after 150 steps) can be used to estimate the actual yield. The estimated yield is listed in the parentheses in Table 8. The BHI concentration at cyclic steady state is higher than that at transient state. For this reason, the yield at cyclic state is higher than that at the $61^{st}$ step.

The overall yield, throughput, and solvent consumption of the Ring I and Ring II SMB experiments (Run 2 and Run 3) were calculated. The overall yield is the product of the yields of SMB Run 2 and Run 3.

Since the extract flow rate of Ring I is higher than the feed flow rate of Ring II, more resin are needed in Ring II than in Ring I such that Ring I and Ring II can be operated in tandem. This can be done by increasing the diameters of the columns in Ring II while keeping the interstitial velocities the same as those in the Ring II experiment. For this reason, the overall throughput (per 100 L bed volume) of the tandem SMB experiments was calculated as follows:

$$\frac{F_F}{\left(1 + \frac{F_E^{Ring\,I}}{F_F^{Ring\,II}}\right) \times (10BV)} \times (60\,min/hr \times 100\,L) \qquad (39)$$

where $F_F$ is the feed flow rate (mL/min), $F_E$ is the extract flow rate (mL/min), BV stands for the bed volume (mL) of a single column in the experiments.

For the similar reason, the different bed volumes for Ring I and Ring II in the tandem SMB should be considered in estimation of the overall solvent consumption. In addition, the feed concentration of Ring II (SMB Run 3) is not the same as the extract concentration (or product concentration) of Ring I (SMB Run 2) as shown in Table 8. In the actual tandem SMB, these two concentrations should be the same. To estimate the final product concentration of the tandem SMB from the individual Ring I and Ring II experiments, the concentration ratio of the extract of Ring I to the feed of Ring II should be used. The estimated final product (BHI in the raffinate of Ring II) concentration is applied to calculate the overall solvent consumption as follows:

$$\frac{F_D^{Ring\,I} + \dfrac{F_E^{Ring\,I}}{F_F^{Ring\,II}} F_D^{Ring\,II}}{\left( \dfrac{F_E^{Ring\,I}}{F_F^{Ring\,II}} F_R^{Ring\,II} \right)\left( \dfrac{C_{BHI,Ext}^{Ring\,I}}{C_{BHI,Feed}^{Ring\,II}} C_{BHI,Raff}^{RingII} \right)} \times (1000\,mL/L) \tag{40}$$

where $F_D$ is the desorbent flow rate (mL/min), $F_R$ is the raffinate flow rate (mL/min), and subscript "Ext" stands for extract and "Raff" for raffinate. The unit of the BHI concentration is g/L.

The calculated results are summarized in Table 8. Since the Ring II experiment (Run 3) did not reach cyclic steady state, the calculated yield based on the last data point in the effluent history curve is lower than the yield at cyclic steady state. On the basis of the VERSE simulation at cyclic steady state for Ring II, the projected yield for Ring II is 99.7%. In other words, if the Ring II experiment is run long enough to reach cyclic steady state (after 150 steps), the tandem SMB process will have an overall yield of 99%. The overall throughput of the SMB process is 1.19 L/hr/100L BV. All these experimental results show that the SMB process is more efficient than the current batch process for BHI purification. If the maximum allowable flow rate were not as constrained by the resin, then one could expect even greater improvements over the yield and throughput from batch systems.

**Example 2 - VERSE Rate model**

To check the validity of the shortcut design method derived from the standing wave analysis, several simulations have been run in these Examples. For single-column and multiple-column studies, a mathematical model based on pore diffusion has been used. The numerical solutions of the governing equations and their boundary conditions as well as the numerical methods used to solve them have been reported previously (Berninger et al., 1991; Ma et al., 1996; Whitley, 1990) as the VERSE model. The equations are solved by the method of orthogonal collocation on finite elements in the spatial direction, and DASSL (Petzold, 1982) is used to integrate in the time domain. The model assumes uniform spherical adsorbent particles, plug flow with constant linear velocity, local equilibrium within the adsorbent and constant diffusivities.

**Example 3 - Determination of Decay Coefficients**

To make a design in the presence of mass-transfer resistance (equations 21 to 24) it is necessary to specify decay coefficients for the standing concentration waves in each zone. One can specify sufficiently large decay coefficients $\beta_i^m$ to achieve high purity and high yield (Wu et al., 1998; Xie et al., 2000). However, it is convenient to specify $\beta_i^m$ according to the desired yield of each component. An approach that can be used to link product yield to the values of $\beta_i^m$ is proposed here. The approach is based on simple material balances around the inlet and outlet ports. For each component, it is assumed that the concentration profile is flat in a zone in which it is neither standing nor "pinched." The feed port is treated as a mixing junction between zones II and III and the feed inlet. The desorbent port is treated as a mixing junction between zones I and IV and the desorbent inlet To use this approach, it is necessary to specify the desired product yield of each component in the mixture. This can be denoted by $Y_i$ for each component $i$. Figure 16 shows schematic column profiles for the standing components in a four-zone SMB. For each component that is desired to be recovered in the raffinate,

$$C_i^R = \frac{F\,C_i^F\,Y_i}{R}, \quad \forall i \in \{1, ..., j\} \tag{41}$$

$$C_i^E = \frac{F\,C_i^F\,(1-Y_i)}{E}, \ \forall i \in \{1,...,j\} \tag{42}$$

$$C_i^{FP} = \frac{F^{\mathrm{III}}\,C_i^R - F\,C_i^F}{F^{\mathrm{II}}}, \ \forall i \in \{1,...,j\} \tag{43}$$

$$C_i^{DP} = \frac{F^{\mathrm{I}}}{F^{\mathrm{IV}}}C_i^E, \ \forall i \in \{1,...,j\} \tag{44}$$

where $C^R{}_i$ is the time-averaged concentration of component $i$ at the raffinate port, $F$ is the feed flow rate, $C^F{}_i$ is the concentration of i in the feed solution, $C^E{}_i$ is the concentration of $i$ in the extract, $C^{FP}{}_i$ is the concentration of i at the feed port (which is considered to be diluted from the true feed because of recycle from zone II), $C^{DP}i$ is the concentration of $i$ at the desorbent port, $R$ is the raffinate flow rate, and E is the extract flow rate. For each component desired to be recovered in the extract

$$C_i^R = \frac{F\,C_i^F\,(1-Y_i)}{R}, \ \forall i \in \{j+1,...,N\} \tag{45}$$

$$C_i^E = \frac{F\,C_i^F\,Y_i}{E}, \ \forall i \in \{j+1,...,N\} \tag{46}$$

$$C_i^{FP} = \frac{F^{\mathrm{II}}\,C_i^E + F\,C_i^F}{F^{\mathrm{III}}}, \ \forall i \in \{j+1,...,N\} \tag{47}$$

$$C_i^{DP} = \frac{F^{\mathrm{IV}}}{F^{\mathrm{I}}}C_i^R, \ \forall i \in \{j+1,...,N\} \tag{48}$$

Equations 41 to 48 can be applied to solve for the concentration of each component at each port, which in turn can be used to calculate the decay coefficient for each zone:

$$\beta_N^{\mathrm{I}} = \ln\left(\frac{C_N^E}{C_N^{DP}}\right) \tag{49}$$

$$\beta_j^{\mathrm{II}} = \ln\left(\frac{C_j^{FP}}{C_j^E}\right) \tag{50}$$

$$\beta_{j+1}{}^{\text{III}} = \ln\left(\frac{C_{j+1}{}^{FP}}{C_{j+1}{}^{R}}\right) \tag{51}$$

$$\beta_{1}{}^{\text{IV}} = \ln\left(\frac{C_{1}{}^{R}}{C_{1}{}^{DP}}\right) \tag{52}$$

The solution of the four zone flow rates and the switching time (equations 19 and 21-24) is iterative. The initial guess of the zone flow rates and switching time come from the ideal equations (equations 15 to 19). These parameters are used to determine mass-transfer parameters for each component in each zone, which are in turn used to re-calculate the zone flow rates and switching time. The calculation and re-substitution is continued until the flow rates and switching time change by less than 0.01 % at each step.

## Nomenclature

$a_i$ = linear equilibrium distribution coefficient of component $i$, ml/ml S.V.
$c_i$ = mobile-phase concentration of component $i$ (a function of $z$ and $t$), mg/ml
$c_{pi}$ = pore-phase concentration of component $i$ (a function of $r$ and $t$), mg/ml

$C_{i,\text{max}}{}^{m}$ = maximum time-averaged concentration of component $i$ in zone $m$, mg/ml

$C_{i,\text{min}}{}^{m}$ = minimum time-averaged concentration of component $i$ in zone $m$, mg/ml

$C_{i}^{DP}$ = concentration of component $i$ at the desorbent port, mg/ml

$C_{i}^{E}$ = concentration of component $i$ at the extract port, mg/ml

$C_{i}^{FP}$ = concentration of component $i$ at the feed port, mg/ml

$C_{i}^{R}$ = concentration of component $i$ at the raffinate port, mg/ml

$D$ = desorbent flow rate, ml/min
$D_{pi}$ = intraparticle diffusivity of component $i$, cm$^2$/min
$D_A$ = desorbent flow rate to ring A in a two-ring SMB, ml/min
$D_B$ = desorbent flow rate to ring B in a two-ring SMB, ml/min
$D_{\text{total}}$ = total desorbent flow rate to a two-ring SMB, ml/min

$D_{i}^{\infty}$ = Brownian diffusivity of component $i$, cm$^2$/min

$E$ = extract flow rate, ml/min
$E_A$ = extract flow rate from ring A in a two-ring SMB, ml/min

$E_{bi}{}^{m}$ = axial dispersion coefficient of component $i$ in zone $m$, cm$^2$/min

$F$ = feed flow rate, ml/min
$F^m$ = flow rate in zone $m$, ml/min
$F_A$ = feed flow rate to ring A in a two-ring SMB, ml/min
$F_B$ = feed flow rate to ring B in a two-ring SMB, ml/min
$j$ = component index

$k_{fi}{}^{m}$ = film mass-transfer coefficient of component $i$ in zone $m$, cm/min

$K_{ei}$ = size-exclusion coefficient of component $i$

$K_{fi}^{m}$ := lumped mass-transfer coefficient of component $i$ in zone $m$, min$^{-1}$

$L_c$ = length of an individual column, cm

$L^m$ = length of zone m, cm

$n$ = number of port switches

$N$=numbering index of highest-affinity component

$N_c^{m}$ := number of columns in zone $m$

$P \equiv (1 - \varepsilon_b)/\varepsilon_b$ = particle-mobile fluid phase ratio

$q_i$ = solid-phase concentration of component $i$ (a function of $r$ and $t$), mg/ml S.V.

$R$ = raffinate flow rate, ml/min

$R_p$ = particle radius, cm

$S$ = column cross-sectional area, cm$^2$

S.V. = solid volume

$t$ = time, min

$t_p$= time required to inject pulse, min

$t_{ri}$ = retention time of component $i$, min

$t_s$ = switching time, min

$t_{0i}$ = elution time of component $i$ neglecting adsorption, min

$u_0^{m}$ = liquid interstitial velocity in zone $m$, cm/min

$V_c$ = total column volume (particles + voids), ml

$Y_i$ = yield of component $i$ in its desired product port

$z$ = axial distance along the SMB, cm

$z_0^{m}$ = position of furthest-upstream point in zone $m$, cm

$\beta_i^{m}$ = decay factor of standing wave $i$ in zone $m$

$\delta_l \equiv K_{ei} \varepsilon_p + (1 - \varepsilon_p)a_i$ = retention factor of component $i$

$\Delta_i^{m}$ = mass-transfer correction term for standing component $i$ in zone $m$

$\varepsilon_b$ = intraparticle void fraction

$\varepsilon_p$ = interparticle void fraction

$v$ = solid movement velocity, cm/min

$v_A$ = solid movement velocity for ring A in a two-ring SMB, cm/min

$v_B$ = solid movement velocity for ring B in a two-ring SMB, cm/min

**References**

1. Adachi,S., "Simulated Moving Bed Chromatography for Continuous Separations of Two Components and Its Application to Bioreactors," *J. Chromatogr. A,* **658,** 271 (1994).

2. Archibald, T.G., G.G. McParland, M. Chalker, B. Kelson, A.A. Malik, T.E. Clement, and H. Palandoken, "Commercial Scale Counter Current Chromatographic Separation of a Pharmaceutical Intermediate: Achieving Purity When Conventional Chemical Approaches Fail," paper presented at the *Eastern Analytical Symposium and Exposition,* Somerset, New Jersey, November (1999).

3. Azevedo, D.C.S. and A.E.Rodrigues, "Design of a Simulated Moving Bed in the Presence of Mass-Transfer Resistances," *AIChE J.,* **45(5**), 956 (1999).

4. Balannec, B. and G Hotier, in *Preparative and Production Scale Chromatography,* G Ganetsos and P.E. Barker, Eds. (Marcel Dekker, New York, 1993), pp. 301-357.

5. Barker, P.E. and D. Critcher, "The Separation of Volatile Liquid Mixtures by Continuous Gad-Liquid Chromatography," *Chem. Eng. Sci.,***13**, 82 (1960).

6. Berg, C., *Trans. Am. Inst. Chem. Eng.,* **42**, 665 (1946).

7. Biressi, G, O.Ludeman-Hombourger, M.Mazzotti,R.-M.Nicoud, and M.Morbidelli, "Design and Optimization of a Simulated Moving Bed Units: Role of Deviations from Equilibrium Theory," *J. Chromatogr. A,* **876**, 3 (2000).

8. Blehaut, J., F. Charton, and R.-M. Nicoud, *LCGC Int.* 9(4), 228-238 (1996).

9. Broughton, D.B.; Gerhold, C.G *Continuous Sorption Process Employing Fixed Bed of Sorbent and Moving Inlets and Outlets.* US Patent 2,985,589 (1961).

10. Broughton, D. B., "Molex: Case History of a Process," *Chem. Eng. Prog.,* **64**, 60 (1968).

11. Broughton, D. B., R. W. Neuzil, J. M. Pharis, and C. S. Brearley, "The Parex Process for Recovering Paraxylene," *Chem. Eng. Prog.,* **66**, 70 (1970).

12. Ching, C.B., B.G.Lim, E.J.D.Lee, and S.C.Ng, "Preparative Resolution of Praziquantel Enantiomers by Simulated Counter-Current Chromatography," *J. Chromatogr.,* **634**, 215 (1993).

13. Chung, S. F. and C. Y Wen, "Longitudinal Dispersion of Liquid Flowing through Fixed and Fluidized Beds," *AIChE J.,* 14, 857 (1968).

14. Collins, R. E. *Flow of Fluids Through Porous Materials.* Rheinhold, NY (1961).

15. Flodin, P., "Methodological Aspects of Gel Filtration with Special Reference to Desalting Operations," *J. Chromatogr.,* **5**, 103 (1961).

16. Fuchs, G, R.-M. Nicoud, and M. Bailly, in *Proceedings of the Ninth Symposium on Preparative Chromatography 'Prep 92'* (INPL, Nancy, France) 205-220 (1992).

17. Hashimoto, K., S. Adachi, and S. Shirai, "Continuous Desalting of Proteins with a Simulated Moving-Bed Adsorber," *Agric. Biol. Chem.,* **52**, 2161 (1988).

18. Hill, D. in *Process Scale Liquid Chromatography,* G Subramanian, Ed. (VCH-Weinheim, New York) 78 (1995).

19. Houwing, J. in *Proceedings of the First European Symposium on Biochemical Engineering Science,* B. Glennon, P.M. Kieran, and K.Ch.A.M. Luyben, Eds. (ESBES Secretariat, Dublin City University, Dublin, Ireland) 57 (1996).

20. Huang, S,Y, C.K. Lin, W.H. Chang, and W.S. Lee, "Enzyme Purification and Concentration by Simulated Moving Bed Chromatography: an Experimental Study," *Chem. Eng. Commun.,* **456**, 291 (1986).

21. Kehde, H., R. G Fairfield, I. C. Frank, and L. W. Zahenstecher, *Chem. Eng. Prog.,* **44,** 575 (1948).

22. Lehoucq, S., D. Verheve, A. V. Wouwer, E. Cavoy "SMB Enantioseparation: Process Development, Modeling, and Operating Conditions," *AIChE J.,* **46**, 247 (2000).

23. Ma, Z. and N.-H.L. Wang, "Standing Wave Analysis of SMB Chromatography: Linear Systems," *AIChE J,* **43** (10), 2488 (1997).

24. Maki, H., H. Fukuda, and H. Morikawa, "The Separation of Glutathione and Glutamic Acid Using a Simulated Moving-Bed Adsorber System," *J. Ferment. Technol.,* **65,** 61 (1987).

25. Maki, H. in *Preparative and Production Scale Chromatography,* G. Ganetsos and P.E. Barker, Eds. (Marcel Dekker, New York) 359-371 (1993).

26. Nicoud, R-M. in *Bioseparation and Bioprocessing, A Handbook*, G. Subramanian, Ed. (Wiley-VCH, New York, voL I) 3-39 (1998).

27. Nicoud, R.-M., "Recovery of Biological Products VIII," paper presented at the *American Chemical Society Meeting,* Tucson, Arizona, October (1996).

28. Nicoud, R. M., G Fuchs, P. Adam, M. Bailly, E. Kusters, F. D. Antia, F. Reuille, and E. Schmid, "Preparative Scale Enantioseparation of a Chiral Epoxide: Comparison of Liquid Chromatography and Simulated Moving Bed Adsorption Technology," *Chirality,* **5**, 267 (1993).

29. Pais, L.S., J.M.Loureiro, and A.E.Rodrigues, "Separation of 1,1'-bi-2-Naphthol Enantiomers by Continuous Chromatography in Simulated Moving Bed," *Chem. Eng. Sci.,* **52(2)**, 245 (1997).

30. Parkinson, G, GOndrey, and S.Moor, "Chromatographers Think Big," *Chem. Eng.,* **101,** 30 (1994).

31. Pedeferri, M., G Zenoni, M. Mazzotti, M. Morbidelli, "Experimental Analysis of a Chiral Separation through Simulated Moving Bed Chromatography," *Chem. Eng. Sci.,* **54**, 3735 (1999).

32. Ruthven, D.M., C.B.Ching, "Counter-Current and Simulated Counter Current Adsorption Separation Process," *Chem. Eng. Sci.,* **44**, 1011 (1989).

33. Schulte, M., L. Britsch, and J. Strube, "Continuous Preparative Liquid Chromatography in the Downstream Processing of Biotechnological Products," *Acta Biotechnol.,* **29(1),** 345 (2000).

34. Storti, G, M. Masi, S.Carra, and M. Morbidelli, "Optimal Design of Multicomponent Countercurrent Adsorption Separation Processes Involving Nonlinear Equilibria," *Chem. Eng. Sci.,* **44**, 1329 (1989).

35. Storti, G, M.Mazzotti, M. Morbidelli, and S.Carra, "Robust Design of Binary Counter-Current Adsorption Separation Processes," *AIChE J.,* **39**, 471 (1993).

36. Storti, G, R. Baciocchi, M. Mazzotti, and M. Morbidelli, "Design of Optimal Operating Conditions of Simulated Moving Bed Adsorptive Separation Units," *Ind. Eng. Chem. Res.,* **34(1**), 288 (1995).

37. Strube, J., U. Altenhoner, M. Meurer, H. Schmidt-Traub, and M. Schulte, "Dynamic Simulation of Simulated Moving-Bed Chromatographic Processes for the Optimization of Chiral Separations," *J. Chromatogr.,* **769**, 81 (1997).

38. Szepesy, L., Z. Sebestyen, I. Feher, and Z. Nagy, "Continuous Liquid Chromatography," *J. Chromatogr.,* **108**, 285-297 (1975).

39. van Walsem, J.J. and M.C. Thompson, in *Proceedings of the First European Symposium on Biochemical Engineering Science,* B. Glennon, P.M. Kieran, and K.Ch.A.M. Luyben, Eds. (ESBES Secretariat, Dublin City University, Dublin, Ireland) 27 (1996).

40. Wankat, P.C., *Rate-Controlled Separations.* Blackie Academic & Professional, NY, 524 (1994).

41. Wilson, E. J. and C. J. Geankoplis, "Liquid Mass Transfer at Very Low Reynolds Numbers in Packed Beds," *Ind. Eng. Chem. Fundam.,* **5**, 9 (1966).

42. Wooley, R, Z. Ma, and N.-H.L. Wang, "A Nine-Zone Simulating Moving Bed for the Recovery of Glucose and Xylose from Biomass Hydrolyzate," *Ind. Eng. Chem. Res.,* **37(9**), 3699 (1998).

43. Wu, D.J., Y. Xie, Z. Ma, and N.-H.L. Wang, "Design of Simulated Moving Bed Chromatography for Amino Acid Separations," *Ind. Eng. Chem. Res.,* **37(10**), 4023 (1998).

44. Xie, Y., D.J. Wu, Z. Ma, and N.-H.L. Wang, " Extended Standing Wave Design Method for Simulated Moving Bed Chromatography: Linear System," *Ind. Eng. Chem. Res.,* **39**, 1993 (2000).

45. Yun, T., G. Zhong, and GGuiochon, "Experimental Study of the Influence of the Flow Rates in SMB Chromatography," *AIChE J.,* **43**, 2970 (1997).

46. Zhong, G, M.S. Smith, and G Guiochon, "Effect of the Flow Rates in Linear, Ideal, Simulated Moving Bed Chromatography," *AIChE J.,* **43**, 2960 (1997).

47. Zhong, G. and G. Guiochon, "Simulated Moving Bed Chromatography: Effects of Axial Dispersion and Mass Transfer Under Linear Conditions," *Chem. Eng. Sci.,* **52**, 3117 (1997).

**Claims**

1. A method for chromatographically separating insulin from the one or more components comprising

    a) providing a simulated moving bed that comprises a first ring, a stationary phase, and a first desorbent stream;
    b) providing a feed stream that comprises insulin and a first component or fraction;
    c) introducing the first desorbent stream and the feed stream to the first ring under standing wave conditions to separate the insulin from the first component or fraction; and
    d) withdrawing the insulin from the first ring substantially separated from the first component or fraction:

2. The method of claim 1 wherein the feed stream further comprises a second component or fraction, and the affinity, of the insulin for the stationary phase is intermediate the affinities of the first and second components and/or fractions for the stationary phase, further comprising:

    a) introducing the insulin from the first ring and a second desorbent stream to a second ring, under conditions sufficient to separate the insulin from the second component or fraction; and
    b) withdrawing the insulin from the second ring substantially separated from the second component or fraction.

3. The method of claim 1 wherein the insulin is biosynthetic human insulin.

4. The method of claim 1 wherein the insulin is an insulin analogue or derivative.

5. The method of claim 2 wherein the first component or fraction comprises zinc chloride and the second component or fraction comprises a high molecular weight protein other than insulin.

6. The method of claim 5 wherein the high molecular weight protein is proinsulin.

7. The method of claim 1 wherein the separation is achieved using adsorption chromatography, partition chromatography, ion exchange chromatography, size exclusion chromatography, or affinity chromatography.

8. The method of claim 1 wherein the separation is achieved using size exclusion chromatography, and the stationary phase comprises a size exclusion gel.

9. The method of claim 1 wherein the stationary phase comprises crosslinked dextran having a water regain of greater than 4 wt. % and a mean particle diameter of less than about 100 microns.

10. The method of claim 1 wherein the desorbent comprises acetic acid.

11. The method of claim 1 wherein the desorbent use in the first ring is minimized.

12. The method of claim 11 wherein the desorbent use in the first ring is less than 110% of the minimum desorbent use defined by the standing wave design.

13. The method of claim 1 wherein:

    a) the first ring comprises 4 zones and 5 or more columns, or 5 zones and 6 or more columns;
    b) the column configuration substantially optimizes the throughput of the first ring, or the desorbent use in the first ring.

14. The method of claim 1 wherein:

    a) the first ring comprises 4 zones and 5 or more columns, or 5 zones and 6 or more columns;
    b) the allocation of columns among zones substantially optimizes the throughput of the first ring, or the desorbent use in the first ring.

15. The method of claim 14 wherein the first ring comprises 8 or more columns.

16. The method of claim 14 wherein the first ring comprises 12 or more columns.

17. The method of claim 2 wherein the first or second component or fraction is allowed to distribute through the first ring.

18. The method of claim 2 wherein:

    a) the insulin is withdrawn from the first ring substantially separated from the first fraction or component, and
    b) the difference between the affinities of the insulin and the first component or fraction for the stationary phase in the first ring is less than the difference between the affinities of the insulin and the second component or fraction for the stationary phase in the second ring.

19. The method of claim 1 wherein the separation occurs under linear adsorption isotherms.

20. The method of claim 1 wherein the separation is hindered by non-negligible mass transfer effects.

21. The method of claim 1 wherein the mass transfer correction of mobile phase velocities in one or more zones is greater than 2% of the ideal mobile phase velocity for the one or more zones.

22. The method of claim 1 wherein the mass transfer correction of mobile phase velocities in one or more zones is greater than 10% of the ideal mobile phase velocity for the one or more zones.

23. The method of claim 1 wherein the separation is hindered by non-negligible fronting and/or extra-column effects.

24. The method of claim 1 wherein the insulin is 95% separated from the first fraction in the first ring, on a volumetric basis.

25. The method of claim 1 wherein the insulin is 98% separated from the first fraction in the first ring, on a volumetric basis.

26. The method of claim 2 wherein the yield of insulin is greater than 98%, on a volumetric basis.

27. The method of claim 1 wherein the mobile phase velocity in one or more of the zones approaches the maximum allowable velocity for the zone.

28. A method of designing an SMB for the purification of insulin from a binary or multicomponent mixture comprising:

    a) providing equations that relate the design, operating, and intrinsic engineering parameters of a SMB that displays linear isotherms, wherein the equations assume standing wave conditions for all zones of the SMB;
    b) prescribing a first set of design and operating parameters sufficient to determine the intrinsic engineering parameters and to solve the equations for resolving the multicomponent mixture in a first SMB; and
    c) resolving the equations.

29. The method of claim 28 wherein the SMB comprises a first ring A, the mixture comprises components numbered 1...j...N, in order of increasing affinity for the stationary phase, a split is desired between components j and j+1, and the equations assume standing wave conditions in the first ring for:

a) the desorption wave of component N in zone IA;
b) the desorption wave of component $j$+1 in zone IIA;
c) the adsorption wave of component j in zone IIIA;
d) the adsorption wave of component 1 in zone IVA;

30. The method of claim 28 wherein the SMB comprises two four zone rings A and B, the mixture comprises components numbered 1 ... j ...N, in order of increasing affinity for the stationary phase, purified component j is desired, and the equations assume standing wave conditions in the first and second rings for:

a) the desorption wave of component N in zone IA;
b) the desorption wave of component $j$-1 in zone IIA;
c) the adsorption wave of component j in zone IIIA;
d) the adsorption wave of component 1 in zone IVA;
e) the desorption wave of component N in zone IB;
f) the desorption wave of component j in zone IIB;
g) the adsorption wave of component $j$+1 in zone IIIB; and
h) the adsorption wave of component j in zone IVB.

31. The method of claim 28 wherein the SMB comprises two four zone rings A and B, the mixture comprises components numbered 1 ... j ...N, in order of increasing affinity for the stationary phase, purified component j is desired, and the equations assume standing wave conditions in the first and second rings for:

a) the desorption wave of component N in zone IA;
b) the desorption wave of component j in zone IIA;
c) the adsorption wave of component j +1 in zone IIIA;
d) the adsorption wave of component 1 in zone IVA;
e) the desorption wave of component j in zone IB;
f) the desorption wave of component $j$-1 in zone IIB;
g) the adsorption wave of component j in zone IIIB; and
h) the adsorption wave of component 1 in zone IVB.

32. The method of claim 28 wherein the SMB comprises two four zone rings A and B, the mixture comprises components numbered 1 ... j ...N, in order of increasing affinity for the stationary phase, purified component j is desired, and the equations assume standing wave conditions in the first and second rings for:

a) the desorption wave of component j in zone IA;
b) the desorption wave of component $j$-1 in zone IIA;
c) the adsorption wave of component j in zone IIIA;
d) the adsorption wave of component 1 in zone IVA;
e) the desorption wave of component N in zone IB;
f) the desorption wave of component j in zone IIB;
g) the adsorption wave of component $j$+1 in zone IIIB; and
h) the adsorption wave of component j in zone IVB.

33. The method of claim 28 wherein the SMB comprises two four zone rings A and B, the mixture comprises components numbered 1 ... j ...N, in order of increasing affinity for the stationary phase, purified component j is desired, and the equations assume standing wave conditions in the first and second rings for:

a) the desorption wave of component N in zone IA;
b) the desorption wave of component j in zone IIA;
c) the adsorption wave of component $j$+1 in zone IIIA;
d) the adsorption wave of component j in zone IVA;
e) the desorption wave of component j in zone IB;
f) the desorption wave of component $j$-1 in zone IIB;
g) the adsorption wave of component j in zone IIIB; and

h) the adsorption wave of component 1 in zone IVB.

34. The method of claim 28 wherein the SMB comprises a five zone ring A and a four zone ring B, the mixture comprises components numbered 1 ... j ...N, in order of increasing affinity for the stationary phase, purified component j is desired, and the equations assume standing wave conditions in the first and second rings for:

   a) the desorption wave of component N in zone IA;
   b) the desorption wave of component j in zone IIA;
   c) the desorption wave of component $j$-1 in zone IIIA;
   d) the adsorption wave of component j in zone IVA;
   e) the adsorption wave of component 1 in zone VA;
   f) the desorption wave of component N in zone IB;
   g) the desorption wave of component j in zone IIB;
   h) the adsorption wave of component $j$+1 in zone IIIB; and
   i) the adsorption wave of component j in zone IVB.

35. The method of claim 28 wherein the SMB comprises a five zone ring A and a four zone ring B, the mixture comprises components numbered 1 ... j ...N, in order of increasing affinity for the stationary phase, purified component j is desired, and the equations assume standing wave conditions in the first and second rings for.

   a) the desorption wave of component N in zone IA;
   b) the desorption wave of component j in zone IIA;
   c) the adsorption wave of component $j$+1 in zone IIIA;
   d) the adsorption wave of component j in zone IVA;
   e) the adsorption wave of component i in zone VA;
   f) the desorption wave of component j in zone IB;
   g) the desorption wave of component $j$-1 in zone IIB;
   h) the adsorption wave of component j in zone IIIB; and
   i) the adsorption wave of component 1 in zone IVB.

36. The method of claim 28 wherein the mixture is binary.

37. The method of claim 28 wherein the mixture is multicomponent.

38. The method of claim 28 wherein the equations define the minimum rate of desorbent use for a given rate of feed.

39. The method of claim 28 wherein the first set of design and operating parameters is sufficient to determine the maximum allowable pressure drop across the columns of the SMB; and the equations are resolved based upon a maximum allowable mobile phase velocity in one or more of the zones.

40. The method of claim 28 wherein the equations are resolved based upon a maximum allowable mobile phase velocity in zone I.

41. The method of claim 28 wherein the separation is hindered by non-negligible mass transfer resistances, and the equations relate:

   a) zone length;
   b) feed flow rate;
   c) desorbent flow rate;
   d) zone flow rates;
   e) port movement velocity;
   f) product purity and yield;
   g) mass transfer resistances; and
   h) component retention rates.

42. A method of optimizing a SMB for purifying insulin, wherein the system displays linear isotherms, comprising

   a) providing equations that relate the design, operating, and intrinsic engineering parameters under standing wave conditions of a SMB that displays linear isotherms;

b) prescribing a first set of design and operating parameters sufficient to determine the intrinsic engineering parameters and to resolve the equations for separating a binary or multicomponent mixture in a first SMB;

c) prescribing a second set of design and operating parameters sufficient to determine the intrinsic engineering parameters and to resolve the equations for separating the binary or multicomponent mixture in the second SMB; and

d) evaluating and comparing the economic efficiency of the first and second SMBs.

43. The method of claim 42 wherein the SMB comprises a first ring A, the mixture comprises components numbered 1 ... j ...N, in order of increasing affinity for the stationary phase, a split is desired between components j and j+1, and the equations assume standing wave conditions in the first ring for: the desorption wave of component N in zone IA;

 a) the desorption wave of component $j$+1 in zone IIA;
 b) the adsorption wave of component j in zone IIIA;
 c) the adsorption wave of component 1 in zone IVA;

44. The method of claim 42 wherein the SMB comprises two four zone rings A and B, the mixture comprises components numbered 1 ... j ...N, in order of increasing affinity for the stationary phase, purified component j is desired, and the equations assume standing wave conditions in the first and second rings for:

 a) the desorption wave of component N in zone IA;
 b) the desorption wave of component $j$-1 in zone IIA;
 c) the adsorption wave of component j in zone IIIA;
 d) the adsorption wave of component 1 in zone IVA;
 e) the desorption wave of component N in zone IB;
 f) the desorption wave of component j in zone IIB;
 g) the adsorption wave of component $j$+1 in zone IIIB; and
 h) the adsorption wave of component j in zone IVB.

45. The method of claim 42 wherein the SMB comprises two four zone rings A and B, the mixture comprises components numbered 1 ... j ...N, in order of increasing affinity for the stationary phase, purified component j is desired, and the equations assume standing wave conditions in the first and second rings for:

 a) the desorption wave of component N in zone IA;
 b) the desorption wave of component j in zone IIA;
 c) the adsorption wave of component j +1 in zone IIIA;
 d) the adsorption wave of component 1 in zone IVA;
 e) the desorption wave of component j in zone IB;
 f) the desorption wave of component $j$-1 in zone IIB;
 g) the adsorption wave of component j in zone IIIB; and
 h) the adsorption wave of component 1 in zone IVB.

46. The method of claim 42 wherein the SMB comprises two four zone rings A and B, the mixture comprises components numbered 1 ... j ...N, in order of increasing affinity for the stationary phase, purified component j is desired, and the equations assume standing wave conditions in the first and second rings for:

 a) the desorption wave of component j in zone IA;
 b) the desorption wave of component $j$-1 in zone IIA;
 c) the adsorption wave of component j in zone IIIA;
 d) the adsorption wave of component 1 in zone IVA;
 e) the desorption wave of component N in zone IB;
 f) the desorption wave of component j in zone IIB;
 g) the adsorption wave of component $j$+1 in zone IIIB; and
 h) the adsorption wave of component j in zone IVB.

47. The method of claim 42 wherein the SMB comprises two four zone rings A and B, the mixture comprises components numbered 1 ... j ...N, in order of increasing affinity for the stationary phase, purified component j is desired, and the equations assume standing wave conditions in the first and second rings for:

a) the desorption wave of component N in zone IA;
b) the desorption wave of component j in zone IIA;
c) the adsorption wave of component $j$+1 in zone MA;
d) the adsorption wave of component j in zone IVA;
e) the desorption wave of component j in zone IB ;
f) the desorption wave of component $j$-1 in zone IIB;
g) the adsorption wave of component j in zone IIIB; and
h) the adsorption wave of component 1 in zone IVB.

48. The method of claim 42 wherein the SMB comprises a five zone ring A and a four zone ring B, the mixture comprises components numbered 1 ... j ...N, in order of increasing affinity for the stationary phase, purified component j is desired, and the equations assume standing wave conditions in the first and second rings for:

a) the desorption wave of component N in zone IA;
b) the desorption wave of component j in zone IIA;
c) the desorption wave of component $j$-1 in zone IIIA;
d) the adsorption wave of component j in zone IVA;
e) the adsorption wave of component 1 in zone VA;
f) the desorption wave of component N in zone IB;
g) the desorption wave of component j in zone IIB;
h) the adsorption wave of component $j$+1 in zone IIIB; and
i) the adsorption wave of component j in zone IVB.

49. The method of claim 42 wherein the SMB comprises a five zone ring A and a four zone ring B, the mixture comprises components numbered 1 ... j ...N, in order of increasing affinity for the stationary phase, purified component j is desired, and the equations assume standing wave conditions in the first and second rings for:

a) the desorption wave of component N in zone IA;
b) the desorption wave of component j in zone IIA;
c) the adsorption wave of component $j$+1 in zone IIIA;
d) the adsorption wave of component j in zone IVA;
e) the adsorption wave of component i in zone VA;
f) the desorption wave of component j in zone IB;
g) the desorption wave of component $j$-1 in zone IIB;
h) the adsorption wave of component j in zone IIIB; and
i) the adsorption wave of component 1 in zone IVB.

50. The method of claim 42 wherein the equations define the minimum desorbent feed rate for a given feed flow rate.

51. The method of claim 42 wherein the first and second sets of design and operating parameters are sufficient to determine the maximum allowable pressure drop across the columns of the first and second SMBs, and the equations are resolved based upon a maximum mobile phase velocity in one or more of the zones.

52. The method of claim 42 wherein the equations are resolved based upon a maximum mobile phase velocity in zone I.

53. The method of claim 42 wherein the economic efficiency is based upon desorbent consumption.

54. The method of claim 42 wherein the economic efficiency is based upon throughput.

55. The method of claim 42 further comprising:

a) prescribing a third set of design and operating parameters sufficient to determine the intrinsic engineering parameters and to resolve the equations for a third SMB; and
b) evaluating and comparing the economic efficiency of the third SMB.

56. The method of claim 42 wherein the allocation of columns varies between the first and second sets of design and operating parameters.

57. The method of claim 42 wherein the number of columns varies between the first and second sets of design and operating parameters.

58. The method of claim 42 wherein the length of the columns varies between the first and second sets of design and operating parameters.

59. A method of designing and operating a SMB understanding wave conditions for separating insulin from a fast component or fraction and a slow component or fraction, wherein the SMB comprises first and second rings, comprising:

a) providing splitting rules which provide:

i) when only the desired component or fraction is purified, allowing the fast or slow component or fraction to distribute in the first ring;
ii) when the fast and/or slow component and/or fraction are purified, perform the easiest split in the first ring;

b) selecting a splitting strategy based upon whether one or more of the fast or slow components and/or fractions is purified; and
c) operating the SMB using the selected splitting strategy.

60. The method of claim 59 wherein only the desired component or fraction is purified.

61. The method of claim 59 wherein the fast and/or slow component or fraction is purified.

62. The method of claim 59 wherein non-negligible mass transfer resistances are observed.

63. The method of claim 59 wherein non-negligible mass transfer resistances are not observed.

64. A method of designing an SMB for separating insulin from a first fraction or component, in a multicomponent mixture, comprising:

a) providing equations that relate the design, operating, and intrinsic engineering parameters understanding wave conditions of a SMB that displays linear isotherms,
b) prescribing a first set of design and operating parameters sufficient to determine the intrinsic engineering parameters and to solve the equations for resolving the multicomponent mixture in a first SMB; and
c) resolving the equations;
d) wherein the equations define the minimum rate of desorbent use for a given rate of feed.

**Patentansprüche**

1. Verfahren zur chromatographischen Abtrennung von Insulin von einer oder mehreren Komponenten umfassend, dass

a) ein simuliertes Wanderbett, das einen ersten Ring, eine stationäre Phase und einen ersten Desorbentstrom aufweist, bereitgestellt wird;
b) ein Zulaufstroms, der Insulin und eine erste Komponente oder Fraktion enthält, bereitgestellt wird;
c) der erste Desorbentstrom und der Zulaufstrom dem ersten Ring zugeführt werden, unter Bedingungen einer stehenden Welle, um das Insulin von der ersten Komponente oder Fraktion zu trennen und
d) dass das im Wesentlichen von der ersten Komponente oder Fraktion abgetrennte Insulin vom ersten Ring entnommen wird.

2. Verfahren nach Anspruch 1, wobei der Zulaufstrom ferner eine zweite Komponente oder Fraktion enthält, und die Affinität des Insulins zur stationären Phase zwischen den Affinitäten der ersten und zweiten Komponente und/oder Fraktion zur stationären Phase liegt, ferner umfassend:

a) dass das Insulin aus dem ersten Ring und ein zweiter Desorbentstrom zu einem zweiten Ring zugeführt werden, unter Bedingungen, die ausreichend sind, um das Insulin von der zweiten Komponente oder Fraktion zu trennen und

b) dass das im Wesentlichen von der zweiten Komponente oder Fraktion abgetrennte Insulin von dem zweiten Ring entnommen wird.

3. Verfahren nach Anspruch 1, wobei das Insulin ein biosynthetisches menschliches Insulin ist.

4. Verfahren nach Anspruch 1, wobei das Insulin ein Insulinanalogon oder Derivat ist.

5. Verfahren nach Anspruch 2, wobei die erste Komponente oder Fraktion Zinkchlorid und die zweite Komponente oder Fraktion ein anderes Protein mit hohem Molekulargewicht als Insulin enthält.

6. Verfahren nach Anspruch 5, wobei das Protein mit hohem Molekulargewicht Proinsulin ist.

7. Verfahren nach Anspruch 1, wobei die Trennung durch Adsorptionschromatographie, Verteilungschromatographie, Ionenaustauschchromatographie, Größenausschlusschromatographie oder Affinitätschromatographie erreicht wird.

8. Verfahren nach Anspruch 1, wobei die Trennung mittels Größenausschlusschromatographie erreicht wird und die stationäre Phase ein Grö-ßenausschlußgel enthält.

9. Verfahren nach Anspruch 1, wobei die stationäre Phase quervernetztes Dextran enthält, das ein Wasseraufnahmevermögen von mehr als 4 Gew.-% und einen mittleren Partikelgrößendurchmesser von weniger als ungefähr 100 $\mu$m besitzt.

10. Verfahren nach Anspruch 1, wobei das Desorptionsmittel Essigsäure enthält.

11. Verfahren nach Anspruch 1, wobei der Desorptionsmittelverbrauch im ersten Ring minimiert ist.

12. Verfahren nach Anspruch 11, wobei der Desorptionsmittelverbrauch im ersten Ring geringer als 110 % des minimalen Desorptionsmittelverbrauchs ist, der durch das Ausbilden einer stehenden Welle definiert ist.

13. Verfahren nach Anspruch 1, wobei:

a) der erste Ring 4 Zonen und 5 oder mehr Säulen, oder 5 Zonen und 6 oder mehr Säulen, aufweist;
b) die Säulenanordnung im Wesentlichen den Durchsatz am ersten Ring, oder den Desorptionsmittelverbrauch am ersten Ring optimiert.

14. Verfahren nach Anspruch 1, wobei:

a) der erste Ring 4 Zonen und 5 oder mehr Säulen, oder 5 Zonen und 6 oder mehr Säulen, aufweist;
b) die Zuordnung der Säulen zu den Zonen im Wesentlichen den Durchsatz am ersten Ring, oder den Desorptionsmittelverbrauch im ersten Ring optimiert.

15. Verfahren nach Anspruch 14, wobei der erste Ring 8 oder mehr Säulen aufweist.

16. Verfahren nach Anspruch 14, wobei der erste Ring 12 oder mehr Säulen aufweist.

17. Verfahren nach Anspruch 2, wobei es der ersten oder zweiten Komponente oder Fraktion möglich ist, sich über den ersten Ring zu verteilen.

18. Verfahren nach Anspruch 2, wobei:

a) das Insulin aus dem ersten Ring, im Wesentlichen abgetrennt von der ersten Fraktion oder Komponente, entnommen wird, und
b) der Unterschied in den Affinitäten des Insulins und der ersten Komponente oder Fraktion zur stationären Phase im ersten Ring geringer ist als der Unterschied in den Affinitäten des Insulins und der zweiten Komponente

**44**

oder Fraktion zur stationären Phase im zweiten Ring.

**19.** Verfahren nach Anspruch 1, wobei die Trennung bei linearen Adsorptionsisothermen erfolgt.

**20.** Verfahren nach Anspruch 1, wobei die Trennung durch nicht vernachlässigbare Massentransfereffekte beeinträchtigt wird.

**21.** Verfahren nach Anspruch 1, wobei die Massentransferkorrektur der mobilen Phasengeschwindigkeiten in einer oder mehreren Zonen größer als 2% der idealen mobilen Phasengeschwindigkeiten für eine oder mehr Zonen ist.

**22.** Verfahren nach Anspruch 1, wobei die Massentransferkorrektur der mobilen Phasengeschwindigkeiten in einer oder mehreren Zonen größer als 10% der idealen mobilen Phasengeschwindigkeiten für eine oder mehr Zonen ist.

**23.** Verfahren nach Anspruch 1, wobei die Trennung durch nicht vernachlässigbare Fronting- und/oder Extra-Säuleneffekte behindert wird.

**24.** Verfahren nach Anspruch 1, wobei das Insulin zu 95% auf volumetrischer Basis von der ersten Fraktion im ersten Ring getrennt wird.

**25.** Verfahren nach Anspruch 1, wobei das Insulin zu 98% auf volumetrischer Basis von der ersten Fraktion im ersten Ring getrennt wird.

**26.** Verfahren nach Anspruch 2, wobei die Ausbeute an Insulin auf volumetrischer Basis größer ist als 98%.

**27.** Verfahren nach Anspruch 1, wobei die mobile Phasengeschwindigkeit in einer oder mehreren Zonen sich der maximal zulässigen Geschwindigkeit für die Zone annähert.

**28.** Verfahren zur Gestaltung eines SMB zur Reinigung von Insulin aus einer Zwei- oder Mehrkomponentenmischung umfassend, dass

a) Gleichungen bereitgestellt werden, die die Gestaltung, den Betrieb und die intrinsischen technischen Parameter des SMB in Beziehung zueinander bringen, die lineare Isothermen darstellen, wobei die Gleichungen von stehenden Wellenbedingungen für alle Zonen des SMB ausgehen;

b) ein erster Satz an Gestaltungs- und Betriebsparametern vorgeschrieben ist, der ausreichend ist, um die intrinsischen technischen Parameter zu ermitteln und die Gleichungen zum Auflösen der Mehrkomponentenmischung in einem ersten SMB zu lösen und

c) die Gleichungen gelöst werden.

**29.** Verfahren nach Anspruch 28, wobei das SMB einen ersten Ring A aufweist, und die Mischung Komponenten nummeriert mit 1 .... j.... N in der Reihenfolge der zunehmenden Affinität zur stationären Phase enthält, und eine Aufteilung zwischen den Komponenten j und j+1 erwünscht ist, und die Gleichungen von stehenden Wellenbedingungen im ersten und zweiten Ring ausgehen für:

a) die Desorptionswelle der Komponente N in Zone IA;
b) die Desorptionswelle der Komponente j+1 in Zone IIA;
c) die Adsorptionswelle der Komponente j in Zone IIIA;
d) die Adsorptionswelle der Komponente 1 in Zone IVA;

**30.** Verfahren nach Anspruch 28, wobei das SMB zwei Vierzonenringe A und B aufweist, die Mischung Komponenten nummeriert mit 1...j... N in der Reihenfolge der zunehmenden Affinität zur stationären Phase enthält, die gereinigte Komponente j erwünscht ist und die Gleichungen von stehenden Wellenbedingungen im ersten und zweiten Ring ausgehen für:

a) die Desorptionswelle der Komponente N in Zone IA;
b) die Desorptionswelle der Komponente j-1 in Zone IIA;
c) die Adsorptionswelle der Komponente j in Zone IIIA;
d) die Adsorptionswelle der Komponente 1 in Zone IVA;
e) die Desorptionswelle der Komponente N in Zone IB;

f) die Desorptionswelle der Komponente j in Zone IIB;

g) die Adsorptionswelle der Komponente j+1 in Zone IIIB und

h) die Adsorptionswelle der Komponente j in Zone IVB.

**31.** Verfahren nach Anspruch 28, wobei das SMB zwei Vierzonenringe A und B aufweist, die Mischung Komponenten nummeriert mit 1...j... N in der Reihenfolge der zunehmenden Affinität zur stationären Phase enthält, die gereinigte Komponente j erwünscht ist und die Gleichungen von stehenden Wellenbedingungen im ersten und zweiten Ring ausgehen für:

a) die Desorptionswelle der Komponente N in Zone IA;

b) die Desorptionswelle der Komponente j in Zone IIA

c) die Adsorptionswelle der Komponente j+1 in Zone IIIA;

d) die Adsorptionswelle der Komponente 1 in Zone IVA;

e) die Desorptionswelle der Komponente j in Zone IB;

f) die Desorptionswelle der Komponente j-1 in Zone IIB;

g) die Adsorptionswelle der Komponente j in Zone IIIB und

h) die Adsorptionswelle der Komponente 1 in Zone IVB.

**32.** Verfahren nach Anspruch 28, wobei das SMB zwei Vierzonenringe A und B aufweist, die Mischung Komponenten nummeriert mit 1...j... N in der Reihenfolge der zunehmenden Affinität zur stationären Phase enthält, die gereinigte Komponente j erwünscht ist und die Gleichungen von stehenden Wellenbedingungen im ersten und zweiten Ring ausgehen für:

a) die Desorptionswelle der Komponente j in Zone IA ;

b) die Desorptionswelle der Komponente j-1 in Zone IIA,

c) die Adsorptionswelle der Komponente j in Zone IIIA;

d) die Adsorptionswelle der Komponente 1 in Zone IVA;

e) die Desorptionswelle der Komponente N in Zone IB;

f) die Desorptionswelle der Komponente j in Zone IIB;

g) die Adsorptionswelle der Komponente j+1 in Zone IIIB und

h) die Adsorptionswelle der Komponente j in Zone IVB.

**33.** Verfahren nach Anspruch 28, wobei das SMB zwei Vierzonenringe A und B enthält, die Mischung Komponenten nummeriert mit 1...j... N in der Reihenfolge der zunehmenden Affinität zur stationären Phase enthält, die gereinigte Komponente j erwünscht ist und die Gleichungen von stehenden Wellenbedingungen im ersten und zweiten Ring ausgehen für:

a) die Desorptionswelle der Komponente N in Zone IA;

b) die Desorptionswelle der Komponente j in Zone IIA,

c) die Adsorptionswelle der Komponente j+1 in Zone IIIA;

d) die Adsorptionswelle der Komponente j in Zone IVA;

e) die Desorptionswelle der Komponente j in Zone IB;

f) die Desorptionswelle der Komponente j-1 in Zone IIB;

g) die Adsorptionswelle der Komponente j in Zone IIIB und

h) die Adsorptionswelle der Komponente 1 in Zone IVB.

**34.** Verfahren nach Anspruch 28, wobei das SMB einen Fünfzonenring A und einen Vierzonenring B aufweist, die Mischung Komponenten nummeriert mit, 1 .... j ....N in der Reihenfolge der zunehmenden Affinität zur stationären Phase enthält, die gereinigte Komponente j erwünscht ist, und die Gleichungen von stehenden Wellenbedingungen im ersten und zweiten Ring ausgehen für:

a) die Desorptionswelle der Komponente N in Zone IA;

b) die Desorptionswelle der Komponente j in Zone IIA,

c) die Desorptionswelle der Komponente j-1 in Zone IIIA;

d) die Adsorptionswelle der Komponente j in Zone IVA;

e) die Adsorptionswelle der Komponente 1 in Zone VA;

f) die Desorptionswelle der Komponente N in Zone IB;

g) die Desorptionswelle der Komponente j in Zone IIB;

h) die Adsorptionswelle der Komponente j+1 in Zone IIIB und

i) die Adsorptionswelle der Komponente j in Zone IVB.

**35.** Verfahren nach Anspruch 28, wobei das SMB einen Fünfzonenring A und einen Vierzonenring B aufweist, die Mischung Komponenten nummeriert mit, 1 .... j ....N in der Reihenfolge der zunehmenden Affinität zur stationären Phase enthält, die gereinigte Komponente j erwünscht ist, und die Gleichungen von stehenden Wellenbedingungen im ersten und zweiten Ring ausgehen für:

a) die Desorptionswelle der Komponente N in Zone IA;

b) die Desorptionswelle der Komponente j in Zone IIA,

c) die Adsorptionswelle der Komponente j+1 in Zone IIIA;

d) die Adsorptionswelle der Komponente j in Zone IVA;

e) die Adsorptionswelle der Komponente i in Zone VA;

f) die Desorptionswelle der Komponente j in Zone IB;

g) die Desorptionswelle der Komponente j-1 in Zone IIB;

h) die Adsorptionswelle der Komponente j in Zone IIIB und

i) die Adsorptionswelle der Komponente 1 in Zone IVB.

**36.** Verfahren nach Anspruch 28, wobei die Mischung binär ist.

**37.** Verfahren nach Anspruch 28, wobei die Mischung ein Vielstoffgemisch ist.

**38.** Verfahren nach Anspruch 28, wobei die Gleichungen die Minimumrate an Desorptionsmittelverbrauch für eine gegebene Zulaufrate definieren.

**39.** Verfahren nach Anspruch 28, wobei der erste Satz aus Gestaltungs- und Betriebsparametern ausreichend ist, um den maximal zulässigen Druckabfall über die Säulen des SMB zu ermitteln, und die Gleichungen auf Basis der maximal zulässigen mobilen Phasengeschwindigkeit in einer oder mehrerer Zonen gelöst werden.

**40.** Verfahren nach Anspruch 28, wobei die Gleichungen auf Basis der maximal zulässigen mobilen Phasengeschwindigkeit in Zone 1 gelöst werden.

**41.** Verfahren nach Anspruch 28, wobei die Trennung durch nicht vernachlässigbare Massentransferresistenz beeinträchtigt wird und die Gleichungen sich beziehen auf:

a) Zonenlänge;

b) Zulaufdurchflussrate;

c) Desorptionsmitteldurchflussrate;

d) Zonendurchflussraten;

e) Einlassbewegungsgeschwindigkeit

f) Produktreinheit und Ausbeute;

g) Massentransferresistenz und

h) Komponentenretentionsraten.

**42.** Verfahren zur Optimierung eines SMB zur Reinigung von Insulin, wobei das System lineare Isotherme zeigt, umfassend, dass

a) Gleichungen bereitgestellt werden, die Gestaltungs-, Betriebs- und intrinsische technische Parameter unter den Bedingungen einer stehenden Welle des SMB zueinander in Beziehung bringen, die lineare Isothermen darstellen;

b) ein erster Satz aus Gestaltungs- und Betriebsparametern vorgeschrieben ist, der ausreichend ist, um die intrinsischen technischen Parameter zu ermitteln und die Gleichungen zur Trennung der Zwei- oder Mehrkomponentenmischung in einem ersten SMB zu lösen;

c) ein zweiter Satz aus Gestaltungs- und Betriebsparametern vorgeschrieben ist, der ausreichend ist um die intrinsischen technischen Parameter zu ermitteln und die Gleichungen zur Trennung der Zwei- oder Mehrkomponentenmischung in einem zweiten SMB zu lösen und

d) die ökonomische Effizienz des ersten und zweiten SMBs ausgewertet und verglichen wird.

**EP 1 349 866 B1**

**43.** Verfahren nach Anspruch 42, wobei das SMB einen ersten Ring A aufweist, und die Mischung Komponenten nummeriert mit 1 .... j.... N in der Reihenfolge der zunehmenden Affinität zur stationären Phase enthält, eine Aufteilung zwischen den Komponenten j und j+1 erwünscht ist, und die Gleichungen von stehenden Wellenbedingungen im ersten und zweiten Ring ausgehen für:

die Desorptionswelle der Komponente N in Zone IA;

b) die Desorptionswelle der Komponente j+1 in Zone IIA;
c) die Adsorptionswelle der Komponente j in Zone IIIA;
d) die Adsorptionswelle der Komponente 1 in Zone IVA.

**44.** Verfahren nach Anspruch 42, wobei das SMB zwei Vierzonenringe A und B aufweist, die Mischung Komponenten nummeriert mit 1...j... N in der Reihenfolge der zunehmenden Affinität zur stationären Phase enthält, die gereinigte Komponente j erwünscht ist und die Gleichungen von stehenden Wellenbedingungen im ersten und zweiten Ring ausgehen für:

a) die Desorptionswelle der Komponente N in Zone IA;
b) die Desorptionswelle der Komponente j-1 in Zone IIA;
c) die Adsorptionswelle der Komponente j in Zone IIIA;
d) die Adsorptionswelle der Komponente 1 in Zone IVA;
e) die Desorptionswelle der Komponente N in Zone IB;
f) die Desorptionswelle der Komponente j in Zone IIB;
g) die Adsorptionswelle der Komponente j+1 in Zone IIIB und
h) die Adsorptionswelle der Komponente j in Zone IVB.

**45.** Verfahren nach Anspruch 42, wobei das SMB zwei Vierzonenringe A und B aufweist, die Mischung Komponenten nummeriert mit 1...j... N in der Reihenfolge der zunehmenden Affinität zur stationären Phase enthält, die gereinigte Komponente j erwünscht ist und die Gleichungen von stehenden Wellenbedingungen im ersten und zweiten Ring ausgehen für:

a) die Desorptionswelle der Komponente N in Zone IA;
b) die Desorptionswelle der Komponente j in Zone IIA;
c) die Adsorptionswelle der Komponente j+1 in Zone IIIA;
d) die Adsorptionswelle der Komponente 1 in Zone IVA;
e) die Desorptionswelle der Komponente j in Zone IB;
f) die Desorptionswelle der Komponente j-1 in Zone IIB und
g) die Adsorptionswelle der Komponente j in Zone IIIB;
h) die Adsorptionswelle der Komponente 1 in Zone IVB.

**46.** Verfahren nach Anspruch 42, wobei das SMB zwei Vierzonenringe A und B aufweist, die Mischung Komponenten nummeriert mit 1...j... N in der Reihenfolge der zunehmenden Affinität zur stationären Phase enthält, die gereinigte Komponente j erwünscht ist und die Gleichungen von stehenden Wellenbedingungen im ersten und zweiten Ring ausgehen für:

a) die Desorptionswelle der Komponente j in Zone IA;
b) die Desorptionswelle der Komponente j-1 in Zone IIA;
c) die Adsorptionswelle der Komponente j in Zone IIIA;
d) die Adsorptionswelle der Komponente 1 in Zone IVA;
e) die Desorptionswelle der Komponente N in Zone IB;
f) die Desorptionswelle der Komponente j in Zone IIB und
g) die Adsorptionswelle der Komponente j+1 in Zone IIIB;
h) die Adsorptionswelle der Komponente j in Zone IVB.

**47.** Verfahren nach Anspruch 42, wobei das SMB zwei Vierzonenringe A und B aufweist, die Mischung Komponenten nummeriert mit 1...j... N in der Reihenfolge der zunehmenden Affinität zur stationären Phase enthält, die gereinigte Komponente j erwünscht ist und die Gleichungen von stehenden Wellenbedingungen im ersten und zweiten Ring ausgehen für:

48

a) die Desorptionswelle der Komponente N in Zone IA;
b) die Desorptionswelle der Komponente j in Zone IIA;
c) die Adsorptionswelle der Komponente j+1 in Zone IIIA;
d) die Adsorptionswelle der Komponente j in Zone IVA;
e) die Desorptionswelle der Komponente j in Zone IB;
f) die Desorptionswelle der Komponente j-1 in Zone IIB;
g) die Adsorptionswelle der Komponente j in Zone IIIB;
h) die Adsorptionswelle der Komponente 1 in Zone IVB.

48. Verfahren nach Anspruch 42, wobei das SMB einen Fünfzonenring A und einen Vierzonenring B aufweist, die Mischung Komponenten nummeriert mit, 1 .... j ....N in der Reihenfolge der zunehmenden Affinität zur stationären Phase enthält, die gereinigte Komponente j erwünscht ist, und die Gleichungen von stehenden Wellenbedingungen im ersten und zweiten Ring ausgehen für:

a) die Desorptionswelle der Komponente N in Zone IA;
b) die Desorptionswelle der Komponente j in Zone IIA,
c) die Desorptionswelle der Komponente j-1 in Zone IIIA;
d) die Adsorptionswelle der Komponente j in Zone IVA;
e) die Adsorptionswelle der Komponente 1 in Zone VA;
f) die Desorptionswelle der Komponente N in Zone IB ;
g) die Desorptionswelle der Komponente j in Zone IIB ;
h) die Adsorptionswelle der Komponente j+1 in Zone IIIB und
i) die Adsorptionswelle der Komponente j in Zone IVB.

49. Verfahren nach Anspruch 42, wobei das SMB einen Fünfzonenring A und einen Vierzonenring B aufweist, die Mischung Komponenten nummeriert mit, 1 .... j ....N in der Reihenfolge der zunehmenden Affinität zur stationären Phase enthält, die gereinigte Komponente j erwünscht ist, und die Gleichungen von stehenden Wellenbedingungen im ersten und zweiten Ring ausgehen für:

a) die Desorptionswelle der Komponente N in Zone IA;
b) die Desorptionswelle der Komponente j in Zone IIA,
c) die Adsorptionswelle der Komponente j+1 in Zone IIIA;
d) die Adsorptionswelle der Komponente j in Zone IVA;
e) die Adsorptionswelle der Komponente i in Zone VA;
f) die Desorptionswelle der Komponente j in Zone IB;
g) die Desorptionswelle der Komponente j-1 in Zone IIB;
h) die Adsorptionswelle der Komponente j in Zone IIIB und
i) die Adsorptionswelle der Komponente 1 in Zone IVB.

50. Verfahren nach Anspruch 42, wobei die Gleichungen die minimale Desorptionsmittelzulaufrate bei einer gegebenen Zulaufdurchflussrate definieren.

51. Verfahren nach Anspruch 42, wobei der erste und zweite Satz an Gestaltungs- und Betriebsparametern ausreichend ist, um den maximal zulässigen Druckabfall über die Säulen des ersten und zweiten SMBs zu ermitteln, und die Gleichungen auf Basis der maximal zulässigen mobilen Phasengeschwindigkeit in einer oder mehreren Zonen gelöst werden.

52. Verfahren nach Anspruch 42, wobei die Gleichungen auf Basis der maximalen mobilen Phasengeschwindigkeit in Zone I gelöst werden.

53. Verfahren nach Anspruch 42, wobei die ökonomische Effizienz auf dem Desorptionsmittelverbrauch basiert.

54. Verfahren nach Anspruch 42, wobei die ökonomische Effizienz auf dem Durchsatz basiert.

55. Verfahren nach Anspruch 42 ferner umfassend, dass:

a) ein dritter Satz an Gestaltungs- und Betriebsparametern vorgeschrieben ist, der ausreichend ist, um die intrinsischen technischen Parameter zu ermitteln und die Gleichungen für ein drittes SMB zu lösen und

b) die ökonomische Effizienz des dritten SMBs ausgewertet und verglichen wird.

56. Verfahren nach Anspruch 42, wobei die Zuordnung der Säulen zu dem ersten und dem zweiten Satz aus Gestaltungs- und Betriebsparametern variiert.

57. Verfahren nach Anspruch 42, wobei die Anzahl an Säulen zwischen dem ersten und dem zweiten Satz aus Gestaltungs- und Betriebsparametern variiert.

58. Verfahren nach Anspruch 42, wobei die Länge der Säulen zwischen dem ersten und dem zweiten Satz aus Gestaltungs- und Betriebsparametern variiert.

59. Verfahren zur Gestaltung und zum Betrieb eines SMBs unter den Bedingungen einer stehenden Welle zur Trennung von Insulin von einer schnellen Komponente oder Fraktion und einer langsamen Komponente oder Fraktion, wobei das SMB erste und zweite Ringe aufweist, umfassend, dass:

a) Splittingregeln bereitgestellt werden, die bereitstellen, dass:

i) wenn nur die gewünschte Komponente oder Fraktion gereinigt wird, sich die schnelle oder langsame Komponente oder Fraktion im ersten Ring verteilen kann;
ii) wenn die schnelle und/oder langsame Komponente und/oder Fraktion gereinigt wird, sie den leichtesten Split im ersten Ring ausbildet;

b) eine Splittingstrategie ausgewählt wird, die darauf basiert, dass entweder eine oder mehrere der schnellen oder langsamen Komponenten und/oder Fraktionen gereinigt werden und
c) dass das SMB unter Verwendung der ausgewählten Splittingstrategie betrieben wird.

60. Verfahren nach Anspruch 59, wobei nur die gewünschte Komponente oder Fraktion gereinigt wird.

61. Verfahren nach Anspruch 59, wobei die schnelle und/oder langsame Komponente oder Fraktion gereinigt wird.

62. Verfahren nach Anspruch 59, wobei nicht vernachlässigbare Massentransferresistenzen beachtet werden.

63. Verfahren nach Anspruch 59, wobei nicht vernachlässigbare Massentransferresistenzen nicht beachtet werden.

64. Verfahren zur Gestaltung eines SMBs zur Trennung von Insulin von einer ersten Fraktion oder Komponente in einer Zwei-oder Mehrkomponentenmischung umfassend, dass

a) Gleichungen bereitgestellt werden, die Gestaltungs-, Betriebs- und intrinsischen technischen Parameter des SMBs unter stehenden Wellenbedingungen in Beziehung zueinander bringen, die lineare Isothermen darstellen
b) ein erster Satz aus Gestaltung und Betriebsparametern vorgeschrieben wird, der ausreichend ist, um die intrinsischen technischen Parameter zu ermitteln und die Gleichungen zum Auflösen der Mehrkomponentenmischung in einem ersten SMB zu lösen und
c) die Gleichungen gelöst werden.
d) wobei die Gleichungen die minimale Rate an Desorptionsmittelverbrauch für eine gegebene Zulaufrate definieren.

## Revendications

1. Procédé destiné à séparer par chromatographie de l'insuline d'un ou plusieurs composants comprenant les étapes consistant à

a) fournir un lit mobile simulé qui comprend un premier anneau, une phase stationnaire et un premier courant désorbant ;
b) fournir un courant d'alimentation qui comprend de l'insuline et un premier composant ou fraction ;
c) introduire le premier courant désorbant et le courant d'alimentation dans le premier anneau dans des conditions d'ondes stationnaires pour séparer l'insuline du premier composant ou fraction ; et
d) retirer l'insuline du premier anneau sensiblement ou essentiellement séparé du premier composant ou fraction.

**2.** Procédé selon la revendication 1, dans lequel le courant d'alimentation comprend en outre un second composant ou fraction, et l'affinité de l'insuline pour la phase stationnaire est intermédiaire par rapport aux affinités des premier et second composants et/ou fractions pour la phase stationnaire, comprenant en outre les étapes consistant à :

a) introduire l'insuline du premier anneau et un second courant désorbant dans un second anneau, dans des conditions suffisantes pour séparer l'insuline du second composant ou fraction ; et
b) retirer l'insuline du second anneau sensiblement ou essentiellement séparé du second composant ou fraction.

**3.** Procédé selon la revendication 1, dans lequel l'insuline est de l'insuline humaine biosynthétique.

**4.** Procédé selon la revendication 1, dans lequel l'insuline est un analogue ou dérivé d'insuline.

**5.** Procédé selon la revendication 2, dans lequel le premier composant ou fraction comprend du chlorure de zinc et le second composant ou fraction comprend une protéine de masse moléculaire élevée autre que l'insuline.

**6.** Procédé selon la revendication 5, dans lequel la protéine de masse moléculaire élevée est de la proinsuline.

**7.** Procédé selon la revendication 1, dans lequel la séparation est atteinte en utilisant une chromatographie d'adsorption, une chromatographie de partition, une chromatographie d'échange d'ions, une chromatographie d'exclusion diffusion ou d'exclusion par la taille ou une chromatographie d'affinité.

**8.** Procédé selon la revendication 1, dans lequel la séparation est atteinte en utilisant une chromatographie d'exclusion diffusion ou d'exclusion par la taille, et la phase stationnaire comprend un gel d'exclusion diffusion ou d'exclusion par la taille.

**9.** Procédé selon la revendication 1, dans lequel la phase stationnaire comprend du dextrane réticulé ayant un regain d'eau supérieur à 4 % en poids et un diamètre moyen de particule inférieur à environ 100 microns.

**10.** Procédé selon la revendication 1, dans lequel le désorbant comprend de l'acide acétique.

**11.** Procédé selon la revendication 1, dans lequel l'utilisation de désorbant dans le premier anneau est minimisée.

**12.** Procédé selon la revendication 11, dans lequel l'utilisation de désorbant dans le premier anneau est inférieure à 110 % de l'utilisation de désorbant minimale définie par le motif ou l'aspect des ondes stationnaires.

**13.** Procédé selon la revendication 1, dans lequel :

a) le premier anneau comprend 4 zones et 5 ou plus de 5 colonnes, ou 5 zones et 6 ou plus de 6 colonnes ;
b) la configuration de colonnes optimise sensiblement ou essentiellement le débit du premier anneau, ou l'utilisation du désorbant dans le premier anneau.

**14.** Procédé selon la revendication 1, dans lequel :

a) le premier anneau comprend 4 zones et 5 ou plus de 5 colonnes, et 5 zones et 6 ou plus de 6 colonnes ;
b) l'attribution de colonnes parmi les zones optimise sensiblement ou essentiellement le débit du premier anneau, ou l'utilisation du désorbant dans le premier anneau.

**15.** Procédé selon la revendication 14, dans lequel le premier anneau comprend 8 ou plus de 8 colonnes.

**16.** Procédé selon la revendication 14, dans lequel le premier anneau comprend 12 ou plus de 12 colonnes.

**17.** Procédé selon la revendication 2, dans lequel le premier ou second composant ou fraction est laissé se distribuer à travers le premier anneau.

**18.** Procédé selon la revendication 2, dans lequel :

a) l'insuline est retirée du premier anneau sensiblement ou essentiellement séparé de la première fraction ou du premier composant, et

b) la différence entre les affinités de l'insuline et du premier composant ou fraction pour la phase stationnaire dans le premier anneau est inférieure à la différence entre les affinités de l'insuline et du second composant ou fraction pour la phase stationnaire dans le second anneau.

**19.** Procédé selon la revendication 1, dans lequel la séparation se produit sous des isothermes d'adsorption linéaires.

**20.** Procédé selon la revendication 1, dans lequel la séparation est gênée par des effets de transfert de masse non négligeables.

**21.** Procédé selon la revendication 1, dans lequel la correction de transfert de masse des vitesses de la phase mobile dans une ou plusieurs zones est supérieure à 2 % de la vitesse de phase mobile idéale pour l'une ou plusieurs zones.

**22.** Procédé selon la revendication 1, dans lequel la correction de transfert de masse des vitesses de phase mobile dans une ou plusieurs zones est supérieure à 10 % de la vitesse de phase mobile idéale pour l'une ou plusieurs zones.

**23.** Procédé selon la revendication 1, dans lequel la séparation est gênée par des effets de diffusion frontale et/ou de colonnes supplémentaires non négligeables.

**24.** Procédé selon la revendication 1, dans lequel l'insuline est séparée à 95 % de la première fraction dans le premier anneau, sur une base volumétrique.

**25.** Procédé selon la revendication 1, dans lequel l'insuline est séparée à 98 % de la première fraction dans le premier anneau, sur une base volumétrique.

**26.** Procédé selon la revendication 2, dans lequel le rendement en l'insuline est supérieur à 98 %, sur une base volumétrique.

**27.** Procédé selon la revendication 1, dans lequel la vitesse de phase mobile dans une ou plusieurs des zones approche la vitesse maximale admissible pour la zone.

**28.** Procédé de conception d'un SMB pour la purification d'insuline provenant d'un mélange binaire ou multicomposant comprenant les étapes consistant à :

a) fournir des équations qui lient la conception ou réalisation, le fonctionnement et les paramètres d'ingénierie intrinsèques d'un SMB qui affiche des isothermes linéaires, dans lequel les équations adoptent des conditions d'ondes stationnaires pour toutes les zones du SMB ;
b) prescrire un premier ensemble de paramètres de conception ou de réalisation et de fonctionnement suffisant pour déterminer les paramètres d'ingénierie intrinsèques et pour résoudre les équations pour la résolution du mélange multicomposant dans un premier SMB ; et
c) résoudre les équations.

**29.** Procédé selon la revendication 28, dans lequel le SMB comprend un premier anneau A, le mélange comprend des composants numérotés 1 ... j ... N, dans l'ordre d'une affinité croissante pour la phase stationnaire, une fente ou séparation est souhaitée entre les composants j et j+1, et les équations adoptent des conditions d'ondes stationnaires dans le premier anneau pour :

a) l'onde de désorption du composant N dans la zone IA ;
b) l'onde de désorption du composant j+1 dans la zone IIA ;
c) l'onde d'adsorption du composant j dans la zone IIIA ;
d) l'onde d'adsorption du composant 1 dans la zone IVA.

**30.** Procédé selon la revendication 28, dans lequel le SMB comprend deux anneaux à quatre zones A et B, le mélange comprend les composants numérotés 1 ... j ... N, dans l'ordre d'une affinité croissante pour la phase stationnaire, le composant purifié j est souhaité, et les équations adoptent des conditions d'ondes stationnaires dans les premier et second anneaux pour :

a) l'onde de désorption du composant N dans la zone IA;
b) l'onde de désorption du composant j-1 dans la zone IIA;

c) l'onde d'adsorption du composant j dans la zone IIIA ;
d) l'onde d'adsorption du composant 1 dans la zone IVA;
e) l'onde de désorption du composant N dans la zone IB ;
f) l'onde de désorption du composant j dans la zone IIB ;
g) l'onde d'adsorption du composant j+1 dans la zone IIIB ; et
h) l'onde d'adsorption du composant j dans la zone IVB ;

**31.** Procédé selon la revendication 28, dans lequel le SMB comprend deux anneaux à quatre zones A et B, le mélange comprend les composants numérotés 1 ... j ... N, dans l'ordre d'une affinité croissante pour la phase stationnaire, le composant purifié j est souhaité, et les équations adoptent des conditions d'ondes stationnaires dans les premier et second anneaux pour :

a) l'onde de désorption du composant N dans la zone IA ;
b) l'onde de désorption du composant j dans la zone IIA ;
c) l'onde d'adsorption du composant j+1 dans la zone IIIA ;
d) l'onde d'adsorption du composant 1 dans la zone IVA ;
e) l'onde de désorption du composant j dans la zone IB ;
f) l'onde de désorption du composant j-1 dans la zone IIB ;
g) l'onde d'adsorption du composant j dans la zone IIIB ; et
h) l'onde d'adsorption du composant 1 dans la zone IVB.

**32.** Procédé selon la revendication 28, dans lequel le SMB comprend deux anneaux à quatre zones A et B, le mélange comprend les composants numérotés 1 ... j ... N, dans l'ordre d'une affinité croissante pour la phase stationnaire, le composant purifié j est souhaité, et les équations adoptent des conditions d'ondes stationnaires dans les premier et second anneaux pour :

a) l'onde de désorption du composant j dans la zone IA ;
b) l'onde de désorption du composant j-1 dans la zone IIA ;
c) l'onde d'adsorption du composant j dans la zone IIIA ;
d) l'onde d'adsorption du composant 1 dans la zone IVA ;
e) l'onde de désorption du composant N dans la zone IB ;
f) l'onde de désorption du composant j dans la zone IIB ;
g) l'onde d'adsorption du composant j+1 dans la zone IIIB ; et
h) l'onde d'adsorption du composant j dans la zone IVB.

**33.** Procédé selon la revendication 28, dans lequel le SMB comprend deux anneaux à quatre zones A et B, le mélange comprend les composants numérotés 1 ... j ... N, dans l'ordre d'une affinité croissante pour la phase stationnaire, le composant purifié j est souhaité, et les équations adoptent des conditions d'ondes stationnaires dans les premier et second anneaux pour :

a) l'onde de désorption du composant N dans la zone IA ;
b) l'onde de désorption du composant j dans la zone IIA ;
c) l'onde d'adsorption du composant j+1 dans la zone IIIA ;
d) l'onde d'adsorption du composant j dans la zone IVA ;
e) l'onde de désorption du composant j dans la zone IB ;
f) l'onde de désorption du composant j-1 dans la zone IIB ;
g) l'onde d'adsorption du composant j dans la zone IIIB ; et
h) l'onde d'adsorption du composant 1 dans la zone IVB.

**34.** Procédé selon la revendication 28, dans lequel le SMB comprend un anneau à cinq zones A et un anneau à quatre zones B, le mélange comprend les composants numérotés 1 ... j ... N, dans l'ordre d'une affinité croissante pour la phase stationnaire, le composant purifié j est souhaité, et les équations adoptent des conditions d'ondes stationnaires dans les premier et second anneaux pour :

a) l'onde de désorption du composant N dans la zone IA ;
b) l'onde de désorption du composant j dans la zone IIA ;
c) l'onde de désorption du composant j-1 dans la zone IIIA ;
d) l'onde d'adsorption du composant j dans la zone IVA ;

e) l'onde d'adsorption du composant 1 dans la zone VA ;
f) l'onde de désorption du composant N dans la zone IB ;
g) l'onde de désorption du composant j dans la zone IIB ;
h) l'onde d'adsorption du composant j+1 dans la zone IIIB ; et
i) l'onde d'adsorption du composant j dans la zone IVB.

**35.** Procédé selon la revendication 28, dans lequel le SMB comprend un anneau à cinq zones A et un anneau à quatre zones B, le mélange comprend les composants numérotés 1 ... j ... N, dans l'ordre d'une affinité croissante pour la phase stationnaire, le composant purifié j est souhaité, et les équations adoptent des conditions d'ondes stationnaires dans les premier et second anneaux pour :

a) l'onde de désorption du composant N dans la zone IA ;
b) l'onde de désorption du composant j dans la zone IIA ;
c) l'onde d'adsorption du composant j+1 dans la zone IIIA ;
d) l'onde d'adsorption du composant j dans la zone IVA ;
e) l'onde d'adsorption du composant i dans la zone VA ;
f) l'onde de désorption du composant j dans la zone IB ;
g) l'onde de désorption du composant j-1 dans la zone IIB ;
h) l'onde d'adsorption du composant j dans la zone IIIB ; et
i) l'onde d'adsorption du composant 1 dans la zone IVB.

**36.** Procédé selon la revendication 28, dans lequel le mélange est binaire.

**37.** Procédé selon la revendication 28, dans lequel le mélange est multicomposant.

**38.** Procédé selon la revendication 28, dans lequel les équations définissent le taux minimal d'utilisation de désorbant pour un taux donné d'alimentation.

**39.** Procédé selon la revendication 28, dans lequel le premier ensemble de paramètres de conception ou de réalisation et de fonctionnement est suffisant pour déterminer la chute de pression maximale admissible à travers les colonnes du SMB, et les équations sont résolues sur la base de la vitesse de phase mobile maximale admissible dans une ou plusieurs des zones.

**40.** Procédé selon la revendication 28, dans lequel les équations sont résolues sur la base d'une vitesse de phase mobile maximale admissible dans la zone I.

**41.** Procédé selon la revendication 28, dans lequel la séparation est gênée par des résistances au transfert de masse non négligeables et les équations lient:

a) la longueur de la zone ;
b) le débit d'alimentation ;
c) le débit de désorbant ;
d) les débits de zone ;
e) la vitesse de mouvement de l'orifice ;
f) la pureté et le rendement du produit ;
g) les résistances au transfert de masse ; et
h) les taux de rétention du composant.

**42.** Procédé d'optimisation d'un SMB pour purifier de l'insuline, dans lequel le système affiche des isothermes linéaires, comprenant les étapes consistant à :

a) fournir des équations qui lient les paramètres de conception ou de réalisation, de fonctionnement et d'ingénierie intrinsèques dans des conditions d'ondes stationnaires d'un SMB qui affiche des isothermes linéaires ;
b) prescrire un premier ensemble de paramètres de conception ou de réalisation et de fonctionnement suffisant pour déterminer les paramètres d'ingénierie intrinsèques et pour résoudre les équations destinées à séparer un mélange binaire ou multicomposant dans un premier SMB ;
c) prescrire un deuxième ensemble de paramètres de conception ou de réalisation et de fonctionnement suffisant pour déterminer les paramètres d'ingénierie intrinsèques et pour résoudre les équations destinées à séparer le mélange binaire ou multicomposant dans le deuxième SMB ; et

d) évaluer et comparer le rendement économique des premier et deuxième SMB.

**43.** Procédé selon la revendication 42, dans lequel le SMB comprend un premier anneau A, le mélange comprend les composants numérotés 1 ... j ... N, dans l'ordre d'une affinité croissante pour la phase stationnaire, une fente ou séparation est souhaitée entre les composants j et j+1 et les équations adoptent des conditions d'ondes stationnaires dans le premier anneau pour :

l'onde de désorption du composant N dans la zone IA ;

a) l'onde de désorption du composant j+1 dans la zone IIA ;
b) l'onde d'adsorption du composant j dans la zone IIIA ;
c) l'onde d'adsorption du composant 1 dans la zone IVA.

**44.** Procédé selon la revendication 42, dans lequel le SMB comprend deux anneaux à quatre zones A et B, le mélange comprend les composants numérotés 1 ... j ... N, dans l'ordre d'une affinité croissante pour la phase stationnaire, le composant purifié j est souhaité, et les équations adoptent des conditions d'ondes stationnaires dans les premier et second anneaux pour :

a) l'onde de désorption du composant N dans la zone IA ;
b) l'onde de désorption du composant j-1 dans la zone IIA ;
c) l'onde d'adsorption du composant j dans la zone IIIA ;
d) l'onde d'adsorption du composant 1 dans la zone IVA ;
e) l'onde de désorption du composant N dans la zone IB ;
f) l'onde de désorption du composant j dans la zone IIB ;
g) l'onde d'adsorption du composant j+1 dans la zone IIIB ; et
h) l'onde d'adsorption du composant j dans la zone IVB.

**45.** Procédé selon la revendication 42, dans lequel le SMB comprend deux anneaux à quatre zones A et B, le mélange comprend les composants numérotés 1 ... j ... N, dans l'ordre d'une affinité croissante pour la phase stationnaire, le composant purifié j est souhaité, et les équations adoptent des conditions d'ondes stationnaires dans les premier et second anneaux pour :

a) l'onde de désorption du composant N dans la zone IA ;
b) l'onde de désorption du composant j dans la zone IIA ;
c) l'onde d'adsorption du composant j+1 dans la zone IIIA ;
d) l'onde d'adsorption du composant 1 dans la zone IVA ;
e) l'onde de désorption du composant j dans la zone IB ;
f) l'onde de désorption du composant j-1 dans la zone IIB ;
g) l'onde d'adsorption du composant j dans la zone IIIB ; et
h) l'onde d'adsorption du composant 1 dans la zone IVB.

**46.** Procédé selon la revendication 42, dans lequel le SMB comprend deux anneaux à quatre zones A et B, le mélange comprend les composants numérotés 1 ... j ... N, dans l'ordre d'une affinité croissante pour la phase stationnaire, le composant purifié j est souhaité, et les équations adoptent des conditions d'ondes stationnaires dans les premier et second anneaux pour :

a) l'onde de désorption du composant j dans la zone IA ;
b) l'onde de désorption du composant j-1 dans la zone IIA ;
c) l'onde d'adsorption du composant j dans la zone IIIA ;
d) l'onde d'adsorption du composant 1 dans la zone IVA ;
e) l'onde de désorption du composant N dans la zone IB ;
f) l'onde de désorption du composant j dans la zone IIB ;
g) l'onde d'adsorption du composant j+1 dans la zone IIIB ; et
h) l'onde d'adsorption du composant j dans la zone IVB.

**47.** Procédé selon la revendication 42, dans lequel le SMB comprend deux anneaux à quatre zones A et B, le mélange comprend les composants numérotés 1 ... j ... N, dans l'ordre d'une affinité croissante pour la phase stationnaire, le composant purifié j est souhaité, et les équations adoptent des conditions d'ondes stationnaires dans les premier et second anneaux pour :

a) l'onde de désorption du composant N dans la zone IA ;
b) l'onde de désorption du composant j dans la zone IIA ;
c) l'onde d'adsorption du composant j+1 dans la zone IIIA ;
d) l'onde d'adsorption du composant j dans la zone IVA ;
e) l'onde de désorption du composant j dans la zone IB ;
f) l'onde de désorption du composant j-1 dans la zone IIB ;
g) l'onde d'adsorption du composant j dans la zone IIIB ; et
h) l'onde d'adsorption du composant 1 dans la zone IVB.

**48.** Procédé selon la revendication 42, dans lequel le SMB comprend un anneau à cinq zones A et un anneau à quatre zones B, le mélange comprend les composants numérotés 1 ... j ... N, dans l'ordre d'une affinité croissante pour la phase stationnaire, le composant purifié j est souhaité, et les équations adoptent des conditions d'ondes stationnaires dans les premier et second anneaux pour :

a) l'onde de désorption du composant N dans la zone IA ;
b) l'onde de désorption du composant j dans la zone IIA ;
c) l'onde de désorption du composant j-1 dans la zone IIIA ;
d) l'onde d'adsorption du composant j dans la zone IVA ;
e) l'onde d'adsorption du composant 1 dans la zone VA ;
f) l'onde de désorption du composant N dans la zone IB;
g) l'onde de désorption du composant j dans la zone IIB ;
h) l'onde d'adsorption du composant j+1 dans la zone IIIB ; et
i) l'onde d'adsorption du composant j dans la zone IVB.

**49.** Procédé selon la revendication 42, dans lequel le SMB comprend un anneau à cinq zones A et un anneau à quatre zones B, le mélange comprend les composants numérotés 1 ... j ... N, dans l'ordre d'une affinité croissante pour la phase stationnaire, le composant purifié j est souhaité, et les équations adoptent des conditions d'ondes stationnaires dans les premier et second anneaux pour :

a) l'onde de désorption du composant N dans la zone IA ;
b) l'onde de désorption du composant j dans la zone IIA ;
c) l'onde d'adsorption du composant j+1 dans la zone IIIA ;
d) l'onde d'adsorption du composant j dans la zone IVA ;
e) l'onde d'adsorption du composant i dans la zone VA ;
f) l'onde de désorption du composant j dans la zone IB ;
g) l'onde de désorption du composant j-1 dans la zone IIB;
h) l'onde d'adsorption du composant j dans la zone IIIB; et
i) l'onde d'adsorption du composant 1 dans la zone IVB.

**50.** Procédé selon la revendication 42, dans lequel les équations définissent la vitesse d'alimentation de désorbant minimale pour un débit d'alimentation donné.

**51.** Procédé selon la revendication 42, dans lequel les premier et deuxième ensembles de paramètres de conception ou de réalisation et de fonctionnement sont suffisants pour déterminer la chute de pression maximale admissible à travers les colonnes des premier et deuxième SMB, et les équations sont résolues sur la base de la vitesse de phase mobile maximale dans une ou plusieurs des zones.

**52.** Procédé selon la revendication 42, dans lequel les équations sont résolues sur la base d'une vitesse de phase mobile maximale dans la zone I.

**53.** Procédé selon la revendication 42, dans lequel le rendement économique est basé sur la consommation de désorbant.

**54.** Procédé selon la revendication 42, dans lequel le rendement économique est basé sur le débit ou la quantité passée.

**55.** Procédé selon la revendication 42, comprenant en outre les étapes consistant à :

a) prescrire un troisième ensemble de paramètres de conception ou de réalisation et de fonctionnement suffisant pour déterminer les paramètres d'ingénierie intrinsèques et pour résoudre les équations pour un troisième SMB ; et
b) évaluer et comparer le rendement économique du troisième SMB.

**56.** Procédé selon la revendication 42, dans lequel l'attribution des colonnes varie entre les premier et deuxième ensembles de paramètres de conception ou de réalisation et de fonctionnement.

**57.** Procédé selon la revendication 42, dans lequel le nombre de colonnes varie entre les premier et deuxième ensembles de paramètres de conception ou de réalisation et de fonctionnement.

**58.** Procédé selon la revendication 42, dans lequel la longueur des colonnes varie entre les premier et deuxième ensembles de paramètres de conception ou de réalisation et de fonctionnement.

**59.** Procédé de conception ou de réalisation et de mise en fonctionnement d'un SMB dans des conditions d'ondes stationnaires pour séparer de l'insuline d'un composant ou d'une fraction rapide et d'un composant ou d'une fraction lent, dans lequel le SMB comprend des premier et second anneaux, comprenant les étapes consistant à :

a) fournir des règles de division ou de séparation qui assurent :

i) lorsque seul le composant ou fraction souhaité est purifié, de permettre au composant ou fraction rapide ou lent de se distribuer dans le premier anneau ;
ii) lorsque le composant et/ou fraction rapide et/ou lent sont purifiés, d'effectuer la division ou séparation la plus facile dans le premier anneau ;

b) choisir une stratégie de division ou de séparation selon qu'un ou plusieurs des composants et/ou fractions rapides ou lents est purifié ; et
c) faire fonctionner le SMB en utilisant la stratégie de division choisie.

**60.** Procédé selon la revendication 59, dans lequel seul le composant ou fraction souhaité est purifié.

**61.** Procédé selon la revendication 59, dans lequel le composant ou fraction rapide et/ou lent est purifié.

**62.** Procédé selon la revendication 59, dans lequel des résistances au transfert de masse non négligeable sont observées.

**63.** Procédé selon la revendication 59, dans lequel des résistances au transfert de masse non négligeables ne sont pas observées.

**64.** Procédé de conception ou de réalisation d'un SMB destiné à séparer de l'insuline d'une première fraction ou d'un premier composant, dans un mélange multicomposant, comprenant les étapes consistant à :

a) fournir des équations qui lient les paramètres de conception ou de réalisation, de fonctionnement et d'ingénierie intrinsèques dans des conditions d'ondes stationnaires d'un SMB qui affiche des isothermes linéaires,
b) prescrire un premier ensemble de paramètres de conception ou de réalisation et de fonctionnement suffisant pour déterminer les paramètres d'ingénierie intrinsèques et pour résoudre les équations pour la résolution du mélange multicomposant dans un premier SMB ; et
c) résoudre les équations ;
d) dans lequel les équations définissent le taux minimal d'utilisation de désorbant pour un taux donné d'alimentation.

Figure 1. Schematic Diagram of a Four-Zone Simulated Moving Bed (SMB).

Figure 2. Triangle Theory of Ideal System with Linear Isotherm.

Figure 3. Nonideal System with Linear Isotherm: Comparison of Triangle Theory and Standing Wave Analysis for a Linear System

**Intrinsic Engineering Parameters**

- Column voidage
- Particle porosity
- Isotherms
- Mass transfer parameters

**Selection of System**

- Desorbent type (mobile phase)
- Adsorbent type (stationary phase)
- Particle size
- Column dimension
- No. of columns
- Zone lengths
- Tandem or parallel

**Selection of Splitting Strategy**

**SMB Process Design**

**Selection of Operating Parameters**

- Maximum feed flow rate
- Desorbent, extract, and raffinate flow rates
- Zone flow rates
- Switching time

Figure 4. Parameters Involved in the SMB Process Design

Figure 5. Standing Waves in Binary Continuous Moving Bed Systems. Solute 1 is the fast moving solute, and solute 2 is the slow moving solute.

Figure 6. Standing Wave Approach for Separating an N-Component Mixture into Two Groups of Components Using a Four-Zone SMB. Angled arrows point to waves that are held standing within a given zone. (a) Ideal system; (b) Non-ideal system.

Figure 7. Strategies for Separating Components in Tandem SMB Units. Mass-transfer resistances are negligible. Dashed line: component 1; solid thin line: component 2; solid thick line: component 3. (a) Strategy S1: component 1 is separated from components 2 and 3 in the $1^{st}$ ring and component 2 is separated from component 3 in the $2^{nd}$ ring; (b) Strategy S2: component 3 is separated from components 1 and 2 in the $1^{st}$ ring and component 2 is separated from component 1 in the $2^{nd}$ ring; (c) Strategy S3: component 3 is distributed in the $1^{st}$ ring and component 2 is separated from component 3 in the $2^{nd}$ ring; (d) Strategy S4: component 1 is distributed in the $1^{st}$ ring and component 2 is separated from component 1 in the $2^{nd}$ ring;

Figure 7 (cont'd). Strategies for Separating Components in Tandem SMB Units. Mass-transfer resistances are negligible. Dashed line: component 1; solid thin line: component 2; solid thick line: component 3. (e) Strategy S5: component 1 is separated from components 2 and 3 in the 1st ring (5-zone) and component 2 is separated from component 3 in the 2nd ring (4-zone); (f) Strategy S6: component 3 is separated from components 1 and 2 in the 1st ring (5-zone) and component 2 is separated from component 1 in the 2nd ring (4-zone).

Figure 8. Cost Analysis for Simulated Moving Bed Using the Standing Wave Design

Figure 9. Experimental Data and Simulation Results of the Pulse Tests with a Lab-Scale Column. (a) Blue dextran; (b) NaCl

Figure 9 (cont'd). Experimental Data and Simulation Results of the Pulse Tests with a Lab-Scale Column. (c) BHI; (d) ZnCl₂.

Figure 10. Experimental Data and Simulation Results of the BHI Saturation and Elution Tests with a Lab-Scale Column. Symbols are experimental data and lines are simulations. Flow rate at (a) 8.1 mL/min; (b) 4.0 mL/min; (c) 2.0 mL/min.

Figure 11. Experimental Data and Simulation Results of the Multiple BHI Frontal Test with a Lab-Scale Column. (a) Multiple frontal data without column; (b) Multiple frontal data and simulation with column. Symbols are experimental data and lines are simulations; (c) Isothermal adsorption data estimated from the multiple frontal tests at 4 °C and fitting with an anti-Langmuir isotherm model.

Figure 12 Experimental Data and Simulation Results of the SMB Process Run 1 (Ring I). (a) Effluent history at the raffinate port; (b) Effluent history at the extract port; (c) Mid-cycle column profiles at the 45th cycle. Concentrations in the effluent histories are averaged over one switching period.

Figure 13 Data of BHI in the SMB Experiment Run 1 (Ring I) and Simulations with Different BHI $E_b$'s in Zone III. (a) Effluent history at the raffinate port; (b) Effluent history at the extract port; (c) Mid-cycle column profiles at the 45th cycle. Concentrations in the effluent histories are averaged over one switching period. C&W stands for the $E_b$ value estimated from the Chung and Wen correlation.

Figure 14 Experimental Data and Simulation Results of the SMB Process Run 2 (Ring I). (a) Effluent history at the raffinate port; (b) Effluent history at the extract port; (c) Mid-cycle column profiles at the 45th cycle. Concentrations in the effluent histories are averaged over one switching period.

Figure 15 Experimental Data and Simulation Results of the SMB Process Run 3 (Ring II). (a) Effluent history at the raffinate port; (b) Effluent history at the extract port; (c) Mid-cycle column profiles at the 61$^{st}$ step. Concentrations in the effluent histories are averaged over one switching period.

Figure 16 Approximate Column Profiles for the Estimation of Product Concentrations and Decay Factors. (a) Column profiles of typical components to be enriched in the raffinate port ($i \in \{1, ..., j\}$); (b) column profiles of typical components to be enriched in the extract port ($i \in \{j + 1, ..., N\}$); (c) mixing junction at the feed port showing how the mass balance is calculated for a component of the extract.